(19) **Europäisches Patentamt**

**European Patent Office**

**Office européen des brevets**

(11) **EP 1 713 196 A1**

(12) **EUROPEAN PATENT APPLICATION**
published in accordance with Art. 158(3) EPC

(43) Date of publication:
**18.10.2006 Bulletin 2006/42**

(51) Int Cl.:
*H04L 9/08* (2006.01)

(21) Application number: **05709516.8**

(22) Date of filing: **31.01.2005**

(86) International application number:
**PCT/JP2005/001359**

(87) International publication number:
**WO 2005/074185 (11.08.2005 Gazette 2005/32)**

(84) Designated Contracting States:
**DE FR GB**

(30) Priority: **02.02.2004 JP 2004025386**

(71) Applicant: **Matsushita Electric Industries Co., Ltd.**
**Kadoma-shi,**
**Osaka 571-8501 (JP)**

(72) Inventors:
- **NONAKA, Masao,**
  **Matsushita Elec.Industrial Co.Ltd**
  **Chuo-ku,**
  **Osaka Shi,**
  **Osaka540-6319 (JP)**
- **KUROIWA, Wataru**
  **Kanagawa 245-0013 (JP)**
- **OI, Shin'ichi**
  **Kanagawa 245-0002 (JP)**
- **YOSHIDA, Osamu**
  **Kanagawa 214-0014 (JP)**
- **FUTA Yuichi,**
  **Matsushita Elec.Industrial Co.Ltd**
  **Chuo-ku,**
  **Osaka Shi,**
  **Osaka540-6319 (JP)**

- **OHMORI Motoji ,**
  **Matsushita Elec.Industrial Co.Ltd**
  **Chuo-ku,**
  **Osaka Shi,**
  **Osaka540-6319 (JP)**
- **YAMADA, Shigeru,**
  **Matsushita Elec.Industrial Co.Ltd**
  **Chuo-ku,**
  **Osaka Shi,**
  **Osaka540-6319 (JP)**
- **INOUE, Tetsuya,**
  **Matsushita Elec.Industrial Co.Ltd**
  **Chuo-ku,**
  **Osaka Shi,**
  **Osaka540-6319 (JP)**
- **KUMAZAKI, Yoji,**
  **Matsushita Elec.Industrial Co.Ltd**
  **Chuo-ku,**
  **Osaka Shi,**
  **Osaka540-6319 (JP)**

(74) Representative: **Pautex Schneider, Nicole**
**Véronique et al**
**Novagraaf International SA**
**25, Avenue du Pailly**
**1220 Les Avanchets - Geneva (CH)**

(54) **KEY DISTRIBUTION SYSTEM**

(57) The cloning source of an authorized receiving device cannot be identified. A key distribution system 1 concerning the present invention includes: a communication channel 10; a key distribution center 11; a server 12; and receiving devices 13a to 13n. The key distribution center 11 distributes, to the server 12, the information necessary for distributing shared keys SK to the receiving devices 13a to 13n, and distributes the individual information group EMMG necessary for receiving the shared keys SK from the server 12. The server 12 generates the shared keys SK, generates the common information ECM based on the shared keys SK and the system secret variable group set SPGS, and distributes the common information ECM to the receiving devices 13a to 13n. The receiving devices 13a to 13n obtain the shared keys SK based on the individual information group EMMG and the common information ECM and outputs them to outside.

EP 1 713 196 A1

# FIG. 1

Key distribution system 1

Key distribution center 11

System secret variable group set SPGS

Individual information group EMMG

12 Server

Communication channel 10

Common information ECM

Receiving device

13n
13b
13a

Shared key SK

**Description**

**Technical Field**

The present invention relates to a key distribution system which distributes shared keys to receiving devices. It especially relates to a technique which enables tracing a receiving device which is a leakage source, in the case where the information which is assigned to the receiving device is leaked, by making the information which is necessary for obtaining a shared key unique to each receiving device.

**Background Art**

With the widespread use of high-speed communication channels represented by ADSL, optical fiber and the like, services for providing contents including digital music and video through such communication channels have been actively provided. With the prevalence of such services, a copyright protection method for preventing an unauthorized use of contents, represented by an unauthorized copying, has become necessary. As a copyright protection method for preventing an unauthorized use of contents, an encryption technique is generally used. In other words, with the encryption technique, digital contents are encrypted using a content encryption key and distributed through a communication channel, which enables only the receiving devices to decrypt the encrypted contents and to play back the original digital contents, the receiving devices with a content decryption key corresponding to the content encryption key.

By the way, the content decryption keys which have been provided to the receiving devices are generally held in secret. However, there is a possibility that an attacker will obtain a content decryption key which has been provided to all the receiving devices in common by analyzing a device in an unauthorized manner. Once the content decryption key provided to a certain receiving device has been leaked, the attacker may create an unauthorized receiving device which decrypts digital contents using the content decryption key based on which the leakage source cannot be traced and may use the contents in an unauthorized manner. As one of the countermeasures for preventing such an unauthorized use of contents, there is a conceivable system where the receiving device which is a leakage source can be traced by providing an individual key to each receiving device. As an example method for preventing an unauthorized use of contents in broadcasting station style content distribution where the same data is sent to all the receiving devices, there is a key distribution system described in the following Non-patent Reference 1.

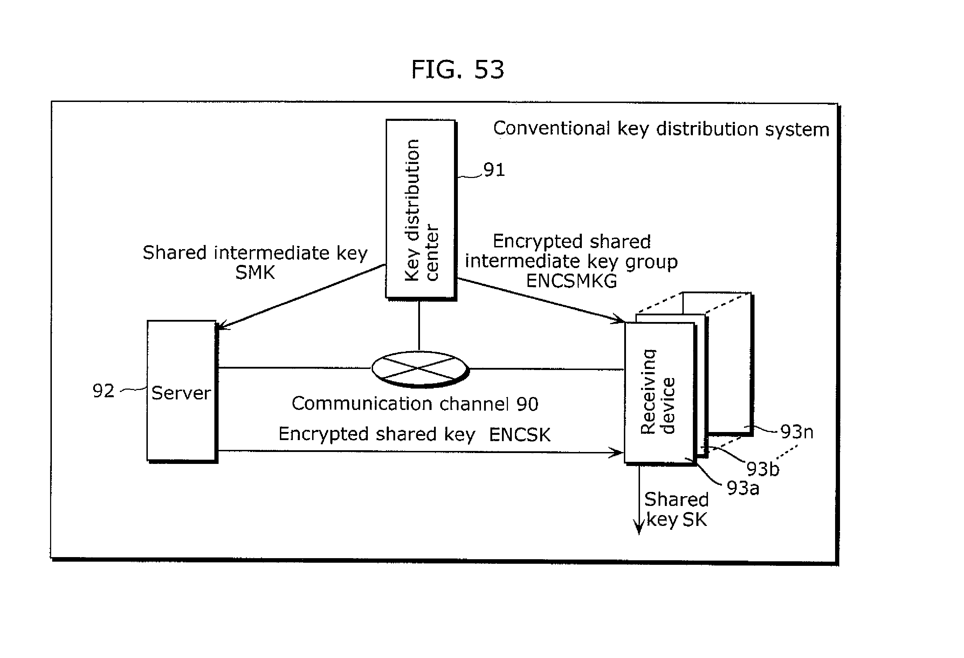

FIG. 53 shows a conventional key distribution system described in the Non-patent Reference 1. In FIG. 53, a communication channel 90 is a communication channel which connects the key distribution center 91, the server 92 and receiving devices 93a to 93n which will be described later, and is realized by means of a network such as the Internet and a broadcasting network. Also, each pair of the key distribution center 91 and the respective one of receiving devices 93a to 93n previously shares the corresponding one of the individual keys IKa to IKn. For example, it is assumed that the key distribution center 91 and the receiving device 93a previously share the individual key IKa, the key distribution center 91 and the receiving device 93b previously share the individual key IKb, and the key distribution center 91 and the receiving device 93n previously share the individual key IKn.

First, here will be described the method where all the respective receiving devices 93a to 93n have shared intermediate keys SMK with a same value. The key distribution center 91 generates shared intermediate keys SMK and sends the shared intermediate keys SMK to the server 92. Next, the key distribution center 91 encrypts the shared intermediate keys SMK based on the individual keys IKa, IKb, ..., IKn which have been previously shared with the respective receiving devices 93a to 93n, and distributes encrypted shared intermediate key groups with a same value to the receiving devices 93a to 93n, the group being ENCSMKG=Enc(IKa, SMK)||Enc(IKb, SMK)||... Enc(IKn, SMK) which is the value obtained by combining the encrypted sentences of Enc(IKa, SMK), Enc(IKb, SMK), ..., and Enc(IKn, SMK) with each other. Here, "||" is a connective, and Enc(K, P) indicates an encrypted sentence obtained at the time when a plane sentence P is encrypted using an encryption key K. Note that in the Non-patent Reference 1, the encrypted shared intermediate key group ENCSMKG is referred to as individual information (EMM), the individual keys IKa to IKn are referred to as master key (Km), and the shared intermediate key SMK is referred to as work key (Kw) respectively. Each of the receiving devices 93a to 93n which have received the encrypted shared intermediate key group ENCSMKG extracts the encrypted sentence corresponding to the local individual key from among the encrypted shared intermediate key group ENCSMKG, decrypts the encrypted sentence based on the individual key and obtains the shared intermediate key SMK. In this way, all the receiving devices 93a to 93n can have the shared intermediate keys SMK with a same value.

Next, the method where all the respective receiving devices 93a to 93n have shared keys SK which are used at the time of decrypting contents or the like will be described. The server 92 generates shared keys SK, encrypts the shared keys SK based on the shared intermediate keys SMK which are owned by the receiving devices 93a to 93n, and distributes the encrypted sentences Enc(SMK, SK) as encrypted shared keys ENCSK to the receiving devices 93a to 93n. The receiving devices 93a to 93n which have received the encrypted shared keys ENCSK decrypt the encrypted shared keys ENCSK based on the shared intermediate keys SMK and obtain shared keys SK respectively. In this way, all the receiving devices 93a to 93n can have the shared keys SK. Note that, in the Non-patent Reference 1, the shared key SK is referred to as scramble key (Ks), and the encrypted shared key ENCSK is referred to as common information (ECM) respectively. Note that it is possible to update to new shared keys SK by means that the server 92 generates encrypted shared keys ENCSK based on the new shared keys SK and distributes the encrypted shared keys ENCSK to the receiving devices 93a to 93n.

Note that the key distribution center 91 can also disable the receiving device which has a specific individual key in order to prevent the receiving device from obtaining the shared keys SK. Here, the case of disabling the receiving device which has the individual key of the receiving device 93a will be described. First, shared intermediate keys SMK are newly generated, and the shared intermediate keys SMK are sent to the server 92. After that, the shared intermediate keys SMK are encrypted using all the respective individual keys IKb to IKn excluding the individual key IKa which is previously shared with the receiving device 93a, and distributes encrypted shared intermediate key groups with a same value to the receiving devices 93a to 93n, the value being ENCSMKG=Enc(IKb, SMK)|| ... Enc(IKn, SMK) which is the value obtained by combining the encrypted sentences of Enc(IKb, SMK), ..., and Enc(IKn, SMK) with each other. In this way, the receiving devices 93b to 93n excluding the receiving device 93a can obtain the shared keys SK because they can obtain the shared intermediate keys SMK, but the receiving device 93a cannot obtain the shared keys SK because it cannot obtain the shared intermediate keys SMK. In this way, the key distribution center 91 can disable the receiving device. In the case where the receiving devices 93b to 93n, excluding the receiving device 93a, are disabled, it should be noted that the same operation as the one in the case of the receiving device 93a is executed, however there is a difference that another individual key is used at the time of encrypting the shared intermediate key SMK.

With the system like this, it is possible to trace the receiving device which is a leakage source based on the individual key which has been embedded in the receiving device, even in the case where an attacker obtains the individual key which has been embedded in one of the receiving devices 93a to 93n in an unauthorized manner and creates a receiving device using the individual key, and thus it becomes possible to take a countermeasure such as disabling the target receiving device.

Non-patent Reference 1: "The Mechanism of Digital Broadcasting System", edited by The Institute of Image Information and Television Engineers, and published by Ohmsha-Press.
Non-patent Reference 2: "Gendai angouriron (Modern Cryptosystem), co-written by Shinichi Ikeno and Kenji Koyama, edited by the Institute of Electronics, Information and Communication Engineers.
Non-patent Reference 3: THE ART OF COMPUTER PROGRAMMING Vol. 2 ~ SEMINUMERICAL ALGORITHMS, DONALD E. KNUTH, ISBN 0-201-03822-6.

**Disclosure of Invention**

Problem to be Solved

In addition to the earlier-described method, the following case is conceivable in the case where the individual key which has been embedded in one of the receiving devices 93a to 93n is obtained in an unauthorized manner: the case where an attacker obtains a shared intermediate key SMK using the individual key and creates an unauthorized receiving device in which the shared intermediate key SMK is embedded. The earlier-described configuration had a problem that the receiving device as the leakage source cannot be traced based on the key (shared intermediate key SMK) embedded in the unauthorized receiving device when facing such an attack because all the receiving devices 93a to 93n have the shared intermediate keys SMK with a same value.

The present invention has been conceived in order to solve the above-described problem. An object of the present invention is to provide a key distribution system where the receiving device which is a leakage source can be traced even in the case where an attacker creates an unauthorized receiving device in which an intermediate key is embedded.

Means for Solving the Problem

A key distribution system for distributing shared keys includes: a server which generates common information based on each of the shared keys and distributes the common information; and receiving devices each of which obtains the shared key based on the common information and an individual intermediate key group set. In the key distribution system, each of the receiving devices has been previously provided with at least one individual intermediate key group set which has been selected from among individual intermediate key group sets including at least two different types of individual intermediate key group sets. Each of the individual intermediate key group sets includes individual intermediate key groups, and each of the individual intermediate key groups is made up of one or more individual intermediate keys which have been generated based on one or more system secret variable groups. In the key distribution system, the server and the receiving devices can communicate via a communication channel. The server includes: a shared key storage unit which stores the shared keys; a system secret variable group storage unit which stores the system secret variable group sets which are made up of the previously provided system secret variable groups; each of common information generation units which generates the common information based on each shared key; a common information generation unit selection unit which selects one of the common information generation units; and a common information distribution unit which distributes the common information to the receiving devices simultaneously or at different times, each of the common information generation units which generates key update data based on the system secret variable group set and the shared key and generates, using a different common information generation method, common information including (a) a common information identifier and (b) the key update data, the common information identifier corresponding to the common information generation method. Each of the receiving devices include: a common information receiving unit which receives the common information; an individual intermediate key group storage unit which stores the individual intermediate key group sets each of which is made up of the individual intermediate key groups corresponding to each of the common information generation methods; shared key obtainment units which respectively correspond to the common information generation units; and a shared key obtainment unit selection unit which selects one of the shared key obtainment units. The shared key obtainment unit selection unit selects one of the shared key obtainment units based on the common information identifier included in the common information which has been received by the common information receiving unit. Each of the shared key obtainment units obtains the shared key, using the common information, based on the shared key obtainment method corresponding to the common information identifier and the individual intermediate key group.

In a first aspect of the present invention, in the key distribution system, each common information generation method includes a first common information generation method. Each shared key obtainment method includes a first shared key obtainment method which is paired with the first common information generation method. Each of the system secret variable group sets includes first system secret variable groups each of which is made up of one or more first system secret variables. Each of the individual intermediate key group sets includes first individual intermediate key groups each of which is made up of one or more first individual intermediate keys, the first individual intermediate keys are respectively generated based on the first system secret variable groups and one or more first individual intermediate key generation equations. The server has been previously provided with one or more time variable generation equations and one or more server shared intermediate key generation equation. Each of the receiving devices has been previously provided with one or more receiving device shared intermediate key generation equations. The first common information generation method includes: generating a random number group which is made up of one or more random numbers; generating a time variable group which is made up of one or more time variables based on the random number group, the first system secret variable groups and the time variable generation equations; generating shared intermediate keys based on the first system secret variable groups, the random number group and the server shared intermediate key generation equations; and generating encrypted shared keys by encrypting the shared keys based on the shared intermediate keys. In the first common information generation method, the key update data includes the time variable group and the encrypted shared keys. The first shared key obtainment method includes: generating the shared intermediate keys based on the time variable group, the first individual intermediate key group and the receiving device shared intermediate key generation equations; and obtaining the shared keys by decrypting the encrypted shared keys based on the shared intermediate keys.

In the first aspect of the present invention, in the key distribution system, the server has been previously provided with one of the individual intermediate key group sets. The server includes an individual intermediate key group set storage unit which stores the previously provided individual intermediate key group set. Each common information generation method includes a first common information generation method, and each shared key obtainment method includes a first shared key obtainment method which is paired with the first common information generation method. Each of the system secret variable group sets includes first system secret variable groups each of which is made up of one or more first system secret variables. Each of the individual intermediate key group sets includes first individual intermediate key groups each of which is made up of one or more first individual intermediate keys, the first individual intermediate keys are respectively generated based on the first system secret variable groups and one or more first individual intermediate key generation equations. The server has been previously provided with one or more time variable generation equations and one or more server shared intermediate key generation equation. Each of the receiving devices has been previously provided with one or more receiving device shared intermediate key generation equations. The first common information generation method includes: generating a random number group which is made up of one or more random numbers; generating a time variable group which is made up of one or more time variables based on the random number group, the first system secret variable groups and the time variable generation equations; generating shared intermediate keys based on the first system secret variable groups, the random number group and the server shared intermediate key generation equations; and generating encrypted shared keys by encrypting the shared keys based on the shared intermediate keys. In the first common information generation method, the key update data includes the time variable group and the encrypted shared keys. The first shared key obtainment method includes: generating the shared intermediate keys based on the time variable group, the first individual intermediate key group and the receiving device shared intermediate key generation equations; and obtaining the shared keys by decrypting the encrypted shared keys based on the shared intermediate keys.

In the first aspect of the present invention, in the key distribution system, each common information generation method includes a second common information generation method, and each shared key obtainment method includes a second shared key obtainment method which is paired with the second common information generation method. Each of the system secret variable group sets includes a second system secret key group which is made up of second system secret keys, and each of the individual intermediate key group sets includes second individual intermediate key groups each of which is made up of one or more of the second system secret keys. The second common information generation method includes: generating encrypted shared keys by encrypting the shared keys based on one or more of the second system secret keys which are included in the second system secret key groups; and generating an encrypted shared key group which is made up of the encrypted shared keys combined with each other. In the second common information generation method of the key distribution system, the key update data includes the encrypted shared key group. The second shared key obtainment method includes: selecting one of the encrypted shared keys which corresponds to any of the second system secret keys included in the second individual intermediate key group, from among the encrypted shared key group included in the key update data; and obtaining the shared key by decrypting the selected encrypted shared key based on the second system secret key.

In the forth aspect of the present invention, in the key distribution system, the individual intermediate key group set includes a second individual intermediate key group which is made up of one of the second system secret keys. The second common information generation method includes: generating encrypted shared keys by encrypting the shared keys based on the second system secret keys which are included in the second system secret key group; and generating an encrypted shared key group which is made up of encrypted shared keys combined with each other.

In the first aspect of the present invention, the key distribution system, further includes a key distribution center which is connected with the respective receiving devices via the communication channel and distributes an individual information group. The key distribution center, in the key distribution system, includes: an output device information storage unit which stores one or more individual keys which have been previously provided to the receiving devices; individual information generation units which generates the individual information; and an individual information group distribution unit which distributes the individual information group including at least two types of sets of the individual information and an individual information identifier which corresponds to the individual information generation unit, to the receiving devices simultaneously or at different times. Each of the individual information generation units outputs the individual information identifier, the system secret variable group and the individual information based on the individual information generation method which is uniquely used by each of the individual information generation units. Each of the receiving devices includes: an individual key storage unit which stores the previously provided individual key; an individual information group receiving unit which receives the individual information group; and individual intermediate key group obtainment units which correspond to the individual information generation units. The individual information group receiving units output the individual information corresponding to the individual information identifiers to the respective individual intermediate key obtainment units based on the individual information identifiers included in the received individual information group. Each of the individual intermediate key obtainment units obtains the individual intermediate key group based on the individual information and the individual key using an individual intermediate key obtainment method corresponding to the individual information identifier.

In a sixth aspect of the present invention, in the key distribution system, each of the individual information generation units further generates the system secret variable group. The key distribution center includes a system secret variable group set sending unit which distributes, to the server, the system secret variable group set including two types of sets of the system secret variable group and the individual information identifier which corresponds to the individual information generation unit. The server includes a system secret variable group set receiving unit stores the distributed system secret variable group sets into the system secret variable group storage unit.

In the sixth aspect of the present invention, in the key distribution system, the key distribution center is connected to the server via the communication channel. The system secret variable group set sending unit distributes the system secret variable group set to the server via the communication channel. The system secret variable group set receiving unit receives the system secret variable group set from the key distribution center via the communication channel.

In the sixth aspect of the present invention, in the key distribution system, the system secret variable group set sending unit records the system secret variable group set on a portable medium, and the system secret variable group set receiving unit reads out the system secret variable group set recorded on the portable medium.

In a seventh aspect of the present invention, in the key distribution system, the key distribution center and the server are assumed to share a server key in advance. The system secret variable group set sending unit generates encrypted data by encrypting the system secret variable group set based on the server key and distribute the server key to the server. The system secret variable group set receiving unit obtains the system secret variable group set by decrypting the distributed encrypted data based on the server key.

In the sixth aspect of the present invention, in the key distribution system, each individual information generation method includes a first individual information generation method. Each individual intermediate key obtainment method includes a first individual intermediate key obtainment method which is paired with the first individual information generation method. The key distribution center includes a term information storage unit which stores one or more types of sets of a previously provided term key, a first system secret variable group, and a term identifier, the first system secret variable group and the term identifier corresponding to the term key. The individual key storage units of the receiving devices each stores one or more types of sets of a first encrypted individual intermediate key group and a term identifier, the encrypted first individual intermediate key group is generated by encrypting the first individual intermediate key group based on the term key, and the term identifier corresponding to the term key. The first individual information generation method includes: selecting a set of a term key, a first system secret variable group and a term identifier which are included in the term information storage unit; and generating encrypted term keys by encrypting the term keys based on each of the individual keys. The individual information group includes first individual information which is composed of an encrypted term key group and the term identifier, and the encrypted term key group is made up of the encrypted term keys combined with each other. The fist individual intermediate key group obtainment method includes: obtaining the term key by decrypting one of the encrypted term keys which are included in the first individual information; and selecting the first encrypted individual intermediate key group corresponding to the term identifier from among one or more of the first encrypted individual intermediate key groups included in the individual key storage unit; and obtaining the first individual intermediate key group by decrypting the encrypted first individual intermediate key group based on the term key.

In the sixth aspect of the present invention, in the key distribution system, each individual information generation method includes a second individual information generation method, and each individual intermediate key obtainment method includes a second individual intermediate key group obtainment method which is paired with the second individual information generation method. The second individual information generation method includes: selecting one of the second system secret keys for each of the individual keys; and generating second encrypted system secret keys by encrypting the selected second system secret key based on each of the individual keys. In the second individual information generation method of the key distribution system, the individual information group includes second individual information including a second encrypted system secret key group which is made up of the second encrypted system secret keys combined with each other. The second individual intermediate key group obtainment method includes: selecting one second encrypted system secret key corresponding to the individual key from among the second encrypted system secret keys included in the second individual information; and obtaining the second system secret key by decrypting the selected second encrypted system secret key based on the individual key. The second system secret key is considered as the second individual intermediate key group.

In a second aspect of the present invention, in the key distribution system, the individual intermediate key generation equation includes at least addition operation and multiplication operation.

In the second aspect of the present invention, in the key distribution system, the time variable generation equation includes at least addition operation and multiplication operation.

In the second aspect of the present invention, in the key distribution system, the server shared intermediate key generation equation includes at least addition operation and multiplication operation.

In the second aspect of the present invention, in the key distribution system, the receiving device shared intermediate key generation equation includes at least addition operation and multiplication operation.

In the forth aspect of the present invention, in the key distribution system, the second system secret key group is made up of ten second system secret keys.

The receiving device in a key distribution system of the present invention, includes a server which distributes shared keys and receiving devices which receive the shared keys. The receiving devices include: a common information receiving unit which receives the common information from outside; an individual intermediate key group storage unit which stores individual intermediate key group sets each of which is made up of individual intermediate key groups corresponding to each of the common information generation methods; shared key obtainment units which correspond to the common information generation methods; and a shared key obtainment unit selection unit which selects one of the shared key obtainment units. The shared key obtainment unit selection unit selects the shared key obtainment unit based on the common information identifier included in the common information which has been received by the common information receiving unit. The shared key obtainment unit obtains the shared key, using the common information, based on the shared key obtainment method corresponding to the common information identifier and the individual intermediate key group.

In an eighteenth aspect of the present invention, in the receiving device, each shared key obtainment method includes a first shared key obtainment method. The individual intermediate key group set includes an individual intermediate key group which is made up of one or more first individual intermediate keys. Each of the receiving devices has been provided with one or more receiving device shared intermediate key generation equations. The common information includes first common information which is made up of a time variable group and an encrypted shared key. The first shared key obtainment method includes: generating the shared intermediate keys based on the time variable group, the first individual intermediate key group and the receiving device shared intermediate key generation equations which are included in the first common information; and obtaining the shared keys by decrypting the encrypted shared keys based on the shared intermediate keys.

In the eighteenth aspect of the present invention, in the receiving device, each shared key obtainment method includes a second shared key obtainment method. The individual intermediate key group set includes a second individual intermediate key group which is made up of one or more of the second system secret keys. The common information includes second common information which is made up of an encrypted shared key group including one or more encrypted shared keys, and the encrypted shared keys is generated by encrypting the shared keys based on the one or more of the second system secret keys. The second shared key obtainment method includes: selecting one of the encrypted shared keys which corresponds to any of the second system secret keys included in the second individual intermediate key group from among the encrypted shared key group included in the second common information; and obtaining the shared key by decrypting the selected encrypted shared key based on the second system secret key.

In a twentieth aspect of the present invention, in the receiving device, the individual intermediate key group set includes a second individual intermediate key group which is made up of one of the second system secret keys.

In the eighteenth aspect of the present invention, in the receiving device, the key distribution system further includes a key distribution center which is connected with the receiving devices via the communication channel and distributes an individual information group. Each of the receiving devices includes: an individual key storage unit which stores the previously provided individual key; an individual information group receiving unit which receives the individual information group from outside; and individual intermediate key group obtainment units which correspond to the individual intermediate key obtainment methods. The individual information group receiving units output the individual information corresponding to the individual information identifiers included in the individual information group to the respective individual intermediate key obtainment units based on the individual information identifiers included in the received individual information group. Each of the individual intermediate key obtainment units obtains the individual intermediate key group based on the individual information and the individual key using an individual intermediate key obtainment method corresponding to the individual information identifier.

In an nineteenth aspect of the present invention, in the receiving device, each individual intermediate key obtainment method includes a first individual intermediate key group obtainment method. Each of the individual key storage units of the receiving devices stores one or more types of sets of a first encrypted individual intermediate key group and a term identifier, and the first encrypted individual intermediate key group is generated by encrypting the first individual intermediate key group based on a term key, and the term identifier corresponding to the term key. The individual information group includes first individual information which is made up of an encrypted term key group and the term identifier, the encrypted term key group including encrypted term keys generated by encrypting the term keys based on the respective individual keys. The first individual intermediate key group obtainment method includes: obtaining the term key by decrypting one of the encrypted term keys included in the first individual information; selecting one of the first encrypted individual intermediate key groups which corresponds to the term identifier from among one or more of the first encrypted individual intermediate key groups included in the individual key storage unit; and obtaining the first individual intermediate key group by decrypting the first encrypted individual intermediate key group based on the term key.

In the twentieth aspect of the present invention, in the receiving device, each individual intermediate key obtainment method includes a second individual intermediate key group obtainment method. The individual information group includes second individual information including a second encrypted system secret key group which is made up of second encrypted system secret keys generated by encrypting one of the second system secret keys based on the respective individual keys. The second individual intermediate key group obtainment method includes: selecting one second encrypted system secret key corresponding to the individual key from among the second encrypted system secret keys included in the second individual information; and obtaining the second system secret key by decrypting the selected second encrypted system secret key based on the individual key. The second system secret key is considered as the second individual intermediate key group.

In the nineteenth aspect of the present invention, in the receiving device, each of the receiving device shared intermediate key generation equations includes at least addition operation and multiplication operation.

A program, in the present invention, which causes a computer to execute processing of receiving shared keys, and the computer is connected with a server which distributes the shared keys via a communication channel. The processing includes: a reception step of receiving the common information from outside; a storage step of storing an individual intermediate key group set which is made up of individual intermediate key groups corresponding to the respective shared key obtainment methods; an obtainment step of obtaining the shared keys corresponding to the shared key obtainment methods; and a selection step of selecting one of the shared key obtainment units based on the common information identifiers included in the common information which has been received by the common information receiving unit. In the processing, the obtainment step includes the following: obtaining the shared keys, using the common information, based on the shared key obtainment method and the individual intermediate key group, the shared key obtainment method corresponding to the common information identifier.

In a twenty-sixth aspect of the present invention, in the program, each shared key obtainment method includes a first shared key obtainment method. The individual intermediate key group set includes a first individual intermediate key group which is made up of one or more first individual intermediate keys. Each of the programs has been previously provided with one or more receiving device shared intermediate key generation equations. The common information includes first common information which is made up of encrypted shared keys generated by encrypting the shared keys based on a time variable group and shared intermediate keys. The first shared key obtainment method includes: generating the shared intermediate keys based on the time variable group included in the first common information, the first individual intermediate key group and the receiving device shared intermediate key generation equations; and obtaining the shared keys by decrypting the encrypted shared keys based on the shared intermediate keys.

In the twenty-sixth aspect of the present invention, in the program, each shared key obtainment method includes a second shared key obtainment method. The individual intermediate key group set includes a second individual intermediate key group which is made up of one or more of the second system secret keys. The common information includes second common information including an encrypted shared key group which is made up of encrypted shared keys. The encrypted shared keys are generated by encrypting the shared keys based on one or more of the second system secret keys. The second shared key obtainment method includes: selecting one of the encrypted shared keys which corresponds to any of the second system secret keys included in the second individual intermediate key group from among the encrypted shared key group which is included in the second common information; and obtaining the shared key by decrypting the selected encrypted shared key based on the second system secret key.

In a twenty-eighth aspect of the present invention, in the program, the individual intermediate key group includes one of second individual intermediate key groups each of which is made up of one of the second system secret keys.

In a twenty-seventh aspect of the present invention, in the program, each of the receiving device shared intermediate key generation equations includes at least addition operation and multiplication operation.

The program in a twenty sixth aspect is recorded on a medium of the present invention.

A key distribution method of the present invention includes: a key distribution step of generating common information based on each of the shared keys and distributing the common information; and key reception steps of obtaining the shared keys based on the common information and an individual intermediate key group set. In the key reception steps of the key distribution method, at least one individual intermediate key group set has been previously provided. In the key distribution method, the individual intermediate key group set has been selected from among individual intermediate key group sets including at least two different types of individual intermediate key group sets. Each of the individual intermediate key group sets includes individual intermediate key groups, and each of the individual intermediate key groups is made up of one or more individual intermediate keys which have been generated based on one or more system secret variable groups. The key distribution step includes: a shared key storage step of storing the shared keys; a storage step of storing the system secret variable group sets which are made up of the previously provided system secret variable groups; generation steps of generating common information based on each shared key; a selection step of selecting one of the common information generation steps; and a distribution step of distributing the common information to the receiving devices simultaneously or at different times. The common information generation steps are generating, using different common information generation methods respectively, key update data based on the system secret variable group set and the shared key and generating common information including (a) common information identifiers and (b) the key update data, the common information identifiers respectively corresponding to the common information generation methods. The key reception steps include: a reception step of receiving the common information; a storage step of storing the individual intermediate key group sets each of which is made up of the individual intermediate key groups respectively corresponding to the common information generation methods; obtainment steps of obtaining shared keys, the steps respectively corresponding to the generation units which generate common information; and a selection step of selecting one of the shared key obtainment steps based on the common information identifiers included in the common information which has been received by the common information reception units. The obtainment steps include obtaining, the shared keys, using the common information based on (a) the shared key obtainment methods respectively corresponding to the common information identifiers and (b) the individual intermediate key group.

In a thirty-second aspect of the present invention, in the key distribution method, each common information generation method includes a first common information generation method, and each shared key obtainment method includes a first shared key obtainment method which is paired with the first common information generation method. Each of the system secret variable group sets includes first system secret variable groups each of which is made up of one or more first system secret variables. Each of the individual intermediate key group sets includes first individual intermediate key groups each of which is made up of one or more first individual intermediate keys, the first individual intermediate keys are respectively generated based on the first system secret variable groups and one or more first individual intermediate key generation equations. In the key distribution step, one or more time variable generation equations and one or more server shared intermediate key generation equations have been previously provided. In the reception step, one or more receiving device shared intermediate key generation equations have been previously provided. The first common information generation method includes: generating a random number group which is made up of one or more random numbers; generating a time variable group which is made up of one or more time variables based on the random number group, the first system secret variable groups and the time variable generation equations; generating shared intermediate keys based on the first system secret variable groups, the random number group and the server shared intermediate key generation equations; and generating encrypted shared keys by encrypting the shared keys based on the shared intermediate keys. In the first common information generation method of the key distribution method, the key update data includes the time variable group and the encrypted shared keys. The first shared key obtainment method includes: generating the shared intermediate keys based on the time variable group, the first individual intermediate key groups and the receiving device shared intermediate key generation equations; and obtaining the shared keys by decrypting the encrypted shared keys based on the shared intermediate keys.

In a thirty-third aspect of the present invention, in the key distribution step of the key distribution method, one of the individual intermediate key group sets has been previously provided, and the key reception step includes storing the previously provided individual intermediate key group set. Each common information generation method includes a first common information generation method, and each shared key obtainment method includes a first shared key obtainment method which is paired with the first common information generation method. Each of the system secret variable group sets includes first system secret variable groups each of which is made up of one or more first system secret variables. Each of the individual intermediate key group sets includes first individual intermediate key groups each of which is made up of one or more first individual intermediate keys, the first individual intermediate keys are respectively generated based on the first system secret variable groups and one or more first individual intermediate key generation equations. The server has been previously provided with one or more time variable generation equations and one or more server shared intermediate key generation equation. Each of the receiving devices has been previously provided with one or more receiving device shared intermediate key generation equations. The first common information generation method includes: generating a random number group which is made up of one or more random numbers; generating a time variable group which is made up of one or more time variables based on the random number group, the first system secret variable groups and the time variable generation equations; generating shared intermediate keys based on the first system secret variable groups, the random number group and the server shared intermediate key generation equations; and generating encrypted shared keys by encrypting the shared keys based on the shared intermediate keys. In the first common information generation method, the key update data includes the time variable group and the encrypted shared keys. The first shared key obtainment method includes: generating the shared intermediate keys based on the time variable group, the first individual intermediate key group and the receiving device shared intermediate key generation equations; and obtaining the shared keys by decrypting the encrypted shared keys based on the shared intermediate keys.

In the thirty-second aspect of the present invention, in the key distribution method, each common information generation method includes a second common information generation method, and each shared key obtainment method includes a second shared key obtainment method which is paired with the second common information generation method. Each of the system secret variable group sets includes a second system secret key group which is made up of second system secret keys. Each of the individual intermediate key group sets includes second individual intermediate key groups each of which is made up of one or more of the second system secret keys. The second common information generation method includes: generating encrypted shared keys by encrypting the shared keys based on one or more of the second system secret keys which are included in the second system secret key groups; and generating an encrypted shared key group which is made up of the encrypted shared keys combined with each other. In the second common information generation method of the key distribution system, the key update data includes the encrypted shared key group. The second shared key obtainment method includes: selecting one of the encrypted shared keys which corresponds to any of the second system secret keys included in the second individual intermediate key group, from among the encrypted shared key group included in the key update data; and obtaining the shared key by decrypting the selected encrypted shared key based on the second system secret key.

In a thirty-fifth aspect of the present invention, the key distribution method, the individual intermediate key group set includes a second individual intermediate key group which is made up of one of the second system secret keys.

Effect of Invention

The key distribution system of the present invention enables to trace the receiving device which is a leakage source by searching an intermediate key which has been embedded in an unauthorized receiving device, even in the case where an attacker obtains the individual key which has been embedded in the receiving device in an unauthorized manner and creates an unauthorized receiving device in which an intermediate key, which can be obtained based on the individual key, is embedded. This is because the intermediate key includes the information indicating the individual key based on which the intermediate key has been generated.

Also, since the intermediate key has been made to be composed of several individual intermediate keys, even if the individual information of one of the individual intermediate keys is forged, it becomes possible to specify the receiving device which is a leakage source using the rest of the individual intermediate keys. Therefore the traceability is increased resulting in the increase of the reliability.

The embodiments of the key distribution system concerning the present invention will be described below with reference to figures.

**Brief Description of Drawings**

(FIG. 1) A schematic diagram of the key distribution system 1 in a first embodiment of the present invention.

(FIG. 2) A diagram showing an example structure of the key distribution center 11 in the first embodiment of the present invention.

(FIG. 3) A diagram showing an example structure of the first individual information generation unit 112 in the first embodiment of the present invention.

(FIG. 4) A diagram showing an example structure of the term information storage unit 1122 in the first embodiment of the present invention.

(FIG. 5) A diagram showing an example of the first system secret variable group SPGI_1 in the first embodiment of the present invention.

(FIG. 6) A diagram showing an example of the first individual information EMMI in the first embodiment of the present invention.

(FIG. 7) A diagram showing an example structure of the receiving device information storage unit 113 in the first embodiment of the present invention.

(FIG. 8) A diagram showing an example structure of the second individual information generation unit 114 in the first embodiment of the present invention.

(FIG. 9) A diagram showing an example of the second system secret variable group SPGII in the first embodiment of the present invention.

(FIG. 10) A diagram showing an example of the second individual intermediate key group MKIIGa in the first embodiment of the present invention.

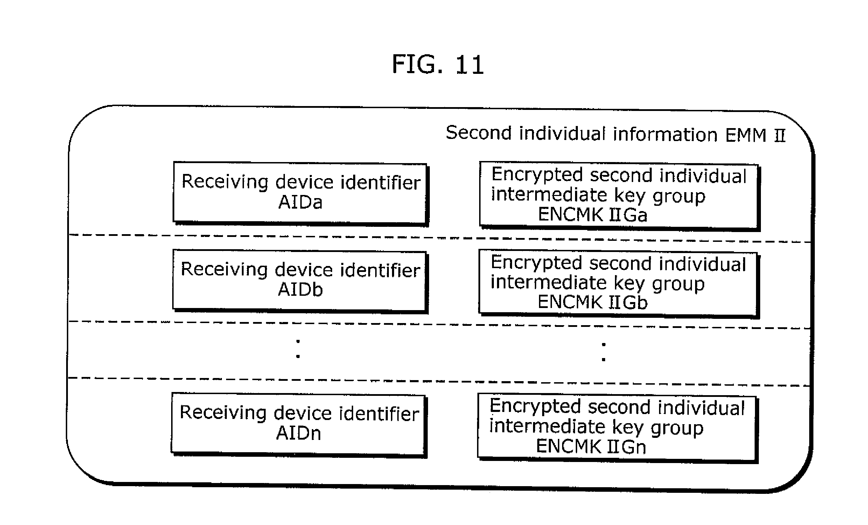

(FIG. 11) A diagram showing an example of the second individual information EMMII in the first embodiment of the present invention.

(FIG. 12) A diagram showing an example of the system secret variable group set SPGS in the first embodiment of the present invention.

(FIG. 13) A diagram showing an example of the individual information group EMMG in the first embodiment of the present invention.

(FIG. 14) A flow chart of the processing of how the key distribution center 11 distributes the key information in the first embodiment of the present invention.

(FIG. 15) A flow chart of the processing of how the key distribution center 11 generates the first system secret variable group SPGI and the first individual information EMMI in the first embodiment of the present invention.

(FIG. 16) A flow chart of the processing of how the key distribution center 11 generates the second system secret variable group SPGII and the second individual information EMMII in the first embodiment of the present invention.

(FIG. 17) A diagram showing an example structure of the server 12 in the first embodiment of the present invention.

(FIG. 18) A diagram showing an example structure of the system secret variable group storage unit 122 in the first embodiment of the present invention.

(FIG. 19) A diagram showing an example structure of the first common information generation unit 125 in the first embodiment of the present invention.

(FIG. 20) A diagram showing an example of the time variable group PRG in the first embodiment of the present invention.

(FIG. 21) A diagram showing an example of the first common information ECMI in the first embodiment of the present invention.

(FIG. 22) A diagram showing an example structure of the second common information generation unit 126 in the first embodiment of the present invention.

(FIG. 23) A diagram showing an example of the encrypted shared key group ENCSKG in the first embodiment of the present invention.

(FIG. 24) A diagram showing an example of the second common information ECMII in the first embodiment of the present invention.

(FIG. 25) A flow chart showing the processing of how the system secret variable group set SPGS of the server 12 is received in the first embodiment of the present invention.

(FIG. 26) A flow chart of the processing of how the shared keys SK of the server 12 are updated in the first embodiment of the present invention.

(FIG. 27) A diagram showing an example structure of the receiving device 13a in the first embodiment of the present invention.

(FIG. 28) A diagram showing an example structure of the individual key storage unit 1304a in the first embodiment of the present invention.

(FIG. 29) A diagram showing an example of the first encrypted individual intermediate key group set ENCMKIGS in the first embodiment of the present invention.

(FIG. 30) A diagram showing an example of the first individual intermediate key group MKIGa in the first embodiment of the present invention.

(FIG. 31) A diagram showing an example structure of the individual intermediate key storage unit 1305a in the first embodiment of the present invention.

(FIG. 32) A flow chart of how the key distribution center 11 of the receiving device 13a receives the individual information group EMMG in the first embodiment of the present invention.

(FIG. 33) A flow chart indicating the processing of how the common information ECM is received from the server 12 of the receiving device 13a in the first embodiment of the present invention.

(FIG. 34) A schematic diagram of the key distribution system 2 in a second embodiment of the present invention.

(FIG. 35) A diagram showing an example structure of the key distribution center 21 in the second embodiment of the present invention.

(FIG. 36) A diagram showing an example structure of the third individual information generation unit 212 in the second embodiment of the present invention.

(FIG. 37) A diagram showing an example of the third system secret variable group set SPGIIIS in the second embodiment of the present invention.

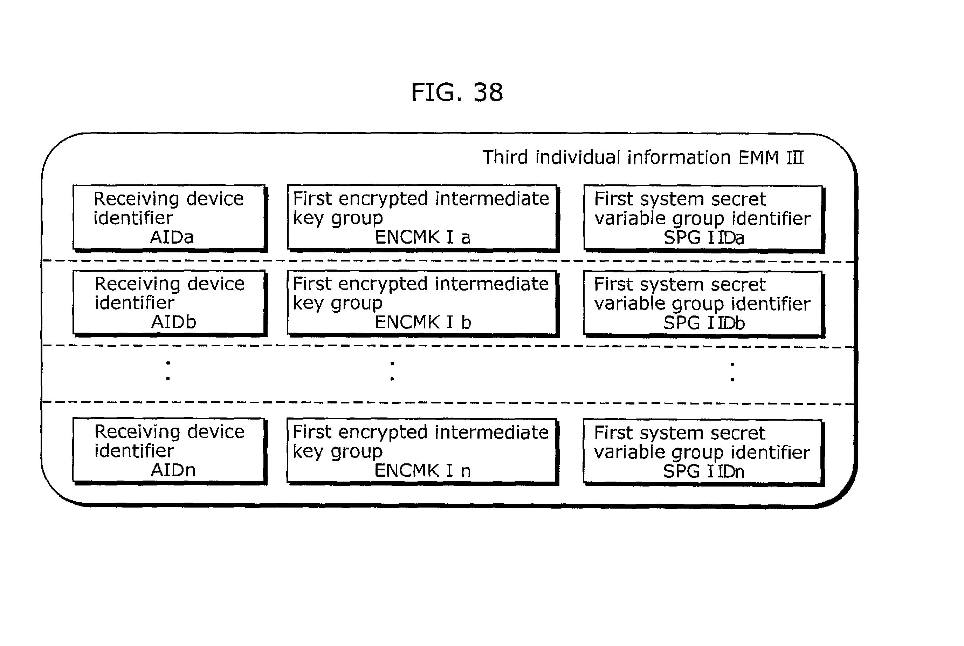

(FIG. 38) A diagram showing an example of the third individual information EMMIII in the second embodiment of the present invention.

(FIG. 39) A flow chart indicating the processing of how the key distribution center 21 distributes key information in the second embodiment of the present invention.

(FIG. 40) A flow chart indicating the processing of how the key distribution center 21 generates the third system secret variable group set SPGIIIS and the third individual information EMMIII in the second embodiment of the present invention.

(FIG. 41) A diagram showing an example structure of the server 22 in the second embodiment of the present invention.

(FIG. 42) A diagram showing an example structure of the system secret variable group storage unit 222 in the second embodiment of the present invention.

(FIG. 43) A diagram showing an example of the third common information ECMIII in the second embodiment of the present invention.

(FIG. 44) A flow chart of the processing of how the server 22 receives the third system secret variable group set SPGIIIS in the second embodiment of the present invention.

(FIG. 45) A flow chart indicating the processing of how the server 22 updates the shared keys SK in the second embodiment of the present invention.

(FIG. 46) A diagram showing an example structure of the receiving device 23a in the second embodiment of the present invention.

(FIG. 47) A diagram showing an example structure of the individual key storage unit 2304a in the second embodiment of the present invention.

(FIG. 48) A diagram showing an example structure of the individual intermediate key storage unit 2305a in the second embodiment of the present invention.

(FIG. 49) A flow chart indicating the processing of how the third individual information group EMMIII is received from the key distribution center 21 of the receiving device 23a in the second embodiment of the present invention.

(FIG. 50) A flow chart indicating the processing of how the third common information ECMIII is received from the server 22 of the receiving device 23a in the second embodiment of the present invention.

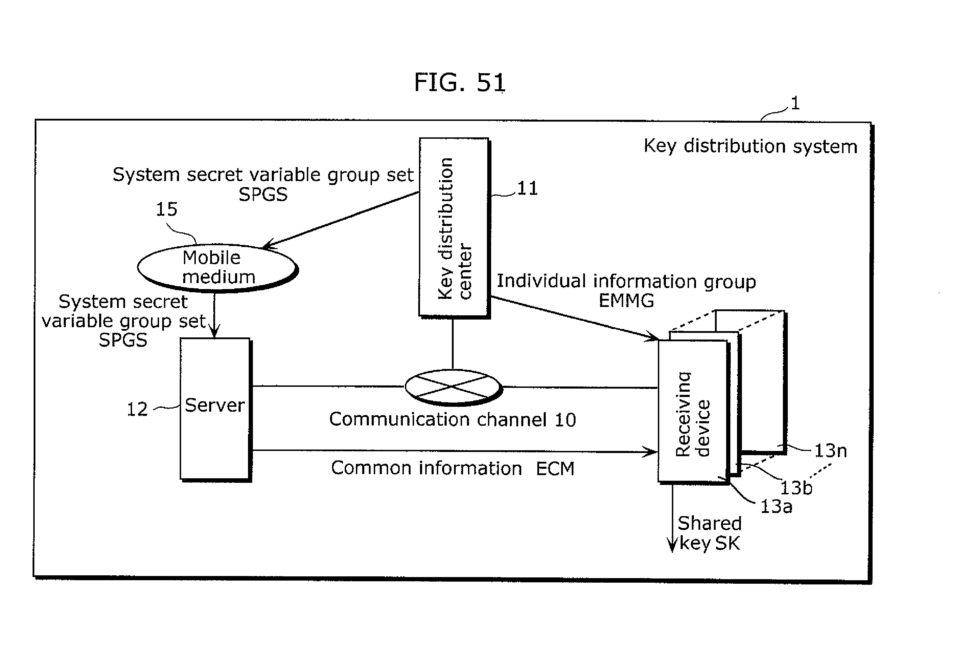

(FIG. 51) A variation of the key distribution system 1 in the first embodiment of the present invention.

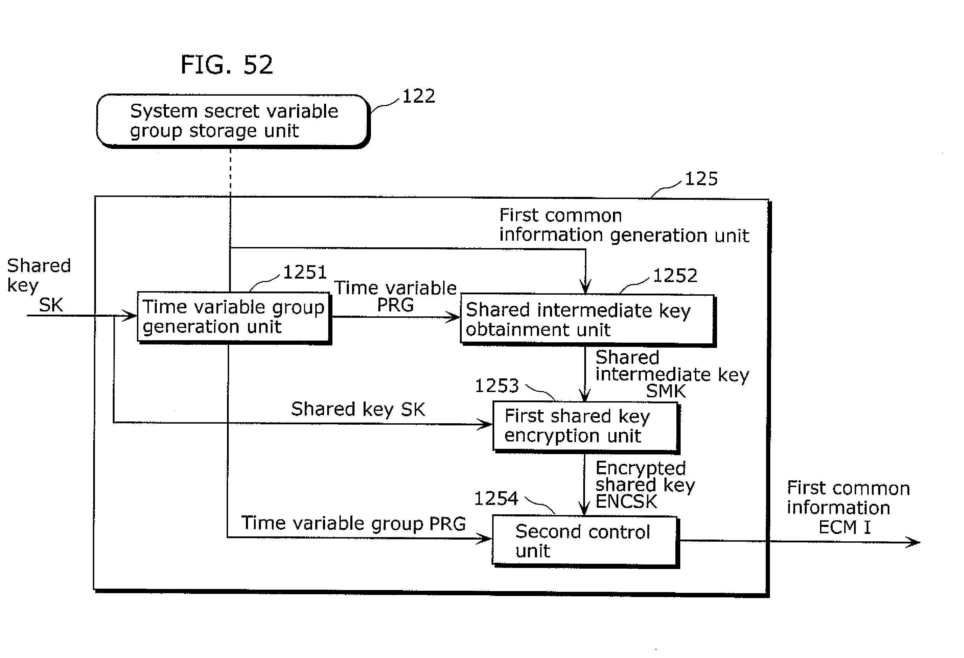

(FIG. 52) A variation of the first common information generation unit 125 in the first embodiment.

(FIG. 53) A schematic diagram of a conventional key distribution system.

Descriptions of Reference Numerals

10 Communication channel
11 and 21 Key distribution center
12 and 22 Server
13a to 13n and 23a to 23n Receiving device

111 and 211 First control unit
112 First individual information generation unit
212 Third individual information generation unit
1121 Term selection unit
2121 Third system secret variable group generation unit
1122 Term information storage unit
2122 First intermediate key group generation unit
1123 Term key encryption unit
113 Receiving device information storage unit
114 Second individual information generation unit
1141 Second system secret key generation unit
1142 Second individual intermediate key group encryption unit
115 System secret variable group set sending unit
215 Third system secret variable group set sending unit
116 Individual information group distribution unit
216 Third individual information distribution unit
121 and 221 System secret variable group set receiving unit
122 and 222 System secret variable group storage unit
123 Shared key generation unit
124 Common information generation unit selection unit
125 First common information generation unit
225 Third common information generation unit
1251 Time variable group generation unit
1252 Shared intermediate key obtainment unit
1253 First shared key encryption unit
1254 Second control unit
126 Second common information generation unit
1261 Second shared key encryption unit
1262 Third control unit
127 and 227 Common information distribution unit
1301 and 2301 Individual information group receiving unit
1302a First individual intermediate key group obtainment unit
2302a Third individual intermediate key group obtainment unit
1303a Second individual intermediate key group obtainment unit 1304a and 2304a Individual key storage unit
1305a and 2305a Individual intermediate key storage unit
1306 and 2306a Common information receiving unit
1307a Shared key obtainment unit selection unit
1308a First shared key obtainment unit
2308a Third shared key obtainment unit
1309a Second shared key obtainment unit
1310 Output unit


**Best Mode for Carrying Out the Invention**

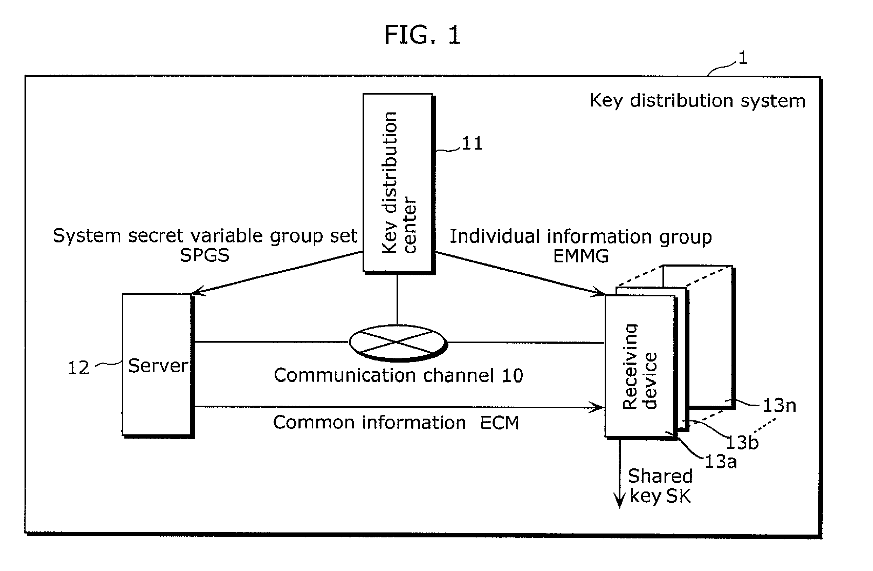

(First Embodiment)
The key distribution system 1 as an embodiment concerning the present invention will be described. First, the outline of this embodiment will be described with reference to FIG. 1.
In FIG. 1, the communication channel 10 is a communication channel with which the key distribution center 11, the server 12 and the receiving devices 13a to 13n which will be described later are connected, and is realized by means of a network such as the Internet and a broadcasting network. The key distribution center 11 distributes, to the server 12, the system variable group set SPGS which is the information necessary for distributing shared keys SK to receiving devices, and distributes, to the receiving devices 13a to 13n, the individual information group EMMG which is necessary for obtaining the shared keys SK. The server 12 distributes, to the receiving devices 13a to 13n, the common information ECM which has been generated based on the shared keys SK and the system secret variable group set SPGS. The receiving devices 13a to 13n obtain the shared keys SK based on the individual information group EMMG and the common information ECM and outputs the shared keys SK to outside. Here, it is assumed that each pair of the key distribution center 11 and the respective receiving devices 13a to 13n has been provided with an individual key which is previously shared by each pair. For example, it is assumed that the key distribution center 11 and the receiving device 13a previously share an individual key IKa, the key distribution center 11 and the receiving device 13b previously share an individual key IKb, ..., and the key distribution center 11 and the receiving device 13n previously share an individual key IKn.

Here, the operation of each component will be described in more detail. First, here will be described a method for distributing, to the respective receiving devices 13a to 13n, the first individual intermediate key groups MKIGa to MKIGn and the second individual intermediate key groups MKIIGa to MKIIGn both of which are respectively different from each other of a kind. First, the key distribution center 11 generates a system secret variable group set SPGS and sends the system secret variable group set SPGS to the server 12. Also, the key distribution center 11 generates an individual information group EMMG which is necessary for the receiving devices to obtain the first individual intermediate key groups and the second individual intermediate key groups, based on the first individual intermediate key groups MKIGa to MKGIGn, the second individual intermediate key groups MKIIGa to MKIIGn, and the individual keys Ika to Ikn, and then distributes, to the receiving devices 13a to 13n, the individual keys Ika to Ikn. The receiving device 13a which has received the individual information group EMMG obtains, using the individual key IKa which has been previously provided, the first individual intermediate key group MKIGa and the second individual intermediate key group MKIIGa which are associated with the receiving device 13a. Likewise, the receiving devices 13b to 13n excluding the receiving device 13a obtains, using the individual keys which have been held by the respective receiving devices, the first individual intermediate key groups and the second individual intermediate key groups which are associated with the respective receiving devices. In this way, the respective receiving devices 13a to 13n can hold the first individual intermediate key groups MKIGa to MKGIn and the second individual intermediate key groups MKIGa to MKIIGn which are respectively different.

Next, the operation of how the server 12 updates shared keys SK will be described. First, the server 12 generates one of the first common information ECMI and the second common information ECMII based on the system secret variable group set SPGS according to a previously provided condition, and distributes the generated one, to the receiving devices 13a to 13n, as common information ECM including a common information identifier for identifying one of the first common information ECMI and the second common information ECMII. The receiving devices 13a to 13n receive the common information ECM and determine which one of the first common information ECMI and the second common information ECMII is included in the common information ECM based on the common information identifier included in the common information ECM. In the case where the included one is the first common information ECMI, the server obtains shared keys SK using the first individual intermediate key group and the first common information ECMI. On the other hand, in the case of the second common information ECMII, the server obtains shared keys SK using the second individual intermediate key group and the second common information ECMII. In this way, the shared keys SK of the receiving devices 13a to 13n are updated.

Note that, in the key distribution system 1 which is this embodiment, it also become possible for the key distribution center 11 to disable the receiving device which has the specific individual key in order to prevent the receiving device from obtaining a shared key SK. This can be realized by not using the individual key which is held by the receiving device to be disabled so that the receiving device to be disabled cannot obtain the first individual intermediate key group and the second individual intermediate key group, in the case where the system secret variable group set SPGS, the first individual intermediate key group and the second individual intermediate key group are updated in the key distribution center 11.

The outline of this embodiment has been described above. Details of the key distribution system 1 which is an embodiment of the key distribution system of the present invention will be described below. The components of the system will be described in detail.

<Structure of Key Distribution System 1>

As shown in FIG. 1, the key distribution system 1 includes: a communication channel 10; a key distribution center 11; a server 12: and receiving devices 13a to 13n.

The key distribution center 11 distributes, to the server 12, a system secret variable group set SPGS which is the information necessary for distributing the shared keys SK to the receiving devices 13a to 13n, and distributes, to the receiving devices 13a to 13n, the individual information group EMMG which is necessary for receiving the shared keys SK from the server 12. The server 12 generates shared keys SK, generates common information ECM based on the shared keys SK and the system secret variable group set SPGS, and distributes the common information ECM to the receiving devices 13a to 13n. The receiving devices 13a to 13n obtain the shared keys SK based on the individual information group EMMG and the common information ECM, and output them to outside.

The components will be described below in detail. First, the structure of the communication channel 10 will be described, and consequently the structures and the operations of the key distribution center 11, the server 12 and the receiving devices 13a to 13n will be described with reference to figures.

<structure of Communication Channel 10>

The communication channel is a network such as the Internet, a telephone circuit, an exclusive line and a broadcasting network.

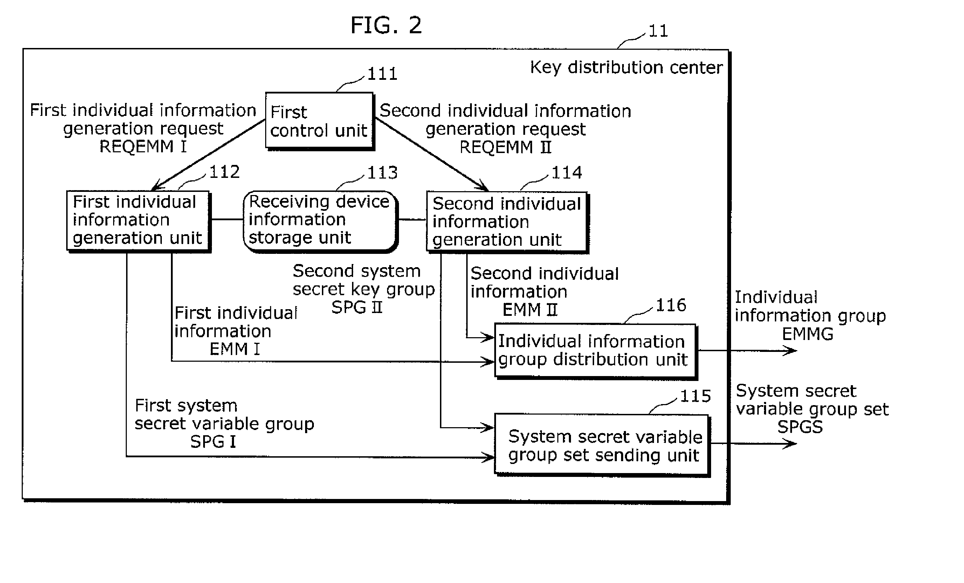

<Structure of Key Distribution Center 11>
As shown in FIG. 2, the key distribution center 11 includes: a first control unit 111; a first individual information generation unit 112; a receiving device information storage unit 113; a second individual information generation unit 114; a system secret variable group set sending unit 115; and an individual information group distribution unit 116.

(1) First Control unit 111
In the case where an individual information update condition which has been previously provided is satisfied, or in the case where the key distribution center 13 starts its operation, the first control unit 111 outputs the first individual information generation request REQEMMI to the first individual information generation unit 112, and outputs the second individual information generation request REQEMMII to the second individual information generation unit 114. Example individual information update conditions include "every a certain time period (example: everyday; and every year)" and "in the case where a signal has been received from outside.". In the case where the individual information update condition is "every a certain time period (example: everyday; and every year)", the counter can be updated by means that the first control unit 111 includes a counter. In the case where the individual information update condition is "in the case where a signal has been received from outside", the counter can be updated by means that the first control unit 111 includes a receiving unit which receives a signal from outside.

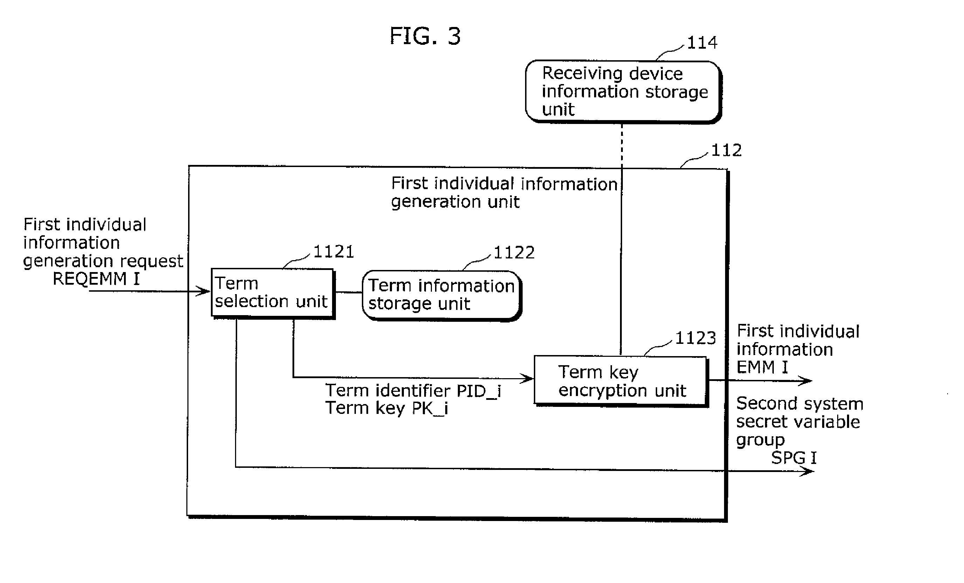

(2) First Individual Information Generation Unit 112
As shown in FIG. 3, the first individual information generation unit 112 includes: a term selection unit 1121; a term information storage unit 1122; and a term key encryption unit 1123.

(2-1) Term Selection Unit 1121
In the case where the term selection unit 1121 receives the first individual information generation request REQEMMI from the first control unit 111, it accesses the term information storage unit 1122. The term information storage unit 1122 stores k numbers of sets of: an unused flag (one of FLAG_1 to FLAG_k); a term identifier (one of PID_1 to PID_k); a term key (one of PK_1 to PK_k); and first system secret variable group (one of SPG1_1 to SPG1_ k), the sets being {(FLAG_1, PID_1, PK_1, SPGI_1), (FLAG_2, PID_2, PK_2, SPGI_2),..., (FLAG_k, PID_k. PK_k, SPGI_k)}. After that it selects a set having an unused flag bit of "1" from among the k numbers of sets. Also, it resets the unused flag bit 1 of the selected set at "0". As an example method for selecting a set having an unused flag bit of "1" from among the k numbers of sets having an unused flag bit of "1", there is a method for selecting a set at random using a random number. As to the method for generating a random number, Non-patent Reference 3 is detailed. It is assumed that the respective values of the sets selected by the term selection unit 1121 are hereinafter referred to as unused flag FLAG_i, a term identifier PID_i, a term key PK_i, and a first system secret variable group SPGI. Here, an unused flag FLAG_i is one of the unused flags FLAG_1 to FLAG_k, a term identifier PID_i is one of the term identifier PID_1 to PID_k, a term key PK_i is one of the term keys PK_1 to PK_k, and a first system secret variable group SPGI_i is one of the first system secret variable group SPGI_i to SPGI_k. Next, it outputs the selected first system secret variable group SPGI_i to the system secret variable group set sending unit 115 as a first system secret variable group SPGI. After that, lastly, it outputs the selected term identifier PID_i and the term key PK_i to the term key encryption unit 1123.

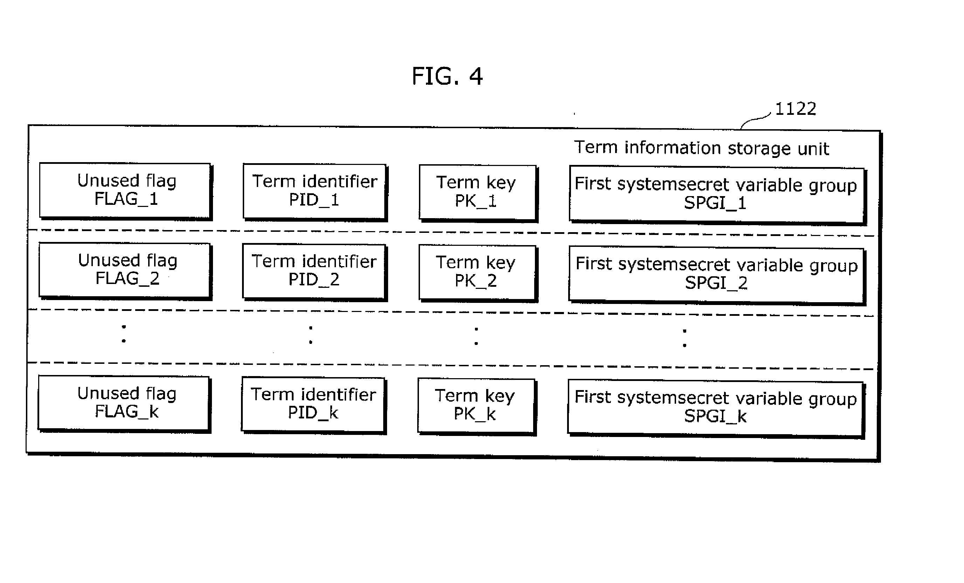

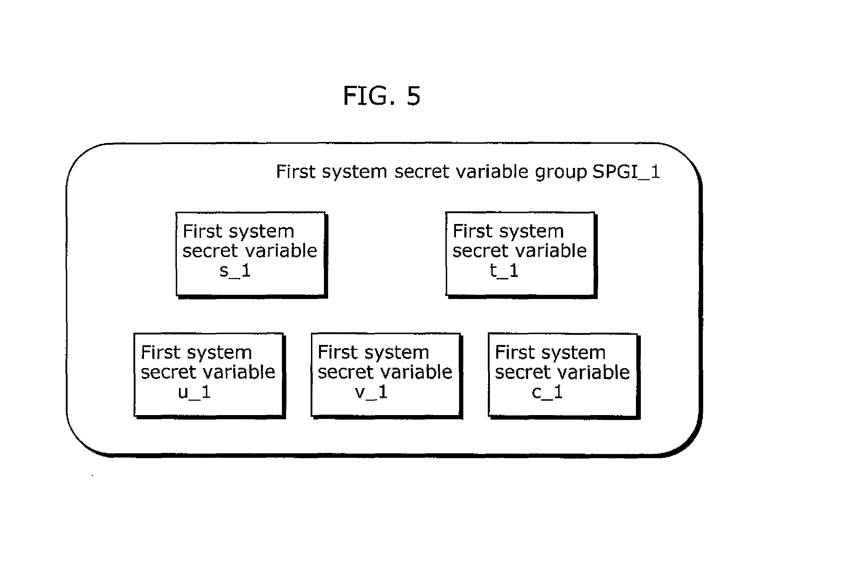

(2-2) Term Information Storage Unit 1122
As shown in FIG. 4, the term information storage unit 1122 stores k numbers of prepared sets of: an unused flag; a term identifier; a term key; and a first system secret variable group, the sets being {(FLAG_1, PID_1, PK_1, SPGI_1), (FLAG_ 2, PID_2, PK_2, SPGI_2),..., (FLAG_k, PID_k. PK_k, SPGI_k)}. For example, FIG. 4 shows the statuses where: (a) the term key PK_1, the first system secret variable group SPGI_1 and an unused flag FLAG_1 are held in association with the term identifier PID_1; (b) the term key PK_2, the first system secret variable group SPGI_2 and an unused flag FLAG_2. are held in association with the term identifier PID_2; and (c) the term key PK_k, the first system secret variable group SPGI_k and an unused flag FLAG_k are held in association with the term identifier PID_k. Here, as shown in FIG. 5, the first system secret variable group SPGI_1 is composed of five first system secret variables ($s\_1, t\_1, u\_1, v\_1$, and $c\_1$). Also, the other first system secret variable groups SPGI_2 to SPGI_k are respectively composed of: $s\_2, t\_2, u\_2, v\_2$, and $c\_2$; and $s\_k, t\_k, u\_k, v\_k$, and $c\_k$. Further, it is assumed that the first system secret variables have been provided so that the following first system secret variable generation equations are satisfied: "$s\_1*t\_1=u\_1*v\_1 \bmod N$"; "$s\_2*t\_2=u\_2*v\_2 \bmod N$"; and "$s\_k*t\_k=u\_k*v\_k \bmod N$". For example, the five first system secret variables and the moduluses N are natural numbers of, for example, 128 bits. The values of these moduluses N here are the same values as these moduluses N which have been previously provided as shared values to the later-described time variable group generation unit 1251, shared intermediate key obtainment unit 1252 and first shared key obtainment unit 1308a, and an example value is $2^{128}$. Also, "mod N" is a remainder operation, and "^" represents a power operation. For example, $2^{4}$ means 16 and they both are used in the same meaning hereinafter. Note that the following method is available as a generation method of a first system secret variable group (example: SPGI_1): the method of generating four first system secret variables (example: $s\_1, t\_1, u\_1$ and $c\_1$) as random numbers; substituting three first system secret variables (example: $s\_1, t\_1$, and $u\_1$) among the four first system secret variables to the first system secret variable generation equation "$s\_1*t\_1=u\_1*v\_1 \bmod N$"; and obtaining the remaining one of the first system secret variables (example: $v\_1$). Also, the respective unused flags FI-AG_1 to FLAg_k are made up of "0" or "1", and they are, for example, natural numbers. Note that it is assumed that all the unused flags FLAG_1 to FLAg_k are "1" in the case where the key distribution center 11 starts its operation. Also, the receiving device identifiers AIDa to AIDn are the identifiers which are uniquely associated with the receiving devices 13a to 13n, and they are, for example, natural numbers. Further, the respective term keys PK_1 to PK_k are keys in the DES encryption method which are described in, for example, the Non-patent Reference 2, and they are generated using random numbers or the like. Also, the term identifiers PID_1 to PID_k take respectively different numbers, and they are, for example, respectively different natural numbers.

(2-3) Term Key Encryption Unit 1123

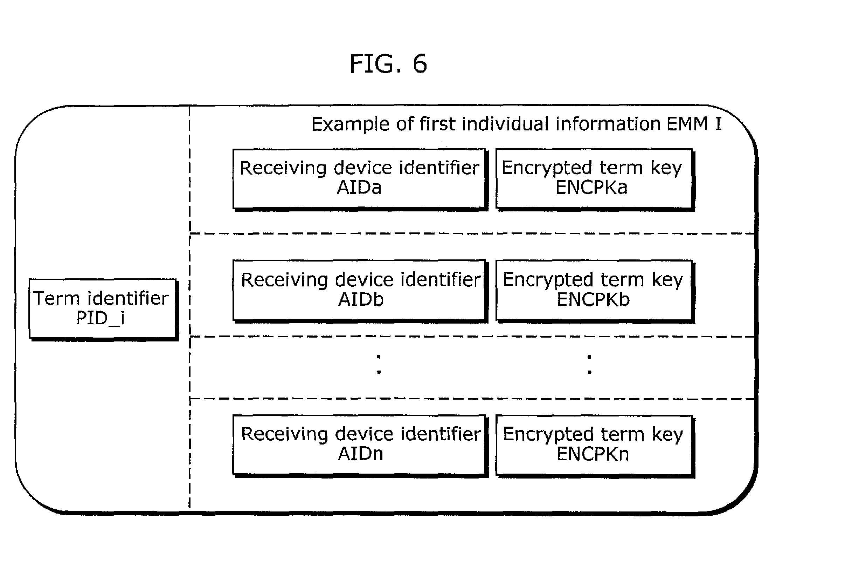

In the case where the term key encryption unit 1123 receives a term identifier PID_i and a term key PK_i from the first system variable group selection unit, it accesses the receiving device information storage unit 114 and obtains all the receiving device identifiers AIDa to AIDn and individual keys IKa to Ikn. After that, firstly, it encrypts the term key PK_i based on the individual key IKa which corresponds to the receiving device identifier AIDa, considers the encrypted sentence as an encrypted term key ENCPKa=Enc(IKa, PK_i), and associates it with the receiving device identifier AIDa. After that it encrypts the remaining terminal keys based on the individual keys which correspond to the other receiving device identifiers AIDb to AIDn as well, considers the encrypted sentences Enc(IKb, PK_i),..., Enc(IKn, PK_i) as an encrypted term keys ENCPKb,..., ENCPKn, and then associates them with the respective receiving device identifiers AIDb to AIDn. After that, it generates a first individual information, shown in FIG. 6, which is composed of: a term identifier PID_i; one of the device identifiers AIDa to AIDn; and one of the encrypted term keys ENCPKa to ENCPKn, and outputs the first individual information EMMI to the individual information group distribution unit 116, the first individual information EMMI equals to PID_i||{AIDa, ENCPKa}||{AIDb, ENCPKb},...|| {AIDn, ENCPKn}}. Here, the encryption algorism which is used for encrypting the terminal keys is, for example, the DES encryption method which is described in the Non-patent Reference 2, and the method to be used is the same as the method of the decryption algorism which is used at the time of decrypting the encrypted term keys in the individual intermediate group obtainment unit 1302a of the later-described receiving devices 13a to 13n.

(3) Receiving Device Information Storage Unit 113

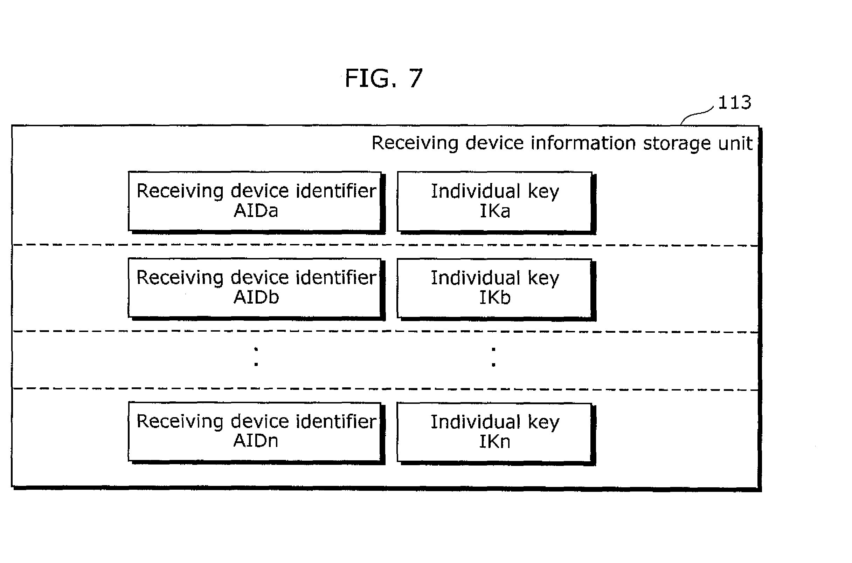

As shown in FIG. 7, the receiving device information storage unit 113 stores: the receiving device identifiers AIDa to AIDn for identifying the receiving devices 13a to 13n; and the individual keys IKa to IKn which have been previously provided to the respective receiving devices 13a to 13n. For example, FIG. 7 shows the statuses where: the receiving device 13a which is associated with the receiving device identifier AIDa holds the individual key IKa: the receiving device 13b which is associated with the receiving device identifier AIDb holds the individual key IKb; and the receiving device 13n which is associated with the receiving device identifier AIDn holds the individual key IKn. It is possible to access the receiving device information storage unit 113 through the term key encryption unit 1123 of the first individual information generation unit 112 and the second individual intermediate key group encryption unit 1142 of the second individual information generation unit 114.

(4) Second Individual Information Generation Unit 114

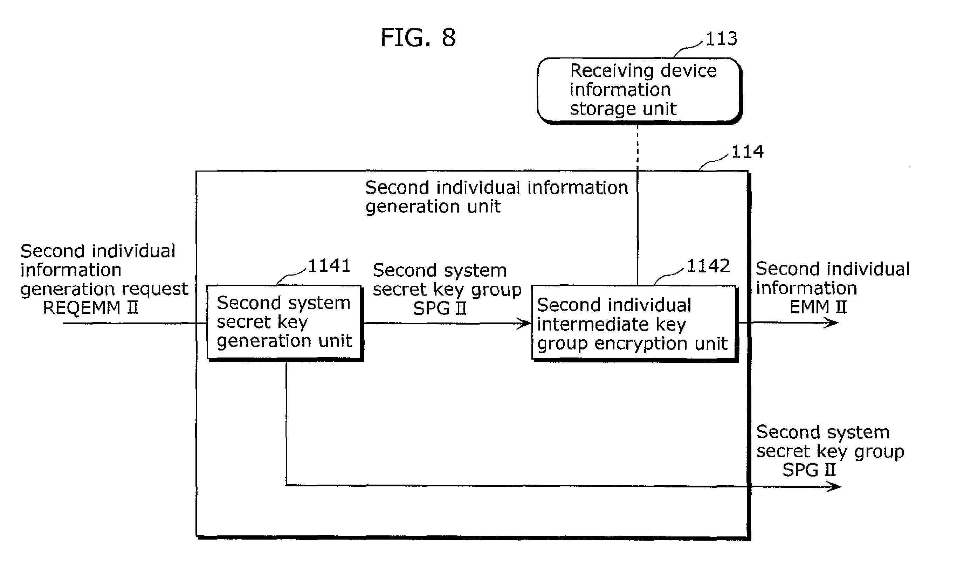

As shown in FIG. 8, the second individual information generation unit 114 is composed of the second system secret key generation unit 1141 and the second individual intermediate key group encryption unit 1142.

(4-1) Second System Secret Key Generation Unit 1141

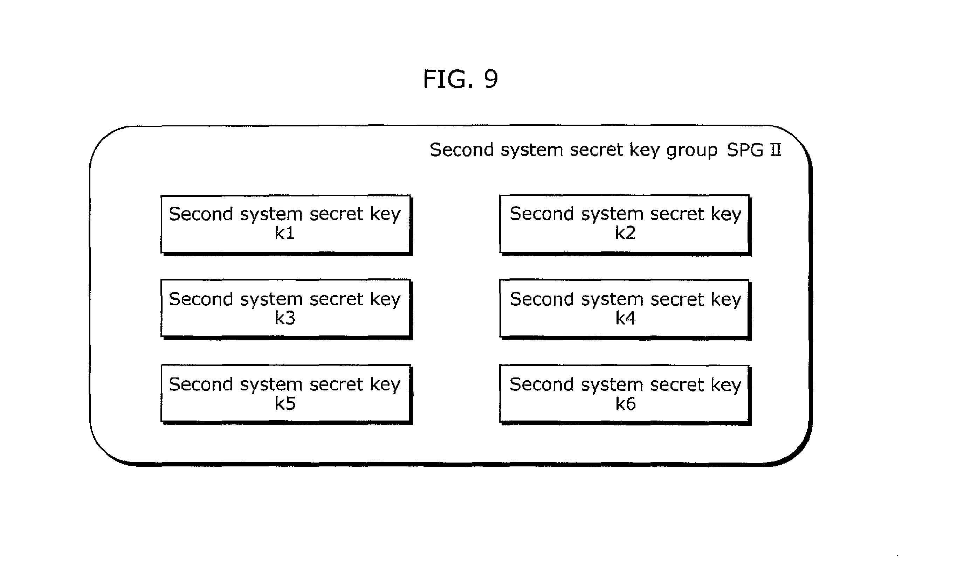

In the case where the second system secret key generation unit 1141 receives the second individual information generation request REQEMMII from the first control unit 111, it generates six second system secret keys k1, k2, k3, k4, k5 and k6. As example method for generating six second system secret keys k1, k2, k3, k4, k5 and k6, there is a method of generating them at random. More concretely, they can be realized using, for example, random numbers. The Non-patent Reference 3 describes a method for generating random numbers in detail. After that, it generates second system secret variable group SPGII which is composed of six second system secret keys k1, k2, k3, k4, k5 and k6 shown in FIG. 9, and outputs them to the system secret variable group set sending unit 115 and the second individual intermediate key group encryption unit 1142.

(4-2) Second Individual Intermediate Encryption Unit 1142

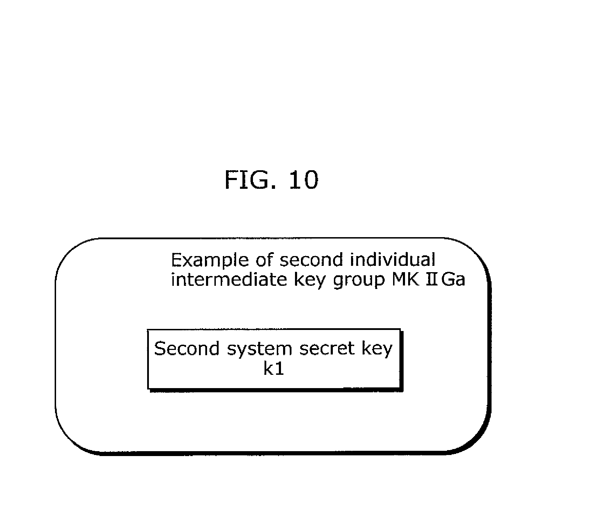

In the case where the second individual intermediate key group encryption unit 1142 receives a second system secret variable group SPGII from the second system secret key generation unit 1141, it accesses the receiving device information storage unit 113, and obtains all the receiving device identifiers AIDa to AIDn and individual keys IKa to IKn. After that, firstly, it selects a second secret key from among the six second system secret keys k1, k2, k3, k4, k5 and k6 which are included in the second system secret variable group SPGII in association with the receiving device identifier AIDa. As an example method for selecting a second system secret key, there is a method of selecting one at random, and it can be realized using a random number. Here, as an example, it is assumed that the key which has been selected in association with the receiving device identifier AIDa is the second system secret key k1. In this case, as shown in FIG. 10, the second individual intermediate key group MKIIGa becomes the second system secret key k1. After that, it encrypts the second individual intermediate key group MKIIGa based on the corresponding individual key IKa, considers the encrypted sentence as the encrypted second individual intermediate key group ENCMKIIGa=Enc(IKa, MKIIGa), and then associates it with the receiving device identifier AIDa. After that, it selects a second system secret key from among the six second system secret keys in the second system secret variable group SPGII which corresponds to the other receiving device identifiers AIDb to AIDn as well, considers the second system secret key as the second individual intermediate key group, encrypts the second individual intermediate key group based on the corresponding individual key, considers the encrypted sentence Enc(IKb, MKIIGb),..., Enc(IKn, MKIIGn) as the second encrypted individual intermediate key group ENCMKIIGb,..., ENCMKIIGn, and then associates them with the respective receiving device identifiers AIDb to AIDn. After that, it generates the second individual information EMMII which is composed of: the receiving device identifiers AIDa to AIDn; and the second encrypted individual intermediate key groups ENCMKIIGa to ENCMKIIGn, the second individual information EMMII equals to AIDa, ENCMKIIGa}||{AIDb, ENCMKIIGb},...||{AIDn, ENCMKIIGn}}, and outputs the second individual information EMMII to the individual information group distribution unit 116. An encryption algorism which is used for encrypting the second individual intermediate key group here is, for example, a DES encryption method which is described in the Non-patent Reference 2, and the method used here is the same as the method of the decryption algorism which is used at the time of decrypting the second encrypted individual intermediate key group in the second individual intermediate group obtainment unit 1303a of the later-described receiving devices 13a to 13n.

(5) System Secret Variable Group Set Sending Unit 115

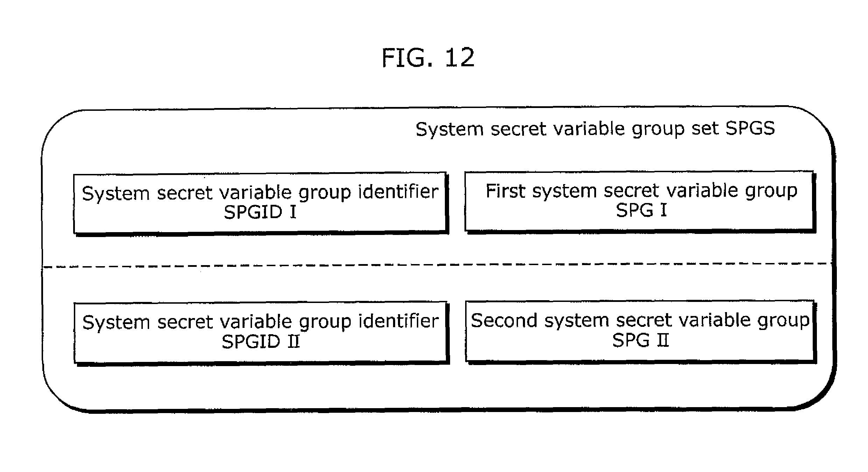

In the case where the system secret variable group set sending unit 115 receives the first system secret variable group SPGI from the first system secret variable group selection unit 1121 of the first individual information generation unit 112, and also receives the second system secret variable group SPGII from the second system secret key generation unit 1141 of the second individual information generation unit 114, it generates a system secret variable group set SPGS, shown in FIG. 12, which is composed of: the first system secret variable group SPGI and the corresponding system secret variable group identifier SPGIDI; and the second system secret variable group SPGII and the corresponding system secret variable group identifier SPGIDII. After that, the system secret variable group set SPGS is sent to the server 12. Here, the system secret variable group identifier SPGIDI and the system secret variable group identifier SPGIDII are, for example, natural numbers. Note that the system secret variable group identifier SPGIDI and the system secret variable group identifier SPGIDII are used in order to differentiate the first system secret variable group SPGI from the second system secret variable group SPGII. However, in the case where the key distribution center 11 and the server 12 previously share the information such as bit positions of the first system secret variable group SPGI and the second system secret variable group SPGII in the communication data, the system secret variable group set SPGS does not need to always include a system secret variable group identifier SPGIDI and a system secret variable group identifier SPGIDII.

(6) Individual Information Group Distribution Unit 116

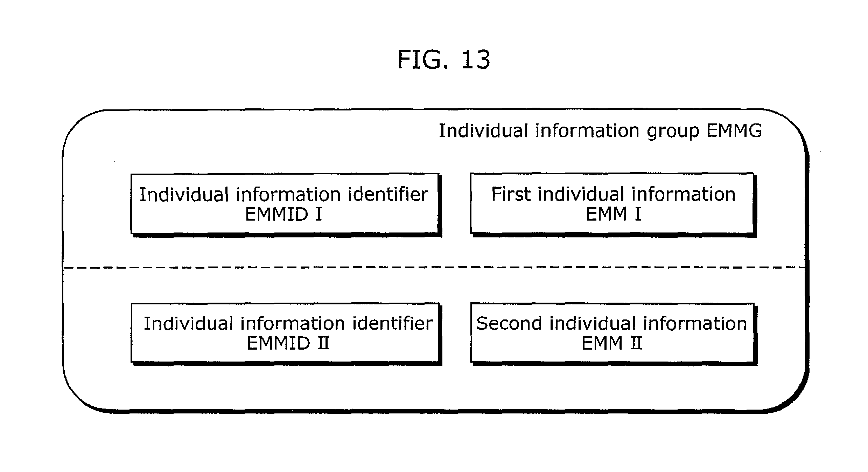

In the case where the individual information group distribution unit 116 receives the first individual information EMMI from the term key encryption unit 1123 of the first individual information generation unit 112 and receives the second individual information EMMII from the second individual intermediate key group encryption unit 1142 of the second individual information generation unit 114, it generates, as shown in FIG. 13, the individual information group EMMG which is composed of: the first individual information EMMI and the corresponding individual information identifier EMMIDI; and the second individual information EMMII and the corresponding individual information identifier EMMIDII. After that, it distributes the individual information group EMMG to the receiving devices 13a to 13n. Here, the individual identifier EMMIDI and the individual information identifier EMMIDII are, for example, respectively different natural numbers. Note that the individual identifier EMMIDI and the individual information identifier EMMIDII are used for differentiating the first individual information EMMI from the second individual information EMMII. However, in the case where the key distribution center 11 and the receiving devices 13a to 13n previously share the information such as bit positions of the first individual information EMMI and the second individual information EMMII in the communication data, the individual information group EMMG does not need to always include the individual information identifier EMMIDI and the individual information identifier EMMIDII.

<Operation of Key Distribution Center 11>

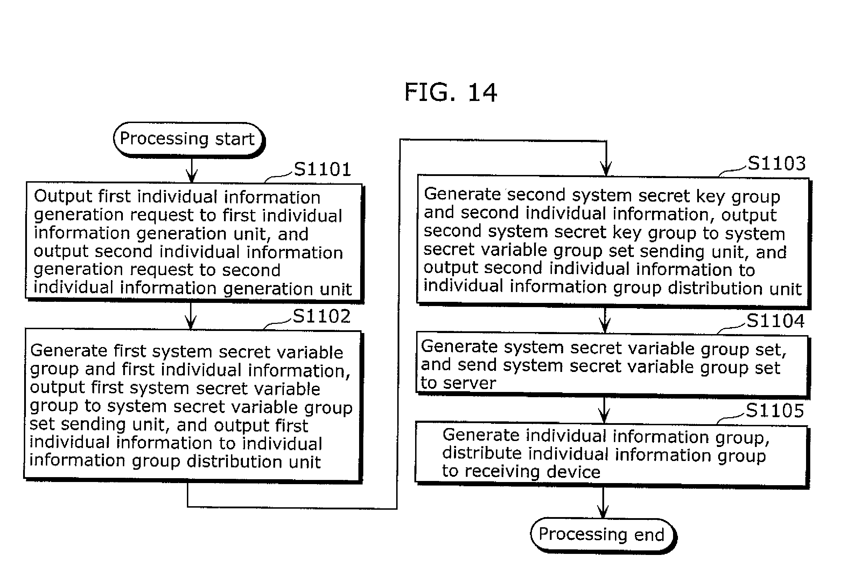

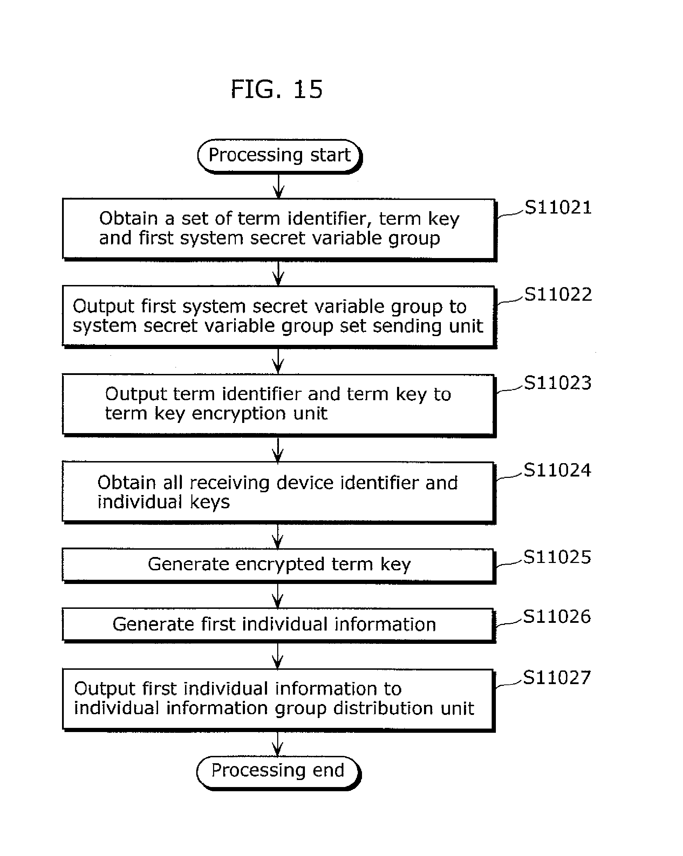

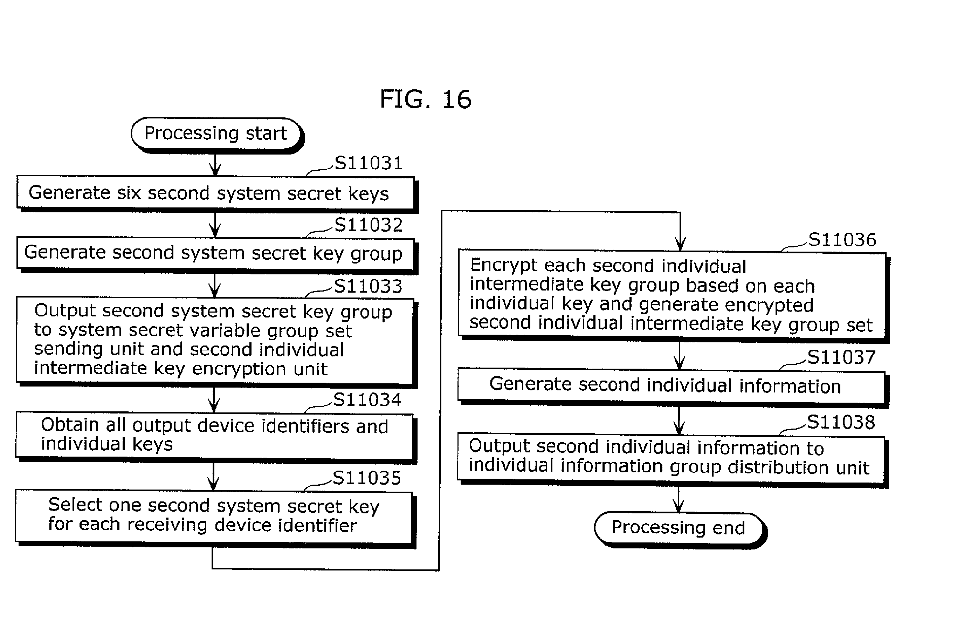

The structure of the key distribution center 11 has been described up to this point. Here, the operation of the key distribution center 11 will be described. Here will be described, with reference to the flow chart shown as FIG. 14, how the key distribution center 11 operates at the time of distributing shared keys, and distributing the key information which is necessary for distributing and receiving the shared keys to the server 12 and the receiving devices 13a to 13n, in the case where a previously provided individual information update condition is satisfied, or in the case where the key distribution center 11 starts its operation or another case. Also, how the first individual information generation unit 112 operates at the time of generating the first system secret variable group SPGI and the first individual information EMMI will be described in detail with reference to the flow chart shown as FIG. 15. Lastly, how the second individual information generation unit 114 operates at the time of generating the second system secret variable group SPGII and the second individual information EMMII will be described in detail with reference to the flow chart shown as FIG. 16.

<Operation of Key Distribution Center 11 in Distributing Key Information>

The first control unit 111 outputs the first individual information generation request REQEMMI to the first individual information generation unit 112, and outputs the second individual information generation request REQEMMII to the second individual information generation unit 114 (S1101).

According to the flow chart shown as FIG. 15 (details will be described below), the first individual information generation unit 112 generates the first system secret variable group SPGI and the first individual information EMMI, outputs the first system secret variable group SPGI to the system secret variable group set sending unit 115, and outputs the first individual information EMMI to the individual information group distribution unit 116 (S1102).

According to the flow chart shown as FIG. 16 (details will be described below), the second individual information generation unit 114 generates the second system secret variable group SPGII and the second individual information EMMII, outputs the second system secret variable group SPGII to the system secret variable group set sending unit 115, and outputs the second individual information EMMII" to the individual information group distribution unit 116 (S1103).

The system secret variable group set sending unit 115 which has received the first system secret variable group SPGI and the second system secret variable group SPGII, generates a system secret variable group set SPGS which is composed of the first system secret variable group SPGI and the second system secret variable group SPGII, and sends the system secret variable group set SPGS to the server 12 (S1104).

The individual group distribution unit 116 which has received the first individual information EMMI and the second individual information EMMII, generates an individual information group EMMG which is composed of the first individual information EMMI and the second individual information EMMII, distributes the individual information group EMMG to the receiving devices 13a to 13n to complete the operation (S1105).

<Operation of Key Distribution Center 11 in Generating First System Secret Variable Group SPGI and First Individual Information EMMI (Detailed Description of Step 1102>

The first system secret variable group selection unit 1121, which has received the first individual information generation request REQEMMI, accesses the term information storage unit 1122, and obtains a set which is associated with an unused flag bit of "1" and made up of a term identifier (example: $PID\_i$), a term key (example: $PK\_i$) and a first system secret variable group (example: $SPGI\_i$). After that, it resets the unused flag (example: $FLAG\_i$) which is stored in the term selection unit 1121 as "0" (S11021).

The first system secret variable group selection unit 1121 outputs a first system secret variable group (example: $SPG1\_i$) to the system secret variable group set sending unit 115 as the first system secret variable group SPG1 (S11022).

The first system secret variable group selection unit 1121 outputs a term identifier (example: $PID\_i$) and a term key (example: $PK\_i$) to the term key encryption unit 1123 (S11023).

The term key encryption unit 1123, which has received the term identifier (example: $PID\_i$) and the term key (example: $PK\_i$), accesses the receiving device information storage unit 114, and obtains all the sets of the receiving device identifiers AIDa to AIDn and individual keys IKa to IKn (S11024).

The term key encryption unit 1123 encrypts the term key (example: $PK\_i$) based on the respective individual keys IKa to IKn, and generates the encrypted term keys (examples: $ENCPKa=Enc(IKa, PK\_i),...,ENCPKn=Enc(IKn, IKn))$ (S11025).

It respectively associates the encrypted term keys ENCPKa to ENCPKn with the receiving device identifiers AIDa to AIDn corresponding to the individual keys which have been used at the time of the encryption of the encrypted term keys, and further adds a term identifier (example: $PID\_i$) to them so as to generate the first individual information EMMI (example: the first individual information=$PID\_i||\{AIDa, ENCPKa\}||\{AIDb, ENCPKb\},...,\{AIDn, ENCPKn\})$ (S11026).

The term key encryption unit 1123 outputs the first individual information EMMI to the individual information group distribution unit 116 to complete the operation (S11027).

<Operation of Key Distribution Center 11 in Generating Second System Secret Variable Group SPGII and Second Individual Information EMMII (Detailed Description of Step 1103)>

The second system secret key generation unit 1141, which has received the second individual information generation request REQEMMII, generates six second system secret keys k1,k2, k3, k4, k5 and k6 (S11031).

The second system secret key generation unit 1141 generates a second system secret variable group SPGII which is composed of six second system secret keys k1, k2, k3, k4 k5 and k6 (S11032).

The second system secret key generation unit 1141 outputs the second system secret variable group SPGII to the system secret variable group set sending unit 115 and the second individual intermediate key group encryption unit 1142 (S11033).

The second individual intermediate key group encryption unit 1142, which has received the second system secret variable group SPGII, accesses the receiving device information storage unit 113, and obtains all the receiving device identifiers AIDa to AIDn and individual keys IKa to Ikn (S11034).

The second individual intermediate key group encryption unit 1142 selects a second system secret key (example: MKIIGa=$k_1$, MKIIGb=k2,...,MKIIGn=k6) from among the second system secret variable groups SPGII in association with the respective receiving device identifiers AIDa to AIDn, and considers them as the second individual intermediate key groups MKIIGa to MKIIGn (S11035).

The second individual intermediate key group encryption unit 1142 encrypts the respective second individual intermediate key groups MKIIGa to MKIIGn based on the individual key IKa, and considers the encrypted sentence as the second encrypted individual intermediate key group ENCMKIIGa=Enc(IKa, MKIIGa), ENCMKIIGb=Enc(IKb, MKIIGb),..., ENCMKIIGn=Enc(IKn, MKIIGn) (S11036).

The second individual intermediate key group encryption unit 1142 generates a second individual information EMMII= {AIDa, ENCMKIIGa}||{AIDb, ENCMKIIGb},...,||{AIDn, ENCMKIIGn}} which is composed of the receiving device identifiers AIDa to AIDn and the second encrypted individual intermediate key groups ENCMKIIGa to ENCMKIIGn (S11037).

The second individual intermediate key group encryption unit 1142 outputs the second individual information EMMII to the individual information group distribution unit 116 (S11038).

The structure and the operation of the key distribution center 11 which is a component of the key distribution system 11 have been described up to this point, and the structure and the operation of the server 12 will be described next.

<Structure of Server 12>

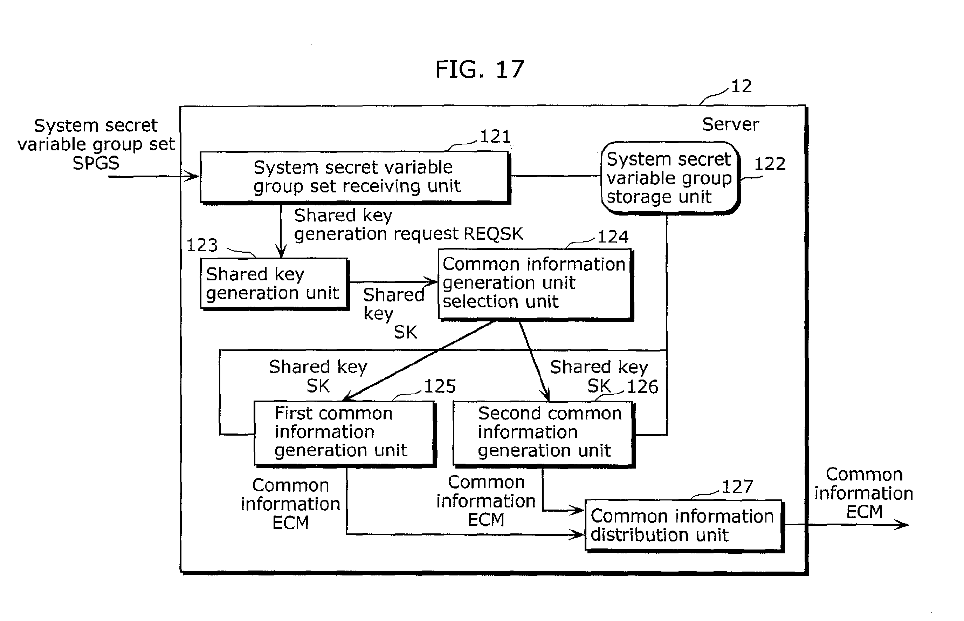

As shown in FIG. 17, the server 12 includes: a system secret variable group set receiving unit 121; a system secret variable group storage unit 122; a shared key generation unit 123; a common information generation unit selection unit 124; a first common information generation unit 125; a second common information generation unit 126; and a common information distribution unit 17.

(1) System Secret Variable Group Set Receiving Unit 121

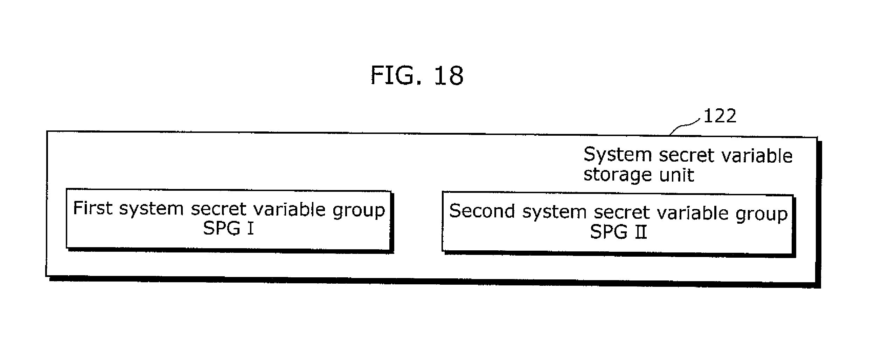

In the case where the system secret variable group set receiving unit 121 receives a system secret variable group set SPGS from the key distribution center 11, it extracts the first system secret variable group SPGI and the second system secret variable group SPGII based on the SPGIDI and the SPGIDII which are the system secret variable group identifiers included in the received system secret variable group set SPGS, stores the system secret variable group storage unit 122 like shown in FIG. 18, and outputs the shared key generation request REQSK to the shared key generation unit 123.

(2) System Secret Variable Group Storage Unit 122

As shown in FIG. 18, the system secret variable group storage unit 122 is for storing a first system secret variable group SPGI and a second system secret variable group SPGII. It is possible to access the system secret variable group storage unit 122 from: the system secret variable group set receiving unit 121 and the time variable group generation unit 1251 in the first common information generation unit 125; and the shared intermediate key obtainment unit 1252 and the second shared key encryption unit 1261 in the second common information generation unit 126.

(3) Shared Key Generation Unit 123

In the case where the shared key generation unit 123 receives the shared key generation request REQSK from the system secret variable group set receiving unit 121, or in the case where a previously provided common information update condition is satisfied, a shared key SK is generated. As an example method for generating a shared key SK, there is a method of generating a shared key SK at random using a random number. The Non-patent Reference 3 describes in detail the method of generating a random number. After that, the shared key SK is outputted to the common information generation unit selection unit 124. For example, in the case where the common information update condition is "every second", "every hour" or the like, a counter can be updated by means that the shared key generation unit 123 has the counter, and in the case where the common information update condition is "in the case where a specific signal has been received from outside" or the like, a counter can be updated by means that the shared key generation unit 123 has a receiving unit which receives a signal from outside.

(4) Common information Generation Unit Selection Unit 124

In the case where the common information generation unit selection unit 124 receives a shared key SK from the shared key generation unit 123, it selects one of the first common information generation unit 125 and the second common information generation unit 126, and outputs the shared key SK to: the selected time variable group generation unit 1251 of the first common information generation unit 125 and the first shared key encryption unit 1253; or the second shared key encryption unit 1261 of the second common information generation unit 126. Here, as a method for selecting one of the first common information generation unit 125 and the second common information generation unit 126, there are a method of selecting one based on the schedule data which is provided from outside and another method of selecting one at random using a random number.

(5) First Common information Generation Unit 125

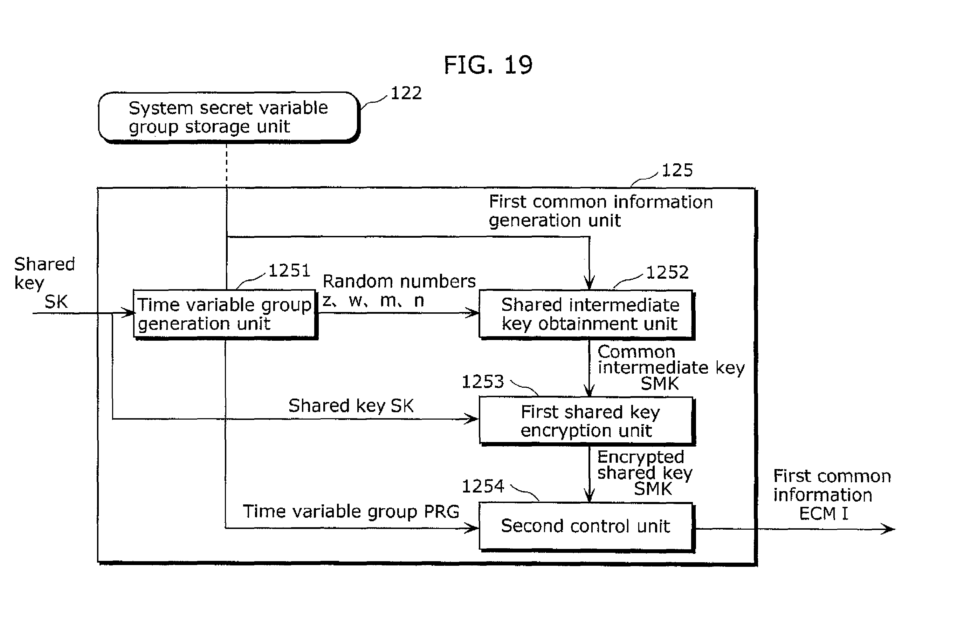

As shown in FIG. 19, the first common information generation unit 125 includes: a time variable group generation unit 1251; a shared intermediate key obtainment unit 1152; a first shared key encryption unit 1253; and a second control unit 1254.

(5-1) Time Variable Group Generation Unit 1251

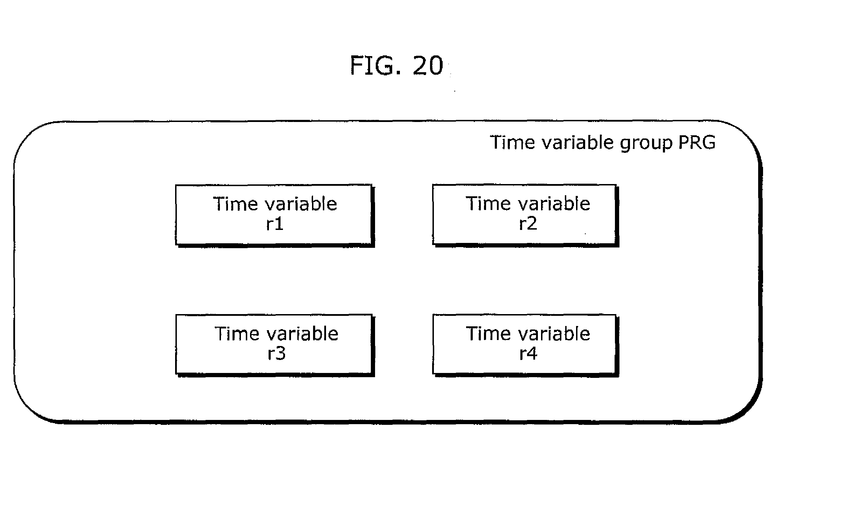

In the case where the time variable group generation unit 1251 receives a shared key SK from the common information generation unit selection unit 124, it generates four random numbers z, w, m and n. Here, as an example method for generating the random numbers z, w, m and n, there is a method of generating them at random using random numbers. Also, the random numbers z, w, m and n are, for example, natural numbers of 128 bits. Also, it accesses the system secret variable group storage unit 122, obtains the first system secret variable group SPGI, and extracts the first system secret variables s, t, u and v from among the first system secret variable group SPGI. After that, it generates four time variables r1, r2, r3 and r4 based on the previously provided four time variable generation equations: "r1=s*z+v*m mod N"; "r2=t*w+u*n N"; "r3=u*z+t*m mod N"; and "r4=v*w+s*n N". After that, it generates a time variable group PRG, like shown in FIG. 20, which is composed of the generated time variables r1, r2, r3 and r4, and outputs the time variable group PRG to the second control unit 1254. Lastly, it outputs the random numbers z, w, m and n to the shared intermediate key obtainment unit 1252.

(5-2) Shared Intermediate Key Obtainment Unit 1252

In the case where the shared intermediate key obtainment unit 1252 receives the random numbers z, w, m and n from the time variable group generation unit 1251, it accesses the system secret variable group storage unit 122 first, obtains the first system secret variable group SPGI, and extracts the first system secret variables s, t, u, v and c from the first system secret variable group SPGI. After that, it generates a shared intermediate key SMK based on the previously provided server shared intermediate key generation equation "SMK=2*s*t*(z+w+c+n*m)+2*(u*s*n*z+t*v*m*w) mod N", and outputs the generated shared intermediate key SMK to the first shared key encryption unit 1253.

(5-3) First Shared Key Encryption Unit 1253

In the case where the first shared key encryption unit 1253 receives a shared key SK from the second control unit 124, and further receives the shared intermediate key SMK from the shared intermediate key obtainment unit 1252, it encrypts the received shared key SK based on the shared intermediate key SMK. Here, an encryption algorism which is used for encrypting the shared key SK is, for example, a DES encryption method, and the method used here is the same as the method of the decryption algorism which is used for decrypting the encrypted shared key ENCSK in the respective first shared key obtainment units 1308a of the later-described receiving devices 13a to 13n. After that, it outputs the encrypted shared key ENCSK to the second control unit 1254.

(5-4) Second Control Unit 1254

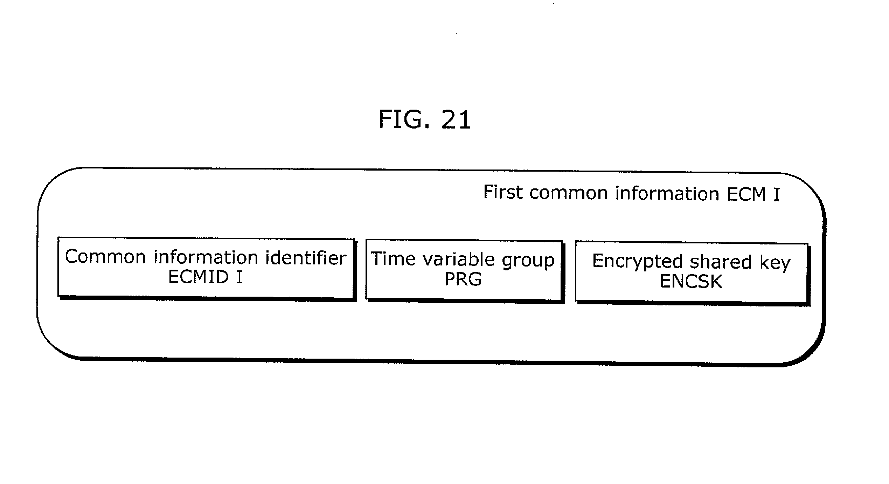

In the case where the second control unit 1254 receives a time variable group PRG from the time variable group generation unit 1251, and also receives an encrypted shared key ENCSK from the first shared key encryption unit 1253, it generates the first common information ECMI which is composed of: a common information identifier ECMIDI indicating the first common information ECMI; a time variable group PRG; and an encrypted shared key ENCSK, as shown in FIG. 21. After that, it outputs the first common information ECMI to the common information distribution unit 127 as common information ECM. Here, the common information identifier ECMIDI is, for example, a natural number. Note that the common information identifier ECMIDI is used at the time of identifying which one of the following is included in the common information ECM: the first common information ECMI and the first common information ECMII. However, in the case where the server 12 and the receiving devices 13a to 13n previously share the timing of sending the first common information ECMI and the second common information ECMII, the common information ECM does not need to always include the first common information identifier ECMID1 and the second common information identifier ECMIDII. Such a case is, for example, the case where the server 12 and the receiving devices 13a to 13n send the first common information ECMI at a certain time point, and send the second common information ECMII at the other time points.

(6) Second Common information Generation Unit 126

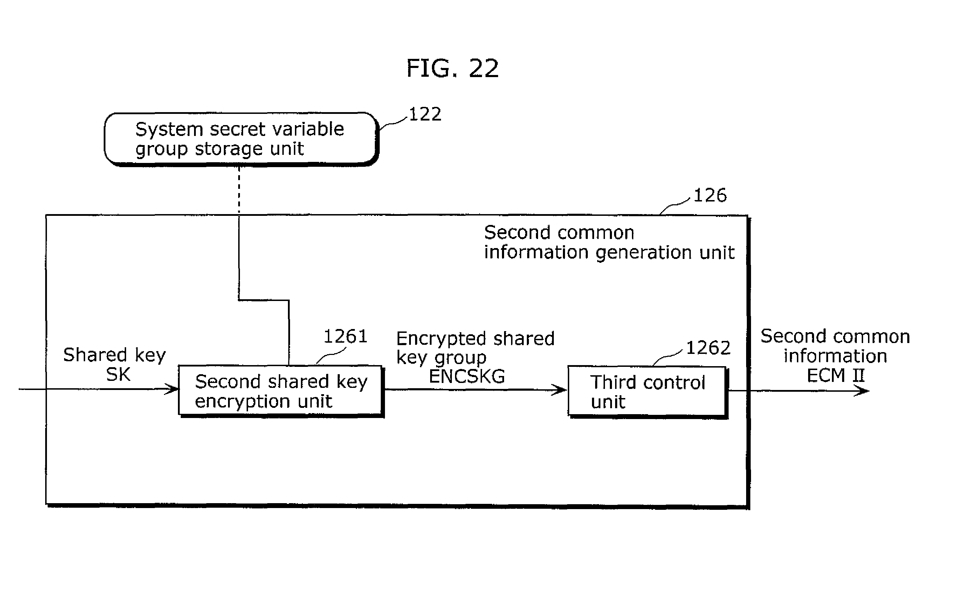

As shown in FIG. 22, the second common information generation unit 126 includes: a second shared key encryption unit 1261; and a third control unit 1262.

(6-1) Second Shared Key Encryption Unit 1261

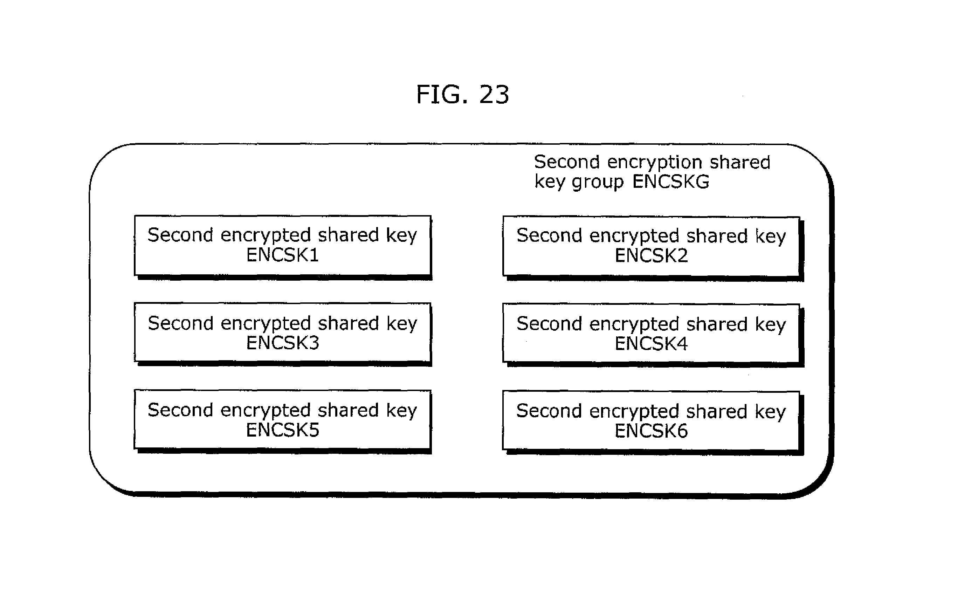

In the case where the second shared key encryption unit 1261 receives a shared key SK from the second control unit 124, it accesses the system secret variable group storage unit 122 first, obtains the second system secret variable group SPGII, and extracts the second system secret keys k1, k2, k3, k4, k5 and k6 from among the second system secret variable group SPGII. After that, it encrypts the shared key SK based on the second system secret key k1 first, and generates the encrypted shared key ENCSK1=Enc(k1, SK). After that, it encrypts the shared keys SK based on the other second system secret keys k2, k3, k4, k5 and k6 as well, and generates the encrypted shared keys ENCSK2=Enc(k2, SK),..., ENCSK6=Enc(k6, SK). Lastly, it outputs an encrypted shared key group ENCSKG like shown in FIG. 23 to the third control unit 1262, the encrypted shared key group ENCSKG being obtained by combining the encrypted shared keys ENCSK1, ENCSK2, ENCSK3, ENCSK4, ENCSK5, and ENCSK6. Note that an encryption algorism which is used here for encrypting the shared keys SK are, for example, a DES encryption method, and the method used here is the same as the method of the decryption algorism which is used by the respective second shared key obtainment units 1309 of the later-described receiving devices 13a to 13n in order to decrypt one of the encrypted sentences in the encrypted shared key group ENCSKG.

(6-2) Third Control Unit 1262

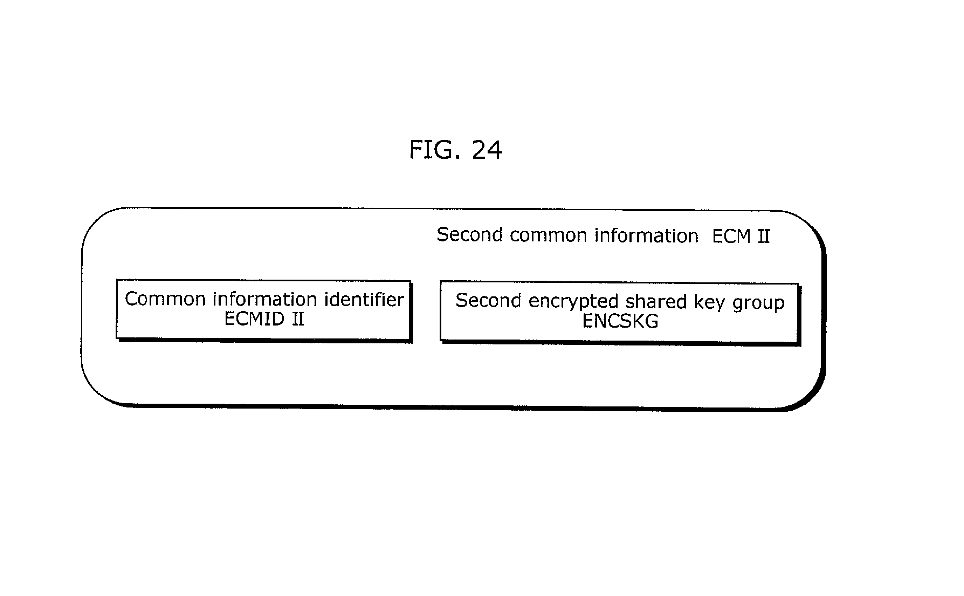

In the case where the third control unit 1262 receives an encrypted shared key ENCSKG from the second shared key encryption unit 1261, it generates, as shown in FIG. 24, the second common information ECMII which is composed of the common information identifier ECMIDII indicating the second common information ECMII and the encrypted shared key group ENCSKG. After that, it outputs the second common information ECMII to the common information distribution unit 127 as common information ECM. Here, the common information identifier ECMIDII is, for example, a natural number which is different from the common information identifier ECMIDI. Note that the common information identifier ECMIDII is used at the time of identifying the first common information ECMI or the first common information ECMII that is included in the common information ECM. However, in the case where the server 12 and the receiving devices 13a to 13n previously share the timing of sending the first common information ECMI and the second common information ECMII, the common information ECM does not need to always include the first common information identifier ECMIDI and the second common information identifier ECMIDII. Such a case is, for example, the case where the server 12 and the receiving devices 13a to 13n send the first common information ECMI at a certain time point, and send the second common information ECMII at the other time points.

(7) Common information Distribution Unit 127

In the case where the common information distribution unit 127 receives common information ECM from one of the second control unit 1254 of the first common information generation unit 125 and the third control unit 1262 of the second common information generation unit 126, it distributes the common information ECM to the receiving devices 13a to 13n.

<Operation of Server 12>

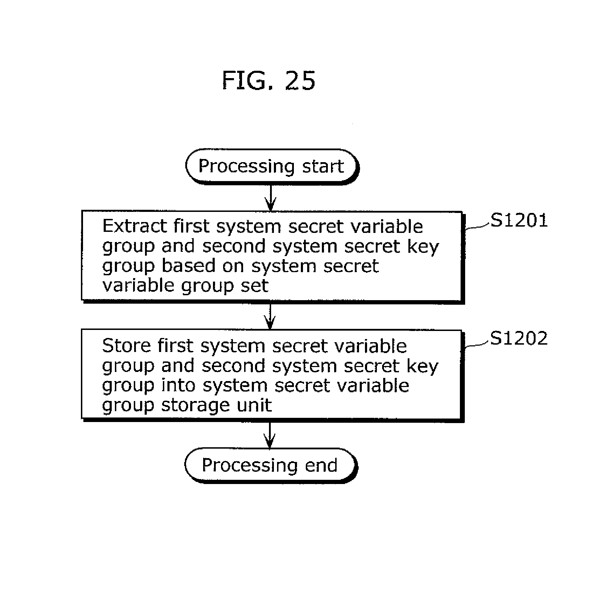

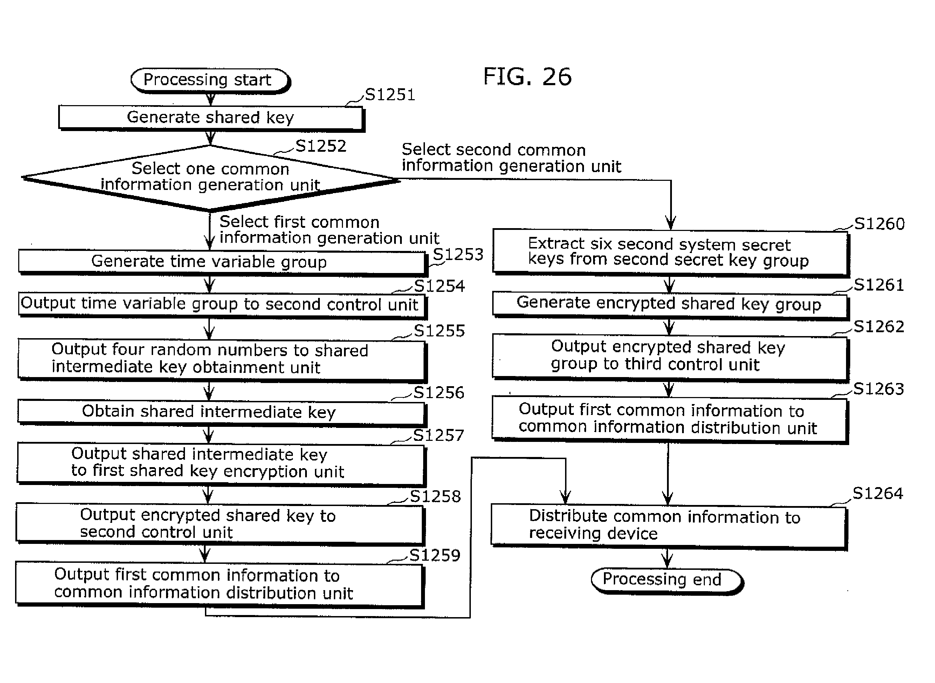

The structure of the server 12 has been described up to this point. Here, the operation of the server 12 will be described. First, how the server 12 receives, from the key distribution center 11, a system secret variable group set SPGS which is used at the time of distributing a shared key SK will be described with reference to the flow chart shown as FIG. 25. Next, how the server 12 distributes a new shared key SK to the receiving devices 13a to 13n in the case where it receives a shared key generation request REQSK from the system secret variable group set receiving unit 121, or in the case where a previously provided shared key update condition is satisfied will be described with reference to the flow chart shown as FIG. 26.

<Operation of Server 12 in Receiving System Variable Group Set SPGS from Key Distribution Center 11>

The system secret variable group set receiving unit 121 extracts the first system secret variable group SPGI and the second system secret variable group SPGII based on the system secret variable group identifiers SPGIDI to SPGIDII which are included in the received system secret variable group set SPGS (S1201).

The system secret variable group set receiving unit 121 stores the first system secret variable group SPGI and the second system secret variable group SPGII in the system secret variable group storage unit 122 to complete the operation (S1202).

< Operation of Server 12 in Distributing New Shared Key SK to Receiving Devices 13a to 13n>

The shared key generation unit 123 generates a shared key SK and outputs it to the common information generation unit selection unit 124 (S1251).

The common information generation unit selection unit 124 selects one of the first common information generation unit 125 and the second common information generation unit 126, and outputs the shared key SK to the selected one. Here, in the case where the first common information generation unit 125 is selected, Step 1254 is executed next. In contrast, in the case where the second common information generation unit 126 is selected, Step 1260 is executed next (S1252).

The first common information generation unit 125, which has received the shared key SK from the shared key information selection unit 124, generates random numbers z, w, m and n. After that, it accesses the system secret variable group storage 122, obtains the first system secret variable group SPGI and extracts the first system secret variables s, t, u and v from the first system secret variable group SPGI. After that, it generates four time variables r1, r2, r3 and r4 based on the previously provided four time variable generation equations: "r1=s*z+v*m mod N"; "r2=t*w+u*n N"; "r3=u*z+t*m mod N"; and "r4=v*w+s*n N". It generates a time variable group PRG which is composed of the generated four time variables r1, r2, r3 and r4 (S1253).

It outputs the time variable group PRG to the second control unit 1254 (S1254).

It outputs the random numbers z, w, m and n to the shared intermediate key obtainment unit 1252 (S1255).

In the case where the shared intermediate key obtainment unit 1252 receives random numbers z, w, m and n from the time variable group generation nit 1251, it accesses the system secret variable group storage unit 122 first, obtains the first system secret variable group SPGI, and extracts the first system secret variables s, t, u, v and c from the first system secret variable group SPGI. After that, it obtains a shared intermediate key SMK based on the previously provided server shared intermediate key generation equation "SMK=2*s*t*(z+w+c+n*m)+2*(u*s*n*z+t*v*m*w) mod N" (S1256).

It outputs the generated shared intermediate key SMK to the first shared key encryption unit 1253 (S1257).

In the case where the first shared key encryption unit 1253 receives a shared key SK from the second control unit 124, and further receives the shared intermediate key SMK from the shared intermediate key obtainment unit 1252, it encrypts the received shared key SK based on the shared intermediate key SMK, and outputs the encrypted shared key ENCSK to the second control unit 1254 (S1258).

In the case where the second control unit 1254 receives a time variable group PRG from the time variable group generation unit 1251, and also receives the encrypted shared key ENCSK from the first shared key encryption unit 1253, it generates the first common information ECMI which is composed of: a common information identifier ECMIDI indicating the first common information ECMI; a time variable group PRG; and an encrypted shared key ENCSK, outputs the first common information ECMI to the common information distribution unit 127 as common information ECM, and then goes to Step 126 (S1259).

In the case where the second shared key encryption unit 1261 receives a shared key SK from the second control unit 124, it accesses the system variable group storage unit 122 first, obtains the second system secret variable group SPGII and extracts six second system secret keys k1, k2, k3, k4, k5 and k6 from the second system secret variable group SPGII (51260).

The shared key encryption unit 1261 encrypts a shared key SK based on the respective second system secret keys k1, k2, k3, k4, k5 and k6 to generate the encrypted shared keys ENCSK1=Enc(k1, SK), ENCSK2=Enc(k2, SK),..., ENCSK6=Enc(k6, SK), and combines these encrypted shared keys ENCSK1 to ENCSK6 to generate an encrypted shared key group ENCSKG (S1261).

The second shared key encryption unit 1261 outputs the encrypted shared key group ENCSKG to the third control unit 1262 (S1262).

In the case where the third control unit 1262 receives the encrypted shared key group ENCSKG from the second shared key encryption unit 1261, it generates second common information ECMII which is composed of: a common information identifier ECMIDII indicating the second common information ECMII; and an encrypted shared key group ENCSKG, and outputs the second common information ECMII to the common information distribution unit 127 as common information ECM (S1263).

The common information distribution unit 127, which has received the common information ECM, distributes the common information ECM to the receiving devices 13a to 13n to complete the operation (S1264).

The structure and the operation of the server 12 which is a component of the key distribution system 1 have been described up to this point. First, the structure and the operation of the receiving device 13a will be described first, and then the difference between the receiving device 13a and the other receiving devices 13b to 13n will be described.

<Structure of Receiving Device 13a>

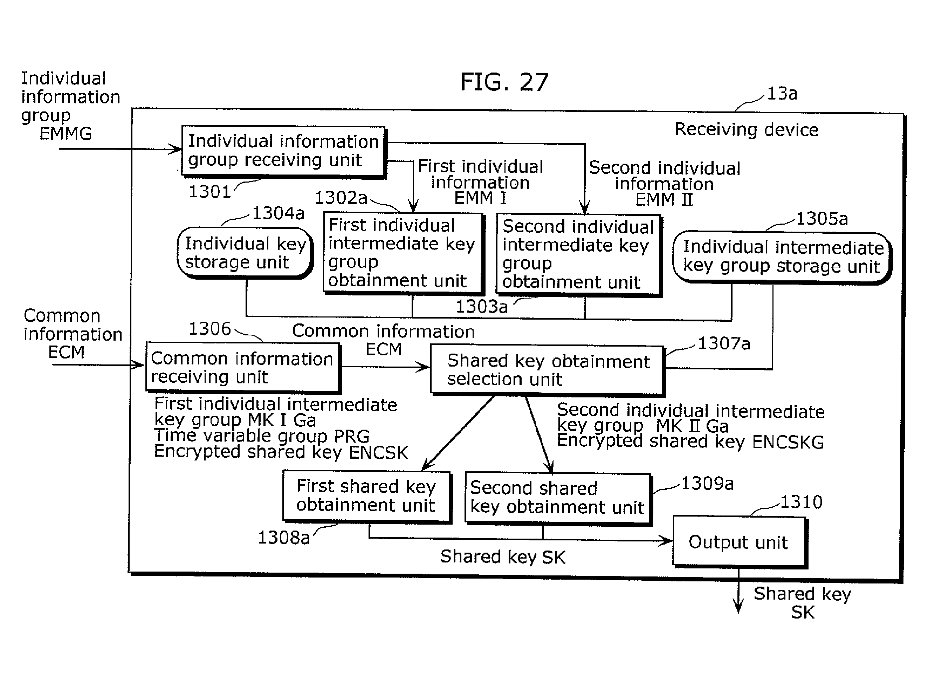

As shown in FIG. 27, the receiving device 13a includes: an individual information receiving unit 1301; a first individual intermediate key group obtainment unit 1302a; a second individual intermediate key group obtainment unit 1303a; an individual key storage unit 1304a; an individual key storage unit 1305a; a common information receiving unit 1306; a second selection unit 1307a; a first shared key obtainment unit 1308a; a second shared key obtainment unit 1309a; and an output unit 1310. Here, the components which are unique to the receiving device 13a include: the first individual intermediate key group obtainment unit 1302a; the first individual intermediate key group obtainment unit 1303a; the individual key storage unit 1304a; the individual intermediate key storage unit 1305a; the second selection unit 1307a; the first shared key obtainment unit 1308a; and the second shared key obtainment unit 1309a, and the components which are common among the receiving devices 13a to 13n include: the individual information receiving unit 1301; the common information receiving unit 1306; and the output unit 1310.

(1) Individual Information Receiving Unit 1301

In the case where the individual information receiving unit 1301 receives an individual information group EMMG from the server 12, it extracts the first individual information EMMI and the second individual information EMMII based on the individual information identifiers EMMIDI and EMMIDII which are included in the received individual information group EMMG, and outputs the first individual information EMMI to the first individual intermediate group obtainment unit 1302a, and the second individual information EMMII to the second individual intermediate key group obtainment unit 1303a.

(2) First Individual Intermediate Key Group Obtainment Unit 1302a

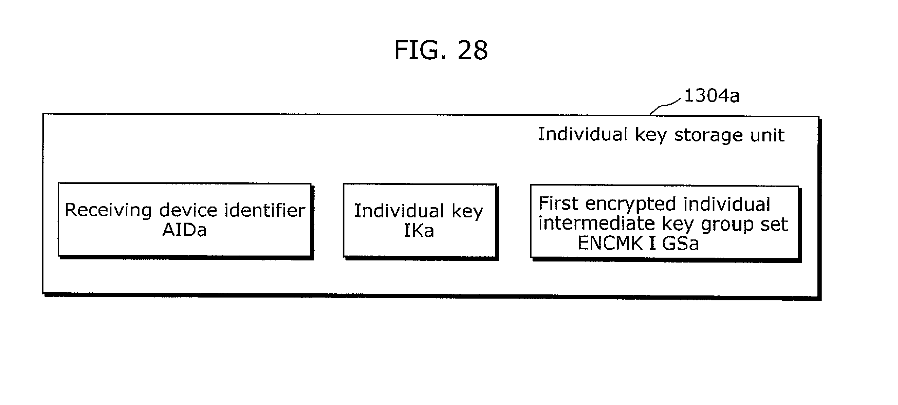

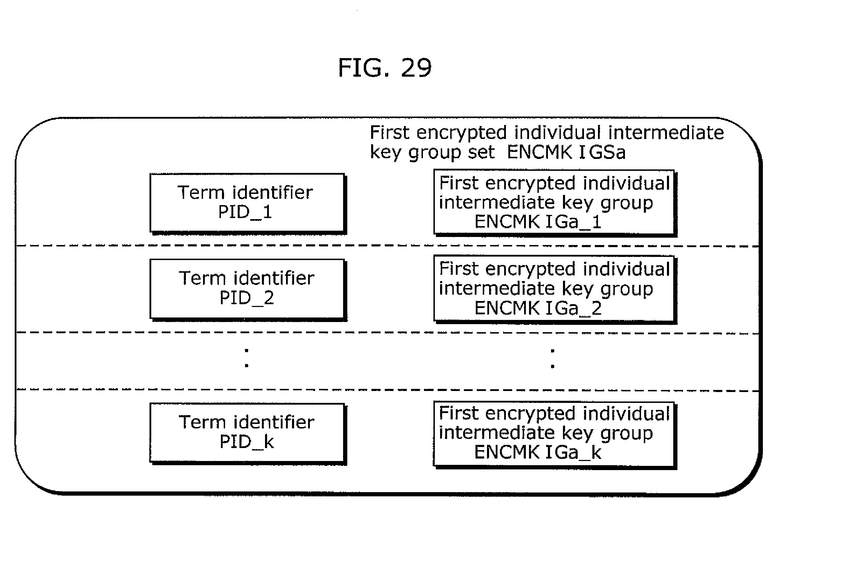

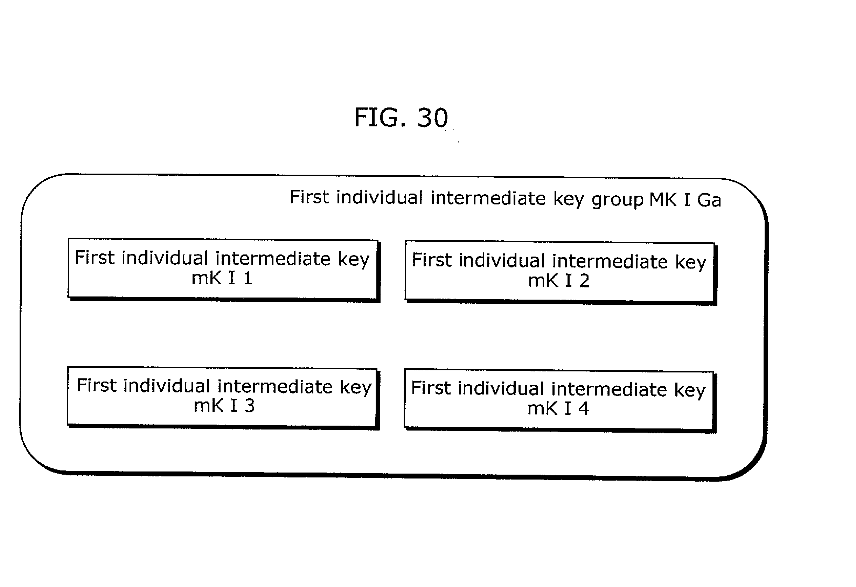

In the case where the first individual intermediate key group obtainment unit 1302a receives the first individual information EMMI from the individual information receiving unit 1301, it obtains a receiving device identifier AIDa, an individual key IKa and a first encrypted individual intermediate key group set ENCMKIGSa from the individual key storage unit 1304a as shown in FIG. 28 first. After that, it obtains a term identifier (such as PID_i: PID_i is one of PID_1 to PID_k) and an encrypted term key ENCPKa corresponding to the receiving device identifier AIDa which has been stored in the individual key storage unit 1304a. After that, it decrypts the encrypted term key ENCPKa based on the individual key IKa stored in the individual key storage unit 1304, and obtains the term key PK_i corresponding to the term identifier PID_i. After that, it obtains the first encrypted intermediate key group (such as ENCMKIGa_i: ENCMKIGa_i is one of ENCMKIGa_1 to ENCMKIGa_k) corresponding to a term identifier (example: PID_i which is one of PID_1 to PID_k) in the first individual information EMMI, from among the first encrypted individual intermediate key group set ENCMKIGSa as shown in FIG. 29, decrypts the first encrypted individual intermediate key group based on the term key PK_i, and obtains the first individual intermediate key group MKIGa as shown in FIG. 30. After that, it stores the decrypted first individual intermediate key group MKIGa in the individual intermediate key storage unit 1305a.

(3) Second Individual Intermediate Key Group Obtainment Unit 1303a

In the case where the second individual intermediate key group obtainment unit 1303a receives the second individual information from the individual information receiving unit 1301, it obtains a receiving identifier AIDa and an individual key IKa from the individual key storage unit 1304a as shown in FIG. 28 first. After that, it obtains the second encrypted individual intermediate key group ENCMKIIGa corresponding to the receiving device identifier AIDa which has been stored in the individual key storage unit 1304, from the received second individual information EMMII. After that, it decrypts the second encrypted individual intermediate key group ENCMKIIGa based on the individual key IKa, and obtains the second individual intermediate key group MKIIGa. After that, it stores the second individual intermediate key group MIKIIGa in the individual intermediate key storage unit 1305a.

(4) Individual Key Storage Unit 1304a

As shown in FIG. 28, the individual key storage unit 1304a holds the receiving device identifier AIDa, the individual key IKa, and the first encrypted individual intermediate key group set ENCMKIGSa. It is possible to access the individual key storage unit 1304a through the first individual intermediate key group obtainment unit 1302a and the second individual intermediate key group obtainment unit 1303a. Also, the receiving device identifier AIDa is, for example, a natural number, and it takes a value which is different from the respective receiving device identifiers AIDb to AIDn. The individual key IKa is, for example, a key of DES encryption method described in the Non-patent Reference 2. The individual key IKa has beem generated in advance using, for example, a random number embedded in the individual key IKa, and it takes a value which is different from the individual keys IKb to IKn.

Note that the first encrypted individual intermediate key group set ENCMKIGSa which is stored in this individual key storage unit 1304a has a random number which has been embedded by means that the key distribution center 11 performing the following method.

Two individualized variables x and y which satisfy a previously provided individualized variable generation equation "x*y=c_1 mod N" are generated for the first system secret variables $s\_1, t\_1, u\_1, v\_1$ and $c\_1$ which correspond to the term identifier PID_1. Here, as a method for generating these two individualized variables x and y, for example, there is a method for generating an individualized variable (example: x) using a random number, and substituting the value to the individualized variable generation equation so as to obtain the other individualized variable (example: y). When selecting one random individualized variable x, the corresponding individualized variable y is surely present. Also, these individualized variables x and y are natural numbers of 128 bits, and "*" represents multiplication. For example, 2*5 means 10, and it is used in the same meaning hereinafter. After that, four first individual intermediate keys mkI1, mkI2, mkI3 and mkI4 are generated using the individualized variables x and y based on the previously provided four first individual intermediate key generation equations "mkI1=s_1*x mod N", "mkI2=t_1*y mod N", "mkI3=— u_1*x mod N" and "mkI4= —v_1*y mod N". After that, it generates the first individual intermediate key group MKIGa as shown in FIG. 30 which is composed of the four first individual intermediate key group mkI1, mkI2, mkI3 and mkI4. After that, it encrypts the first individual intermediate key group MKIGa in association with the term identifier PID_1 based on the term key PK_1 which is held by the key distribution center 11, and generates a first encrypted individual intermediate key group ENCMKIGa. Likewise, individualized variables x and y are generated for the others: the first system secret variables s_2 to s_k; the second system secret variables t_2 to t_k; the third system secret variables u_2 to u_k; the fourth system secret variables v_2 to v_k and the fifth system secret variables c_2 to c_k. Also, the followings are generated based on the first individual intermediate key generation equation: the first individual intermediate key mkI1_2 to mkI1_k, mkI2_2 to mkI2_k, mkI3_2 to mkI3_k, and mkI4_2 to mkI4_k. After that, it generates the first individual intermediate key group MKIGa_2 which is composed of the first individual intermediate keys, the first individual intermediate key group equals to (mkI1_2||mkI2_2||mkI3_2||mkI4_2), MKIa_3, ..., MKIa_k. After that, it encrypts the first individual intermediate key group MKIGa_2 in association with the respective term identifiers PID_2, ..., PID_k based on the term keys PK_2, ..., PK_n, and generates the first encrypted individual intermediate key group ENCMKIGa_2, ... ENCMKIGa_k. Lastly, a value which is obtained by combining the sets of an encrypted first individual intermediate key group and an associated term identifier is previously embedded as an encrypted first individual intermediate key group set ENCMKIGSa, the value being shown in FIG. 29 and represented as {(ENCMKIGa_1, PID_1)||(ENCMKIGa_2, PID_2) ||,...||(ENCMKIGa_k, PID_k)}. Note that, the respective encrypted first individual intermediate key group sets (ENCMKIGSa to ENCMKIGSn) are made to be the values which differ among the receiving devices 13a to 13n. This can be realized by, for example, generating such individualized variables (x, y) which are different among the respective receiving devices 13a to 13n and the respective term identifiers PID_1 to PID_k, and using them.

(5) Individual Intermediate Key Storage Unit 1305a

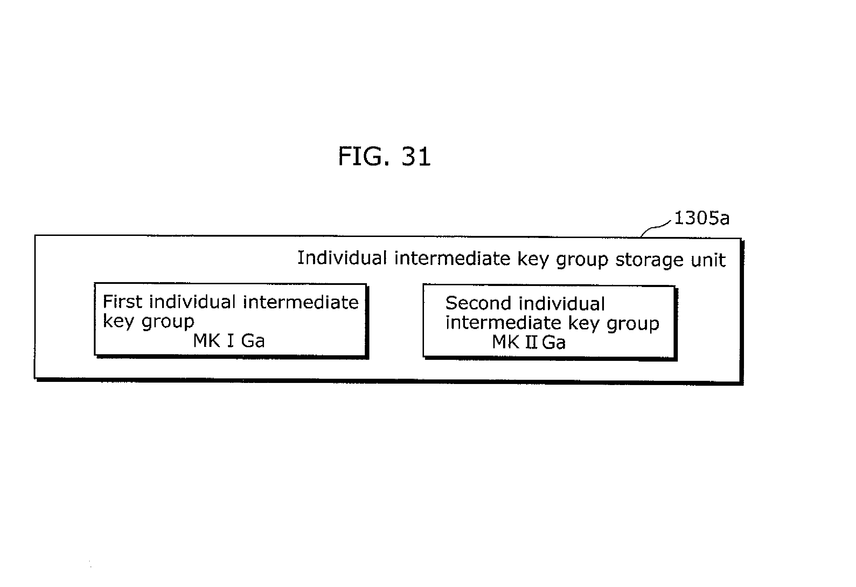

As shown in FIG. 31, the individual intermediate key storage unit 1305a holds a first individual intermediate key group MKIGa and a second individual intermediate key group MKIIGa. It is possible to access this individual intermediate key storage unit 1305a through first individual intermediate key group obtainment unit 1302a and the second individual intermediate key group obtainment unit 1303a.

(6) Common information Receiving Unit 1306

In the case where the common information receiving unit 1306 receives common information ECM from the server 12, it outputs the received common information ECM to the second selection unit 1307a.

(7) Second Selection Unit 1307a

In the case where the second selection unit 1307a receives common information ECM from the common information receiving unit 1306, it determines which one of the first common information ECMI and the second common information ECMII is the common information ECM, based on the common information identifier (ECMIDI or ECMIDII) included in the common information ECM. In the case where the common information ECM is the first individual information ECMI, it obtains the first individual intermediate key group MKIGa from the individual intermediate key storage unit 1305a, and outputs the first common information ECMI and the first individual intermediate key group MKIGa to the first shared key obtainment unit 1308a. In contrast, in the case where the common information ECM is the second individual information ECMII, it obtains the second individual intermediate key group MKIIGa from the individual intermediate key storage unit 1305a, and outputs the second common information ECMII and the second individual intermediate key group MKIIGa to the second shared key obtainment unit 1309a.

(8) First Shared Key Obtainment Unit 1308a

In the case where the first shared key obtainment unit 1308a receives the first individual intermediate key group MKIGa and the first common information ECMI from the second selection unit 1307a, it extracts the time variable PRG from the first common information ECMI first. After that, it extracts time variables r1, r2, r3 and r4 from the time variable group PRG, and then extracts the first individual intermediate keys mkI1, mkI2, mkI3 and mkI4 from the first individual intermediate key group MKIGa. After that, it generates a shared intermediate key SMK based on the previously provided receiving device shared intermediate key generation equation "SMK=(r1 + mkI1)*(r1 + mkI2) + (r1 + mkI3)*(r1 + mkI4) mod N". After that, it extracts an encrypted shared key ENCSK from the first common information ECMI, decrypts the encrypted shared key ENCSK based on the generated shared intermediate key SMK, and obtains the shared key SK. After that, it outputs the shared key SK to the output unit 1310.

(9) Second Shared Key Obtainment Unit 1309a

In the case where the second shared key obtainment unit 1309a receives the second individual intermediate key group MKIIGa and the second common information ECMII from the second selection unit 1307a, it extracts the second encrypted shared keys ENCSK1, ENCSK2, ENCSK3, ENCSK4, ENCSK 5 and ENCSK 6 from the second encrypted shared key group ENCSKG. After that, it selects the encrypted sentence obtained by encrypting the shared key SK using the second system secret key from among the second encrypted shared keys ENCSK1, ENCSK2, ENCSK3, ENCSK4, ENCSK 5 and ENCSK 6, based on the second system secret key included in the second individual intermediate key group MKIIGa, decrypts the selected one of encrypted sentences, and obtains the shared key SK. After that, it outputs the shared key SK to the output unit 1310. Note that, as a method for selecting one encrypted sentence from among the second encrypted shared keys ENCSK1, ENCSK2, ENCSK3, ENCSK4, ENCSK 5 and ENCSK 6, a method of selecting one from among the second encrypted shared keys ENCSK1 to ENCSK6 based on the second system secret key identifiers so that: (a) the second system secret key identifiers are included in the second encrypted shared key group ECSKG in the second common information generation unit 126, the second system secret key identifiers being intended for identifying the second system secret keys which have been used for encrypting the shared keys and being associated with the second encrypted shared keys respectively; and likewise, (b) the second system secret key identifiers which are associated with the included second system keys are included in the second individual intermediate key group MKIIGa.

(10) Output Unit 1310

In the case where the output unit 1310 receives a shared key SK from one of the first shared key obtainment unit 1308a and the second shared key obtainment unit 1309a, it outputs the received shared key SK to outside.

<Operation of Receiving Device 13>

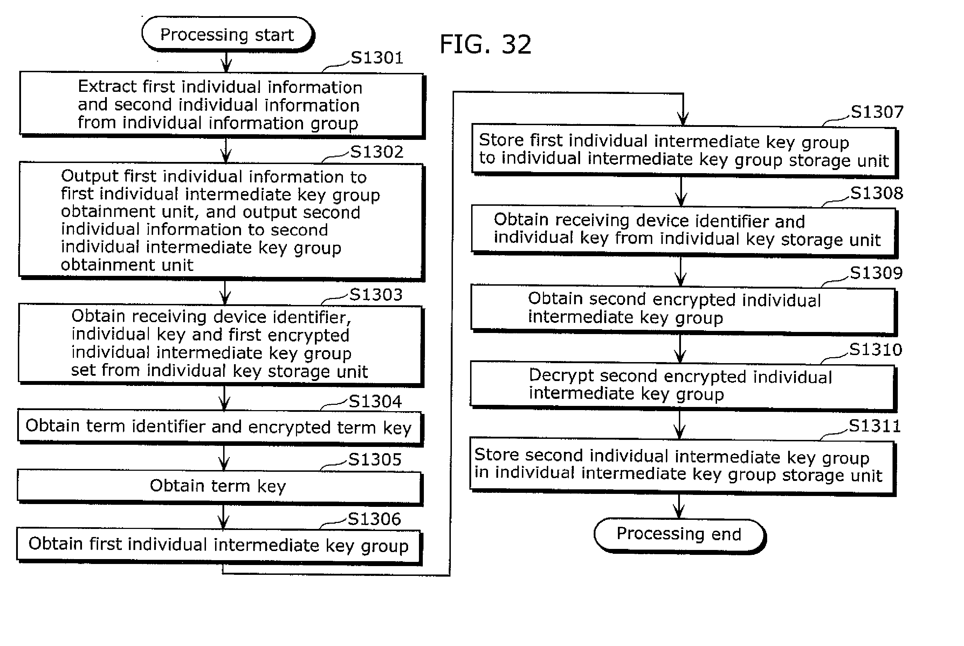

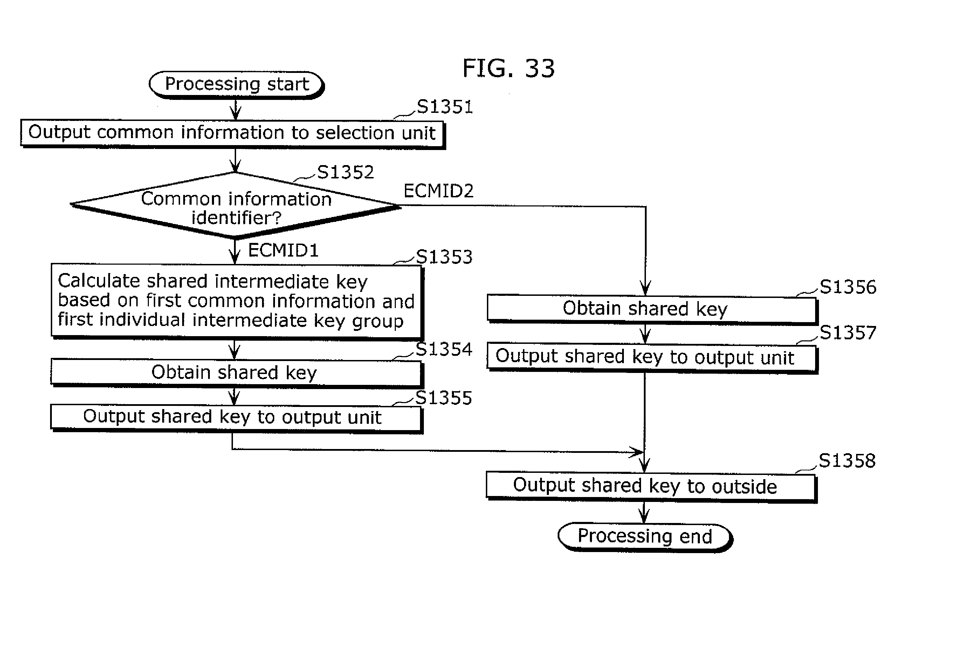

The structure of the receiving device 13a has been described up to this point, and here will be described the operation of the receiving device 13a. First, how the receiving device 13a performs the operation of obtaining the first individual intermediate key group MKIGa and the second individual intermediate key group MKIIGa at the time of receiving an individual information group EMMG will be described with reference to the flow chart shown in FIG. 32. Next, how the receiving device 13a performs the operation of obtaining the first individual intermediate key group MKIGa and the second individual intermediate key group MKIIGa at the time of receiving common information ECM will be described with reference to the flow chart shown in FIG. 33.

<Operation Performed when Individual Information Group EMMG has been Received from Key Distribution Center 11>

The individual information receiving unit 1301 which has received the individual information group EMMG from the key distribution center 11 extracts the first individual information EMMI and the second individual information EMMII from the received individual information group EMMG (S1301).

The individual information receiving unit 1301 outputs the first individual information EMMI to the first individual intermediate key group obtainment unit 1302a, and outputs the second individual information EMMII to the second individual intermediate obtainment unit 1303a (S1302).

The first individual intermediate key group obtainment unit 1302a which has received the first individual information EMMI obtains a receiving device identifier AIDa, an individual key IKa, and a first encrypted individual intermediate key group set ENCMKIGSa from the individual key storage unit 1304a (S1303).

The first individual intermediate key group obtainment 1302a obtains a term identifier PID_i and the encrypted term key ENCPKa corresponding to the receiving device identifier AIDa which has been stored in the individual key storage unit 1304 (S1304).

The first individual intermediate key group obtainment unit 1302a decrypts the encrypted term key ENCPKa based on the individual key IKa which has been stored in the individual key storage unit 1304, and obtains the term key PK_i (S1305).

The first individual intermediate key group obtainment unit 1302a obtains the encrypted first individual intermediate key group corresponding to the term identifier PID_i in the first individual information EMMI from among the first encrypted individual intermediate key group set ENCMKIGSa, decrypts the first encrypted individual intermediate key group based on the term key PK_i, and obtains the first individual intermediate key group MKIGa (S1306).

The first individual intermediate key obtainment unit 1302a stores the decrypted first individual intermediate key group MKIGa in the individual intermediate key storage unit 1305a (S1307).

The second individual intermediate key group obtainment unit 1303a which has received the second individual information EMMII from the individual information receiving unit 1301 obtains the receiving device identifier AIDa and the individual key IKa from the individual key storage unit 1304a (S1308).

The second individual intermediate key group obtainment unit 1303a obtains the second encrypted individual intermediate key group ENCMKIIGa corresponding to the received device identifier AIDa which has been stored in the individual key storage unit 1304 from the received second individual information EMMII (S1309).

The second individual intermediate key obtainment unit 1303a decrypts the second encrypted individual intermediate key group ENCMKIIGa based on the individual key IKa (S1310).

The second individual intermediate key group obtainment unit 1303a stores the decrypted second individual intermediate key group MKIIGa in the individual intermediate key storage unit 1305a (S1311).

<<Operation Performed when Common information Group ECM has been Received from Server 12»

The common information receiving unit 1306 which has received the common information ECM from the server 12 outputs the received common information ECM to the second selection unit 1307a (S1351).

The second selection unit 1307a which has received the common information ECM from the common information receiving unit 1306 obtains the common information identifier included in the common information ECM. In the case where the common information identifier is ECMIDI, it considers the common ECM as the first common information ECMI, and obtains the first individual intermediate key group MKIGa from the individual intermediate key storage unit 1305a. It outputs the first individual intermediate key group MKIGa and the first common information ECMI to the first shared key obtainment unit 1308a, and goes to Step 1352. In the case where the common information identifier is ECMIDII, it considers the common information ECM as the second common information ECMII, and also obtains the second individual intermediate key group MKIIGa from the individual intermediate key storage unit 1305a. It outputs the second individual intermediate key group MKIIGa and the second common information ECMII to the second shared key obtainment unit 1309a, and goes to Step 1356 (S1352).

The first shared key obtainment unit 1308a which has received the first individual intermediate key group MKIGa and the first common information ECMI, extracts a time variable PRG from the first common information ECMI, and then extracts the time variables r1, r2, r3 and r4 from the time variable group PRG. After that, it extracts the first individual intermediate keys mkI1, mkI2, mkI3 and mkI4 from the first individual intermediate key group MKIa. After that, it calculates a shared intermediate key SMK based on the previously provided receiving device shared intermediate key generation equation "SMK=(r1 + mkI1)*(r2 + mkI2)+(r3+mkI3)*(r4+mkI4) mod N" (S1353).

The first shared key obtainment unit 1308a extracts an encrypted shared key ENCSK from the first common information ECMI, decrypts the encrypted shared key ENCSK based on the generated shared intermediate key SMK, and obtains the shared key SK (S1354).

The first shared key obtainment unit 1308a outputs the shared key SK to the output unit 1310, and goes to Step 1358 (S1355).

The second shared key obtainment unit 1309a which has received the second individual intermediate key group MKIIGa and the second common information ECMII extracts, from the encrypted shared key group ENCSKG, the second encrypted shared keys ENCSK1, ENCSK2, ENCSK3, ENCSK4, ENCSK5, and ENCSK6. After that, it decrypts one encrypted sentence corresponding to one of the six second encrypted shared keys ENCSK1, ENCSK2, ENCSK3, ENCSK4, ENCSK5, and ENCSK6 (S1356).

The second shared key obtainment unit 1309a outputs the shared key SK to the output unit 1310 (S1357).

In the case where the output unit 1310 receives a shared key SK from one of the first shared key obtainment unit 1308a and the second shared key obtainment unit 1309a, it outputs the received shared key SK to the outside (S1358).

The structure and the operation of the receiving device 13a which is a component of the key distribution system 1 have been described up to this point. Note that the difference between the receiving device 13a and the receiving devices 13b to 13n is as follows.

(i) The respective receiving devices 13a to 13n have a different receiving device identifier, a different individual key, and a different first encrypted intermediate key group set which are obtained from the individual key storage unit 1304a in order that the first individual intermediate key group obtainment unit 1302a obtains the first individual intermediate key group.

( ii ) The respective receiving devices 13a to 13n have a different receiving device identifier and an individual key which are obtained from the individual key storage unit 1304a in order that the second individual intermediate key group obtainment unit 1303a obtains the second individual intermediate key group.

(iii) The respective receiving devices 13a to 13n have different receiving device identifiers (AIDa to AIDn), individual keys (IKa to IKn), and first encrypted individual intermediate key group sets which are stored in the individual key storage unit 1304a.

(iv) The respective receiving devices 13a to 13n have different first individual intermediate key groups and different second individual intermediate key groups which are stored in the individual intermediate key storage unit 1305a.

(v) The respective receiving devices 13a to 13n have different first individual intermediate key groups and second individual intermediate key groups which are obtained from the individual intermediate key storage unit 1305a by the second selection unit 1307a.

(vi) The receiving devices 13a to 13n each has a different first individual intermediate key group which is used at the time of obtaining a shared key SK in the first shared key obtainment unit 1308a.

(vii) The receiving devices 13a to 13n each has a different second individual intermediate key group which is used at the time of obtaining a shared key SK in the second shared key obtainment unit 1309a.

<Operation Verification of First Embodiment>

All the receiving devices 13a to 13n can derive the shared keys SK with a same value in the first embodiment even though one of the first individual intermediate key groups MKIGa to MKIGn and one of the second individual intermediate key groups MKIIGa to MKIIGn each of which takes a different value are assigned to the respective receiving devices 13a to 13n. The reason will be described.

First, the case of using the first common information ECMI and the first individual intermediate key groups MKIGa to MKIGn will be described. The respective first individual intermediate key groups MKIGa to MKIGn are composed of the first individual intermediate keys mkI1, mkI2, mkI3 and mkI4 which satisfy the previously provided four first individual intermediate key generation equations. Also, the time variable group PRG is generated so that it satisfies the four time variable generation equations. In this way, the receiving device shared intermediate key generation equation can be transformed as follows.

$$SMK = (r1 + mkI1)*(r2 + mkI2) + (r3 + mkI3)*(r4 + mkI4)$$
$$= \{s*(z+x)+v*m\}*\{t*(w+y)+u*n\}+\{u*(z-x)+t*m\}*\{v*(w-y)+s*n\}$$
$$= \{s*(z+x)*t*(w+y)+u*(z-x)*v*(w-y)\}+\{u*n*s*(z+x)+ +v*m*t*(w+y)+s*n*u*(z-x)+t*m*v*(w-y)\}+u*v*m*n+s*t*m*n$$

Here, by using the condition of "x*y=c", the above equation can be transformed to

$$= 2*s*t*(z*w+c*n*m)+2*(u*s*n*z+t*v*m*w)$$

This equation is composed of only the parameters which are common in the respective receiving devices 13a to 13n (in other words, the individualized variables x and y are not included). Therefore, in all the respective receiving devices 13a to 13n the common value is derived from the shared intermediate keys SMK. Also, this matches the server shared intermediate key generation equation "SMK=2*s*t*(z*w+c*n*m)+2*(u*s*n*z+t*v*m*w)".

Next, the case where the second common information ECMII and the second individual intermediate groups MKIIGa to MKIIGn will be described. The second individual intermediate key groups MKIIGa to MKIIGn are composed of one of the second system secret keys which have been previously provided (they are six in the case of first embodiment). Also, the second common information ECMII includes the encrypted sentence of the shared key SK which has been encrypted using the respective second system secret keys. Therefore, in all of the receiving devices 13a to 13n which hold one of the second system secret keys, the shared key SK can be derived.

<Effect of First Embodiment>
In the first embodiment of the present invention, the shared keys SK with a same value which are owned by all of the receiving devices are generated from each of the first individual intermediate key groups and the second individual intermediate key groups which are unique to each receiving device. In this way, if individual information of the first individual intermediate key groups and the second individual intermediate key groups is forged, it becomes possible to identify the receiving device as the leakage source using the other individual intermediate keys, and thus the safety can be improved.

(Second Embodiment)
The key distribution system 2 as an embodiment of the present invention will be described. In the key distribution system 1 in the first embodiment, a shared key has been obtained by selecting one of the two shared key obtainment methods at the time when the respective output devices 13a to 13n receive the common information ECM. However, in the content distribution system 2 in the second embodiment, a shared key is obtained using both the two shared key obtainment methods at the time of receiving the ECM. In this regards, this second embodiment is much different from the first embodiment.

Details of the content distribution system 2 which is an embodiment of the content distribution system of the present invention will be described below.

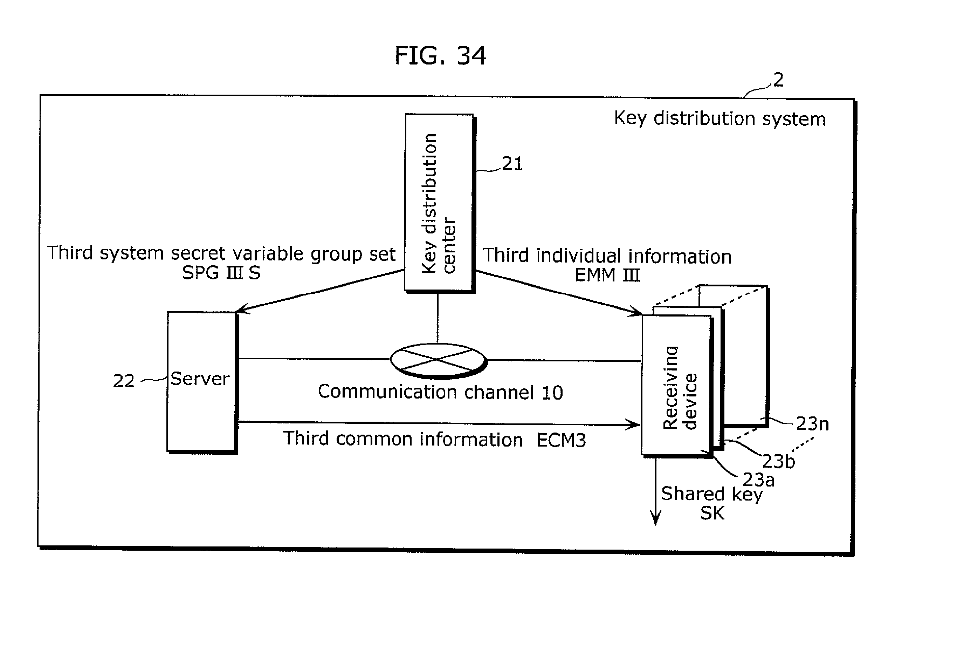

<Structure of Content Distribution System 2>
As shown in FIG. 34, the key distribution system 2 includes: (a) a communication channel 10 which is the same as the one in the first embodiment; and (b) a key distribution center 21, a server 22 and receiving devices 22a to 22n which are different from the ones in the first embodiment. The roles of the respective components are the same as the ones of the key distribution center 11, the server 12 and the output devices 13a to 13n in the key distribution system 1 which is the first embodiment.

Details of the key distribution system 2 which is an embodiment of the key distribution system of the present invention will be described below.

Details of these components will be described. First, the structures and the operations of the key distribution center 21, the server 22 and the receiving devices 23a to 23n will be described with reference to figures.

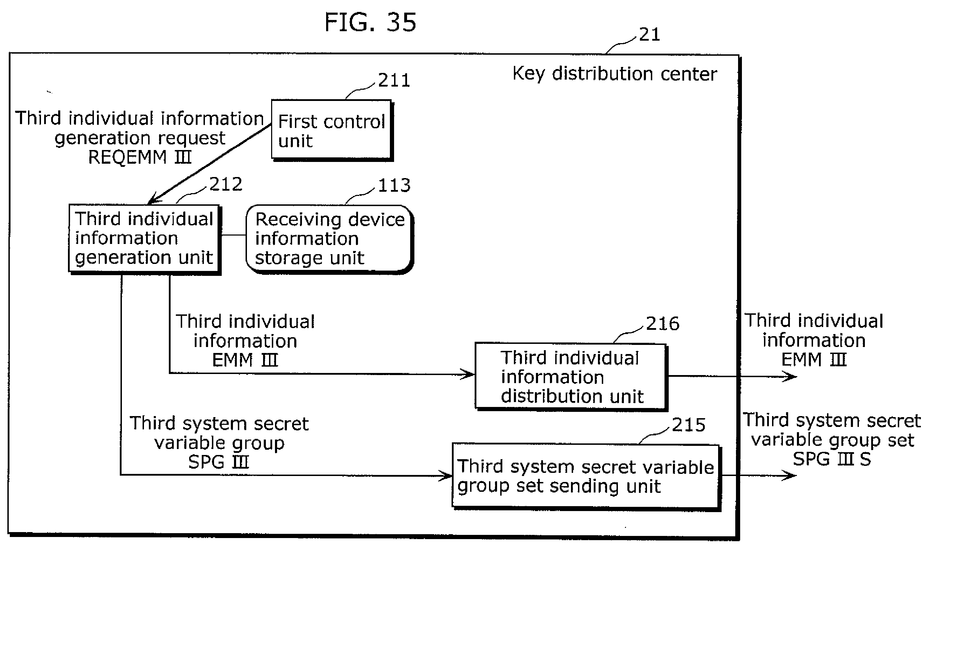

<Structure of Key Distribution Center 21>
As shown in FIG. 35, the key distribution center 21 includes: a fourth control unit 211; a third individual information generation unit 212; a receiving device information storage unit 113; a system secret variable group set sending unit 215; and an individual information group distribution unit 216. Note that the receiving device information storage unit 113 is the same as the receiving device information storage unit 113 in the key distribution system 2 in the first embodiment, and thus the description will be omitted.

(1) First Control Unit 211
In the case where the first control unit 211 satisfies the previously provided individual information update condition, and in the case where the key distribution center 23 starts its operation, it outputs the third individual information generation request REQEMMIII to the third individual information generation unit 212. For example, in the case where the individual information update condition is "for every term which is specified (example: everyday and every year)", the counter can be updated by means that the first control unit 211 has a counter. In the case where the individual information update condition is "when a signal from outside is received", the counter can be updated by the first control unit 211 which has a receiving unit for receiving a signal from outside.

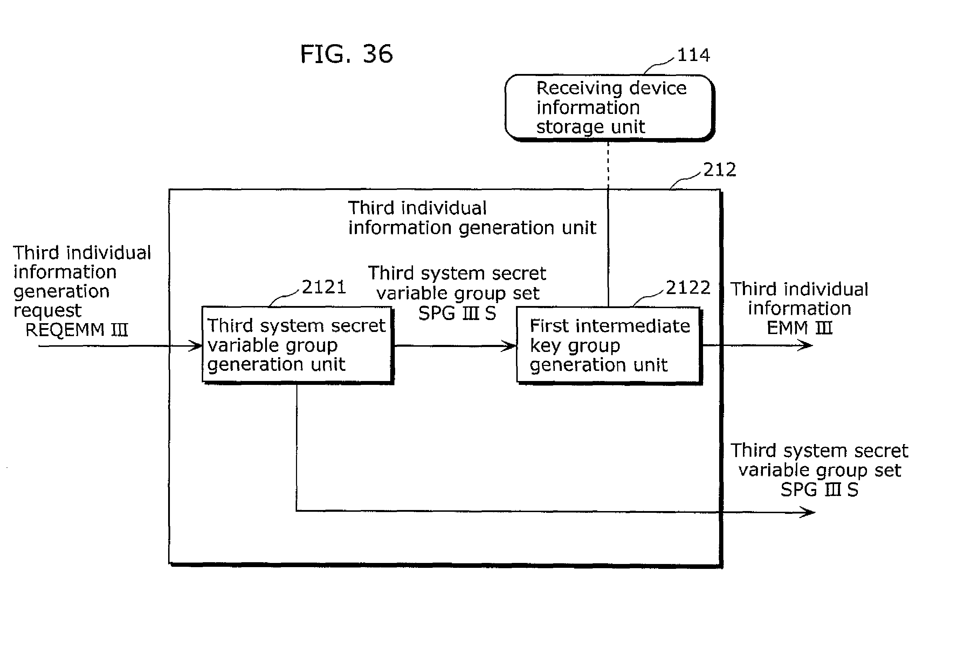

(2) Third Individual Information Generation Unit 212
As shown in FIG. 36, the third individual information generation unit 212 includes: a third system secret variable group generation unit 2121; and a first intermediate key group generation unit 2122.

(2-1) Third System Secret Variable Group Generation Unit 2121
In the case where the third system secret variable group generation unit 2121 receives the third individual information generation request REQEMMIII from the first control unit 211, it generates the first system secret variable groups {SPGI1, SPGI2, SPGI3, SPGI4, SPGI5 and SPGI6} for the respective six first system secret variable group identifiers SPGIID1 to SPGIID6. Note that, as to the structure of the respective first system secret variable groups SPGIi (SPGI1 to SPGI6), the respective groups are composed of five first system secret variables ($s_i, t_i, u_i, v_i, c_i$: i is 1 to 6) like in the key distribution system 1 of the first embodiment as shown in FIG. 5. Also, the respective first system secret variables SPGI1 to SPGI6 are generated in advance so that they satisfy the first system secret variable generation equation "$s_i * t_i = u_i * v_i \bmod N$: i is 1 to 6". For example, the five first system secret variables and the modulus N are natural numbers of, for example, 128 bits. Also, the value of the modulus N here is the same as the value of the modulus N which has been previously provided, as the common value, to the later-described third common information generation unit 225 and third shared key generation unit 2308a, and it is, for example, $2^{\{128\}}$. Here, "^" is power operation. For example, $2^{\{4\}}$ means 16, and it is used in the same meaning hereinafter.

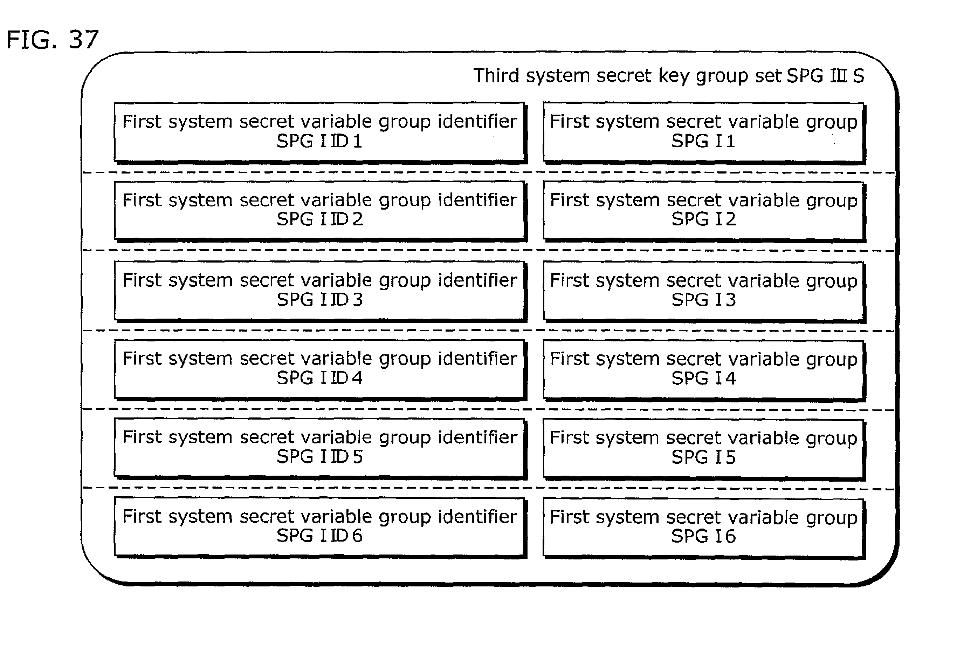

The first system secret variable group identifiers SPGID1 to SPGIID6 are identifiers which are associated with the respective first system secret variable groups SPGI1 to SPGI6, and for example, they are respectively different natural numbers. For example, the six first system secret variable group identifiers SPGIID1 to SPGIID6 may be natural numbers of 1 to 6 or random numbers. Non-patent Reference 3 describes in detail the method of generating random numbers. After that, as shown in FIG. 37, it generates the third system secret variable group SPGIII which is composed of the six sets of a first system secret variable group identifier and a first system secret variable group, the sets being {SPGIID1, SPGI1}, {SPGIID2, SPGI2},..., {SPGIID6, SPGI6}, and outputs them to the third system secret variable group set sending unit 215 and the first intermediate key group generation unit 2212.

(2-2) First Intermediate Key Group Generation Unit 2122

In the case where the first intermediate key group generation unit 2122 receives the third system secret variable group SPGIII from the third system secret variable group generation unit 2121, it accesses the receiving device information storage unit 113, and obtains the receiving device identifiers AIDa to AIDn. After that, it firstly selects, for the receiving device identifier AIDa, one first system secret key group from among the six first system secret key groups SPGI1 to SPGI6 which are included in the third system secret variable groups SPGIII. As an example method of selecting a first system secret key group, there is a method of selecting one at random, and this can be realized using a random number. Here, as an example, it is assumed that the key selected for the receiving device identifier AIDa is considered as the first secret variable SPGIi (SPGIi is one of the SPGI1 to SPGI6) and that the first secret variable SPGIi is composed of the six first system secret variables $s\_i$, $t\_i$, $u\_i$, $v\_i$ and $c\_i$. After that, it generates two individualized variables x and y which satisfy a previously provided individualized variable generation equation "$x*y=c\_i \bmod N$" based on the six first system secret variables $s\_i$, $t\_i$, $u\_i$, $v\_i$ and $c\_i$. Here, as an example method of generating two individualized variables x and y, there is a method of generating them using random numbers. Also, the individualized variables x and y are, for example, natural numbers of 128 bits. Also, "*" represents multiplication". For example, 2*5 means 10, and it is used in the same meaning hereinafter. As an example method of calculating these individualized variables x and y, there is a method of generating an individualized variable x as a random integer value, by substituting the individualized variable x in the individualized variable generation equation "$x*y=c\_i \bmod N$" so as to calculate the other individualized variable y. When a random individualized variable x is selected, the corresponding individualized variable y is surely present. After that, it generates four first individual intermediate keys mkI1, mkI2, mkI3 and mkI4 using the individualized variables x and y based on the previously provided four first individual intermediate key generation equations "$mkI1=s\_i*x \bmod N$", "$mkI2=t\_i*y \bmod N$", "$mkI3=u\_i*x \bmod N$", and "$mkI4=v\_i1*y \bmod N$". After that, it generates the first individual intermediate key group MKIGa which is composed of the four first individual intermediate keys mkI1, mkI2, mkI3 and mkI4 as shown in FIG.30. After that, it encrypts the first individual intermediate key group MKIGa based on the individual key IKa, considers the encrypted sentence as the first encrypted individual intermediate key group ENCMKIGa=Enc (IKa, MKIGa), and associates it with the first system secret variable group identifier SPGIIDi (SPGIIDi is one of SPGIID1 to SPGIID6 corresponding to the receiving device identifier AIDa and the first secret variable SOGIi. After that, as also to the other receiving device identifiers AIDb to AIDn, it considers the encrypted sentence as the first encrypted individual intermediate key groups ENCMKIGb, ... ENCMKIGn, and associates them with the respective receiving device identifiers AIDb to AIDn and the first system secret variable group identifier SPGIIDi. After that, it generates the third individual information EMMIII which is composed of one of the receiving device identifiers AIDa to AIDn, one of the first encrypted individual intermediate key groups ENCMKIGa to ENCMKIGn and one of the first system secret variable group identifiers, and outputs the third individual information EMMIII to the individual information group distribution unit 216. Here, the encryption algorism which is used for encrypting the first individual intermediate key group is, for example, a DES encryption method which is disclosed in Non-patent Reference 2. It uses the same method as the method of decryption algorism which is used at the time of decrypting the first encrypted individual intermediate key in the third individual intermediate key group obtainment unit 1303a of the later-described receiving devices 23a to 23n.

(3) System Secret Variable Group Set Sending Unit 215

In the case where the system secret variable group set sending unit 215 receives the third system secret variable group SPGIII from the third system secret variable group selection unit 2121 of the third individual information generation unit 212, it sends the third system secret variable group set SPGIII to the server 22.

(4) Individual Information Group Distribution Unit 216

In the case where the individual information group distribution unit 216 receives the third individual information EMMIII from the first intermediate key group generation unit 2122 of the third individual information generation unit 212, it distributes the third individual information EMMIII to the receiving devices 23a to 23n.

<Operation of Key Distribution Center 21>

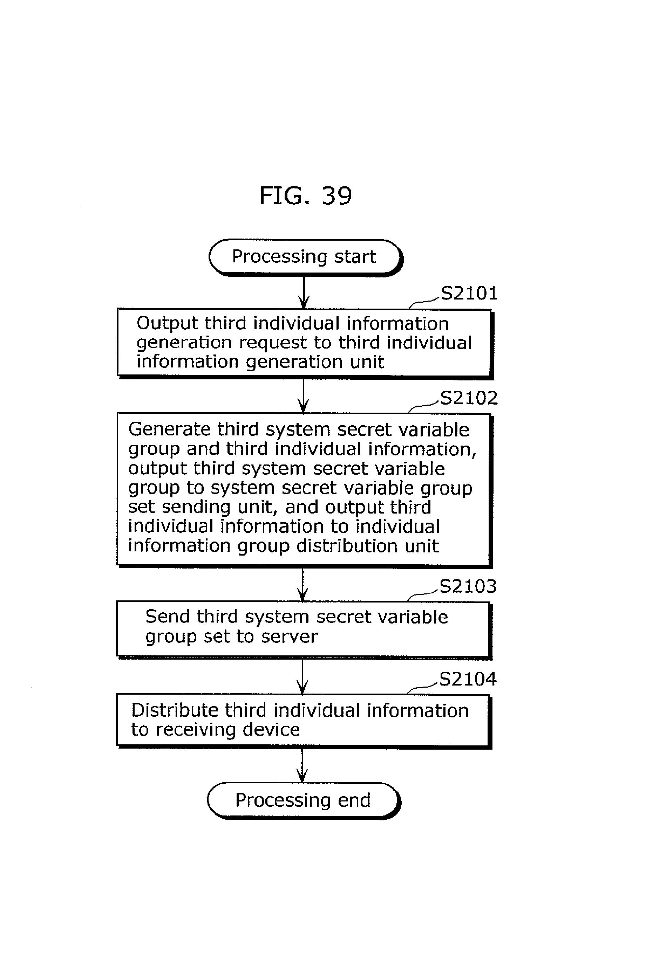

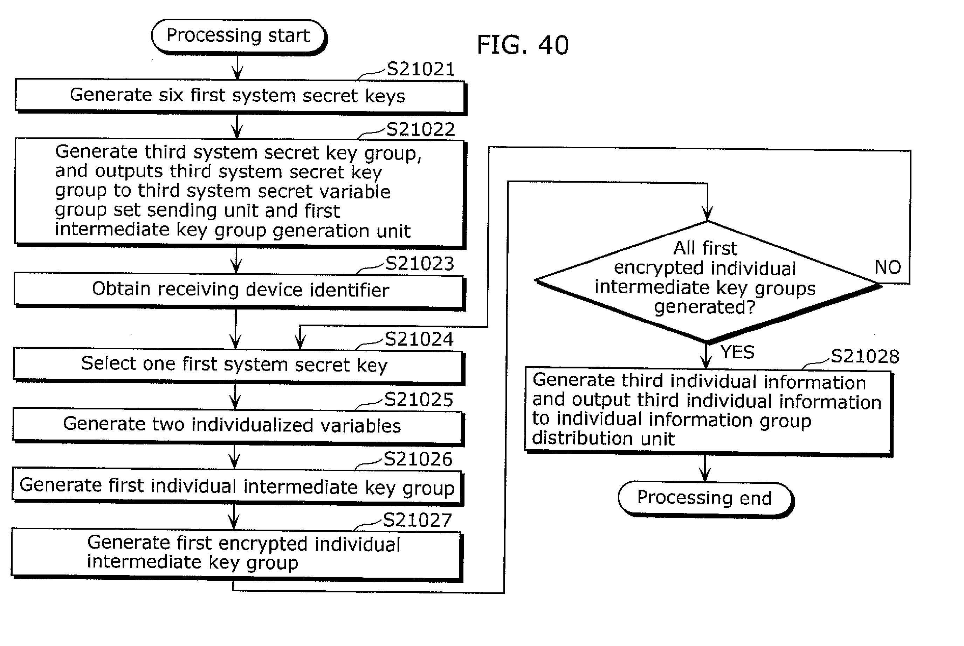

The structure of the key distribution center 21 has been described up to this point, and here will be described the operation of the key distribution center 21. Here, how the key distribution center 21 starts its operation when distributing, to the server 22 and the receiving devices 23a to 23n, the information necessary for distributing and receiving a shared key in one of: the case where the previously provided individual information update condition is satisfied; the case where the key distribution center 21 starts its operation; and another case, will be described with reference to the flow chart shown in FIG. 39. Also, how the third individual information generation unit 212 operates when generating the third system secret variable group SPGIII and the third individual information EMMIII will be described with reference to the flow chart shown as FIG. 40.

<Operation of Key Distribution Center 21 in Distributing Key Information>

The first control unit 211 outputs the third individual information generation request REQEMMIII to the third individual information generation unit 212 (S2101).

The third individual information generation unit 212 generates the third system secret variable group SPGIII and the third individual information EMMIII, outputs the third system secret variable group SPGIII to the third system secret variable group set sending unit 215, and outputs the third individual information EMMIII to the third individual information distribution unit 216, according to the flow chart (which will be described below in detail) shown as FIG. 40 (S2102).

The third system secret variable group sending unit 215 which has received the third system secret variable group SPGIII sends the third system secret variable group SPGIII to the server 22 (S2103).

The third individual information distribution unit 216 which has received the third individual information EMMIII distributes the third individual information EMMIII to the receiving devices 23a to 23n to complete it (S2104).

<<Operation of Key Distribution Center 21 in Generating Third System Secret Variable Group SPGIIIS and Third Individual Information EMMIII (Detailed Description of Step 2102)>>

The third system secret variable group generation unit 2121 which has received the third individual information generation request REQEMMIII generates the first system secret variable group {SPGI1, SPGI2, SPGI3, SPGI4, SPGI5 and SPGI6} each of which is composed of the five first system secret variables ($s_i$, $t_i$, $u_i$, $v_i$, $c_i$: i is 1 to 6), and respectively associates them with the first system secret variable group identifiers SPGIID1 to SPGIID6 (S21021).

The third system secret variable group generation unit 2121 generates the third system secret variable group SPGIII which is composed of the six sets of a first system secret variable group identifier and a first system secret variable group, the sets being {SPGIID1, SPGI1}, {SPGIID2, SPGI2},... {SPGIID6, SPGI6}, and then outputs the third system secret variable group set sending unit 215 and the first intermediate key group generation unit 2212 (S1022).

The first intermediate key group generation unit 2122 which has received the third system secret variable group SPGIII accesses the receiving device information storage unit 113 and obtains the receiving device identifiers AIDa to AIDn (S21023).

The first intermediate key group generation unit 2122 which has received the third system secret variable group SPGIII selects a first system secret key group SPGIi (i is one of 1 to 6) from among the six first system secret key groups SPGI1 to SPGI6 which are included in the third system secret variable group SPGIII, and extracts five first system secret variables $s_i$, $t_i$, $u_i$, $v_i$ and $c_i$ (S21024).

The first intermediate key group generation unit 2122 generates two individualized variables x and y which satisfy the previously provided individualized variable generation equation "$x*y=c_i \bmod N$" based on the five first system secret variables $s_i$, $t_i$, $u_i$, $v_i$ and $c_i$ (S21025).

The first intermediate key group generation unit 2122 generates four first individual intermediate keys mkI1, mkI2, mkI3 and mkI4 using the individualized variables x and y based on the previously provided four first individual intermediate key generation equations "$mkI1=s_i*x \bmod N$", "$mkI2=t_i*y \bmod N$", "$mkI3=-u_i*x \bmod N$" and "$mkI4=-v_{i1}*y \bmod N$". After that, it generates the first individual intermediate key group MKIGa which is made up of the four first individual intermediate keys mkI1, mkI2, mkI3 and mkI4 as shown in FIG. 30 (S21026).

The first intermediate key group generation unit 2122 encrypts the first individual intermediate key group based on the individual key, considers the encrypted sentence as the first encrypted individual intermediate key group, and assigns it to the receiving device identifiers to which a first encrypted individual intermediate key group has not yet been assigned (S21027).

In the case where first encrypted individual intermediate key groups are assigned to all the receiving device identifiers AIDa to AIDn, the first intermediate key group generation unit 2122 goes to Step 21029. In the other case where first encrypted individual intermediate key groups are assigned to all the receiving device identifiers AIDa to AIDn, the first intermediate key group generation unit 2122 returns to Step 21024 (S21028).

The first intermediate key generation unit 2122 generates the third individual information EMMIII which is composed of: one of the receiving device identifiers AIDa to AIDn; one of the first encrypted individual intermediate key groups ENCMKIGa to ENCMKIGn; and the first system secret variable group identifier, and outputs the third individual information EMMIII to the individual information group distribution unit 216 to complete it (S21029).

The structure and the operation of the key distribution center 21 which is a component of the key distribution system 2 have been described up to this point, and consequently the structure and the operation of the server 22 will be described.

<Structure of Server 22>

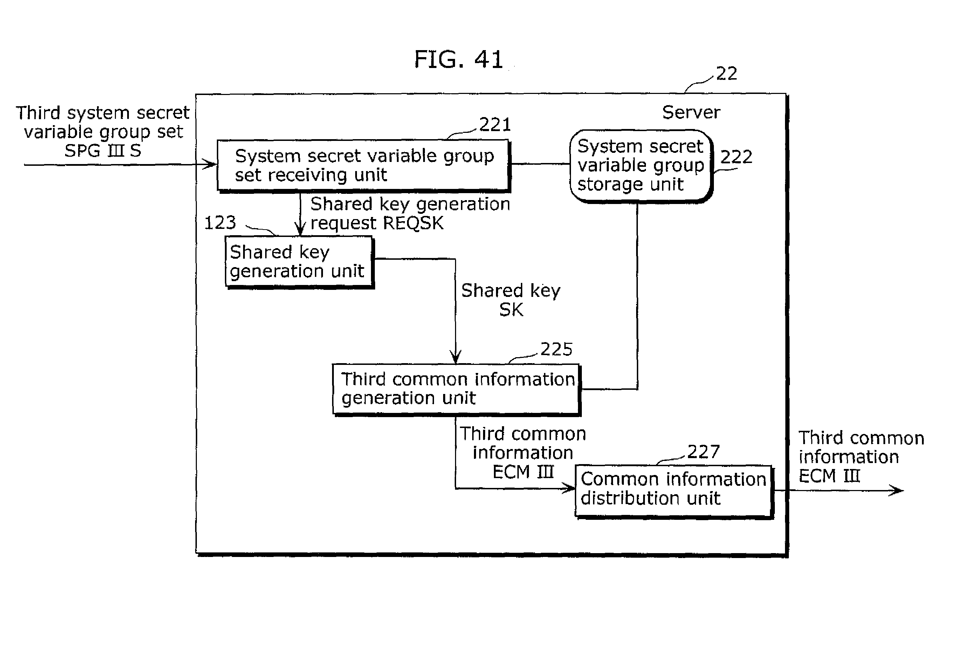

As shown in FIG. 41, the server 22 includes: a system secret variable group set receiving unit 221; a system secret variable group storage unit 222; a shared key generation unit 123; a third common information generation unit 225; and a common information distribution unit 227. Note that the shared key generation unit 123 is the same as the shared key generation unit 123 in the key distribution system 1 of the embodiment 1, and thus the description will be omitted.

(1) System Secret Variable Group Set Receiving Unit 221

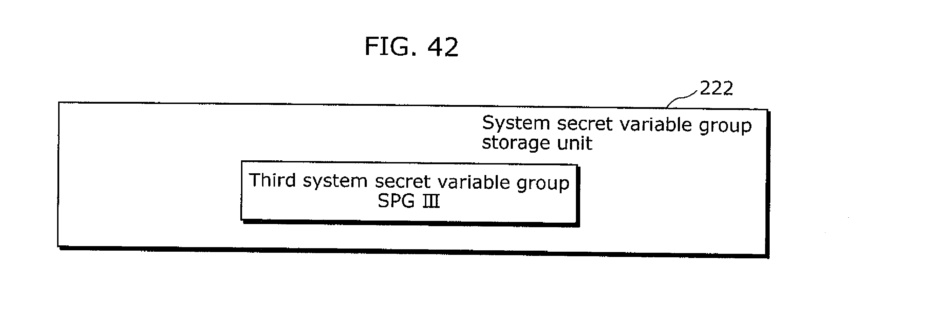

In the case where the system secret variable group set receiving unit 221 receives the third system secret variable group set SPGIIIS from the key distribution center 21, it stores the received third system secret variable group set SPGIIIS in the system secret variable group storage unit 222 as shown in FIG. 42, and outputs the shared key generation request REQSK to the shared key generation unit 123.

(2) System Secret Variable Group Storage Unit 222

The system secret variable group storage unit 222 is for storing the third system secret variable group set SPGIII as shown in FIG. 42.

(3) Third Common information Generation Unit 225

In the case where the third common information generation unit 225 receives a shared key SK from the common information generation unit selection unit 124, it accesses the system secret variable group storage unit 222 first, obtains the third system secret variable group SPGIII, and, from among the group, extracts six sets of a first system secret variable identifier and a first system secret variable group. After that, it extracts, for the first set of a first system secret variable identifier SPGIID1 and a first system secret variable group SPGI1, six first system secret variables $s\_1, t\_1, u\_1, v\_1$ and $c\_1$. After that it generates four random numbers $z, w, m$ and $n$. Here, as an example method of generating random numbers $z, w, m$ and $n$, there is a method of generating them using random numbers. Also, the respective random numbers $z, w, m$ and $n$ are natural numbers of 128 bits. After that, it generates four time variables $r1, r2, r3$ and $r4$ based on the previously provided four time variable generation equations "r1=s\_1*z+v\_1*m mod N", "r2=t\_1*w+u\_1*n N", "r3=u\_1*z+t\_1*m mod N", "r4=v\_1*w+s\_1*n N". After that it generates the time variable group PRG (this is considered as the time variable PRG1) which is shown in FIG. 20 and is composed of the generated time variables $r1, r2, r3$ and $r4$, and associates the time variable group PRG with the first system secret variable identifier SPGIID1. After that, it generates the shared intermediate key SMK based on the following previously provided server shared intermediate key generation equation:

$$\text{``SMK}=2*s\_1*t\_1*(z+w+c\_1+n*m)+2*(u\_1*s\_1*n*z+t\_1*v\_1*m*w)\ mod\ N\text{''}.$$

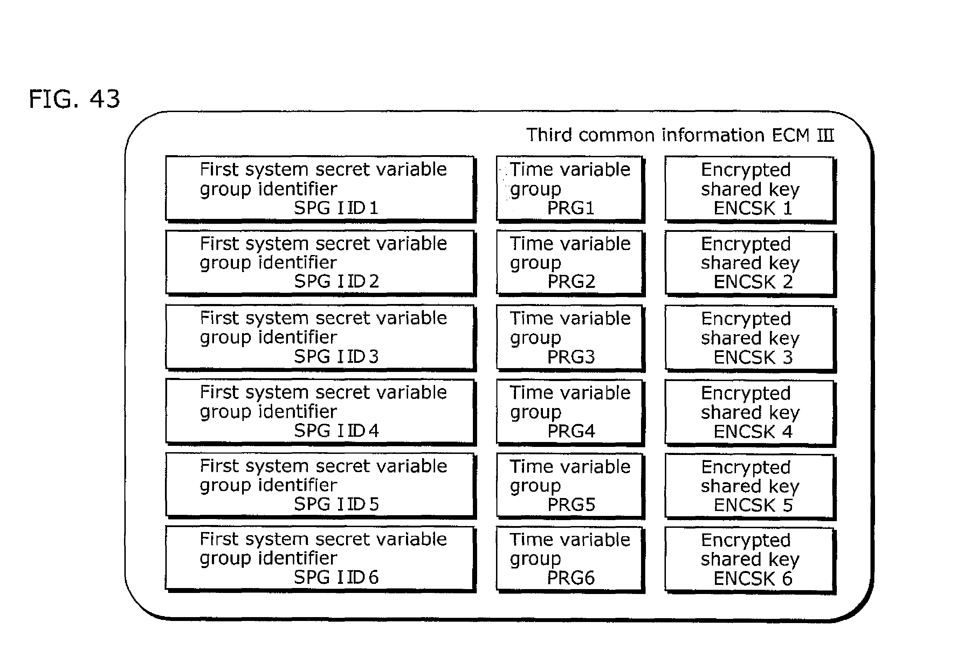

Lastly, it encrypts the received shared key SK based on the shared intermediate key SMK, generates an encrypted shared key ENCSK (this is considered as the shared intermediate key ENCSK1), and associates the encrypted shared key ENCSK with the first system secret variable identifier SPGIID1 and the time variable group PRG. After that, like in the case of the SPGIID1, it generates time variable groups PRG2 to PRG6 and encrypted shared keys ENCSK2 to ENCSK6 for the other sets of: one of the first system secret variable identifiers SPGIID2 to SPGIID6; and one of the encrypted shared keys ENCSK2 to ENCSK6. After that, it generates the third common information ECMIII which is shown in FIG. 43 and is composed of the first system secret variable identifiers SPGIID1 to SPGIID6, the time variable groups PRG1 to PRG6 and the encrypted shared keys ENCSK1 to ENCSK6, and outputs it to the common information distribution unit. Here, the encryption algorism which is used for encrypting the shared key SK is, for example, a DES encryption method, and the method used here is the same as the method of the decryption algorism which is used for decrypting the encrypted shared key ENCSK in the respective third shared key obtainment units 2308a of the later-described receiving devices 13a to 13n.

(4) Common information Distribution Unit 227

In the case where the common information distribution unit 227 receives the third common information ECMIII from the third common information generation unit 225, it distributes the third common information EMCIII to the receiving devices 23a to 23n.

<Operation of Server 22>

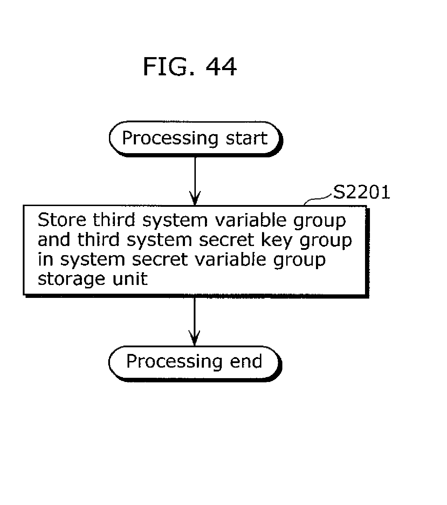

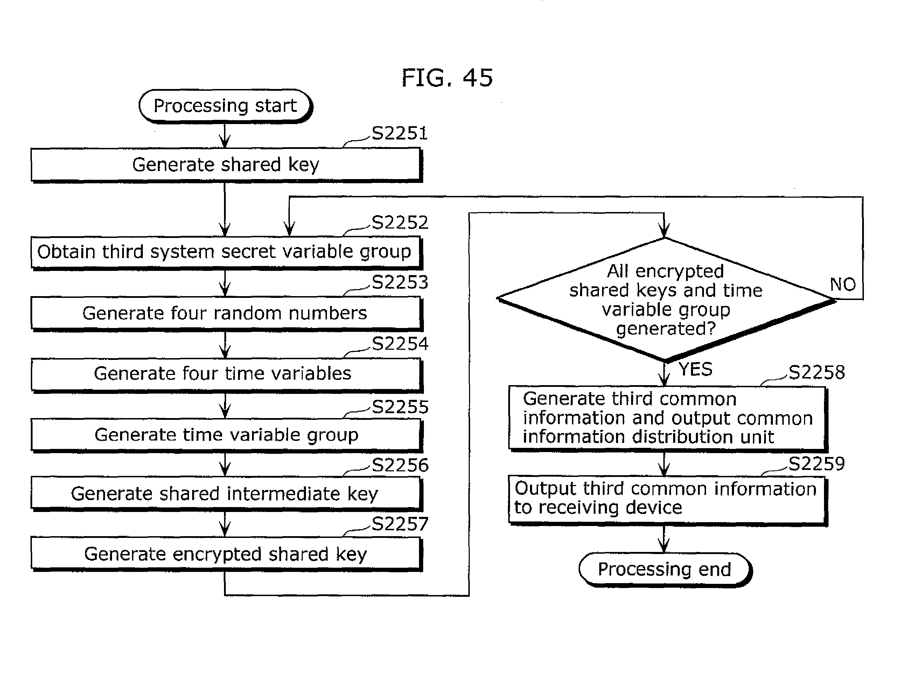

The structure of the server 22 has been described up to this point, and here will be described the operation of the server 22. First, how the server 22 operates when receiving the third system secret variable group set SPGIII which is used at the time when the shared keys SK are distributed from the key distribution center 21 will be described with reference to the flow chart shown in FIG. 44. Next, how the server 22 operates at the time of distributing the new shared keys SK to the receiving devices 23a to 23n in one of: the case where it receives the shared key generation request REQSK from the system secret variable group set receiving unit 221; and the case where it satisfies the previously provided shared key update condition, will be described with reference to the flow chart shown in FIG. 45.

<<Operation of Server 22 in Receiving Third System Secret Variable Group Set SPGIIIS from Key Distribution Center 21»
The system secret variable group set receiving unit 221 stores the received third system secret variable group set SPGIIIS in the system secret variable group storage unit 222 to complete it (S2202).

<<Operation of Server 22 in Distributing New Shared Key SK to Receiving Devices 23a to 23n>>

The shared key generation unit 123 generates a shared key SK and outputs it to the third common information generation unit 225 (S2251).
The third common information generation unit 225 accesses the system secret variable group storage unit 222, obtains the third system secret variable group SPGIII, and from among the group, extracts six sets of a first system secret variable identifier and a first system secret variable group (S2252).
The third common information generation unit 225 extracts six first system secret variables $s_i$, $t_i$, $u_i$, $v_i$ and $c_i$ for the one set of a first system secret variable identifier and a system secret variable group for which a time variable group and an encrypted shared key have not yet been generated, and after that, it generates four random numbers z, w, m and n (S2253).
The third common information generation unit 225 generates four time variables r1, r2, r3 and r4 based on the previously provided four time variable generation equations "r1=$s_i$*z+$v_i$*m mod N", "r2=$t_i$*w+$u_i$*n N", "r3=$u_i$*z+$t_i$*m mod N", "r4=$v_i$*w+$s_i$*n N" (S2254).
The third common information generation unit 225 generates a time variable group PRG which is composed of the generated time variables r1, r2, r3 and r4 (S2255).
The third common information generation unit 225 generates the shared intermediate key SMK based on the previously provided server shared intermediate key generation equation

$$\text{"SMK}=2*s_i*t_i*(z+w+c_i+n*m)+2*(u_i*s_i*n*z+t_i*v_i*m*w) \text{ mod N"} \text{ (S2256)}.$$

The third common information generation unit 225 encrypts the received shared key SK based on the shared intermediate key SMK, generates an encrypted shared key ENCSK, and associates the encrypted shared key ENCSK with the first system secret variable identifier SPGIID1 and the time variable group PRG (S2257).
The third common information generation unit 225 generates the time variable groups PRG1 to PRG6 and the encrypted shared keys ENCKS1 to ENCKS6 for the first system secret variable identifiers SPGIID1 to SPGIID6 of all the sets and then goes to Step 2259. In the case where the time variable groups PRG1 to PRG6 and the encrypted shared keys ENCKS1 to ENCKS6 have not yet been generated for the first system secret variable identifiers SPGIID1 to SPGIID6 of all the sets, it returns to Step 2252 (S2258).
The third common information generation unit 225 generates the third common information ECMIII which is composed of the first system secret variable identifiers SPGIID1 to SPGIID6, the time variable groups PRG1 to PRG6, and the encrypted shared keys ENCSK1 to ENCSK6 (S2259).
The common information distribution unit 227 distributes the third common information ECMIII to the receiving devices 23a to 23n to complete it (S2260).
The structure and the operation of the server 22 which is a component of the key distribution system 2 have been described up to this point. Consequently, the structure and the operation of the receiving devices 23a to 23n will be described. First, the structure and the operation of the receiving device 23a will be described, and next, the difference between the receiving device 23a and the other receiving devices 23b to 23n will be described.

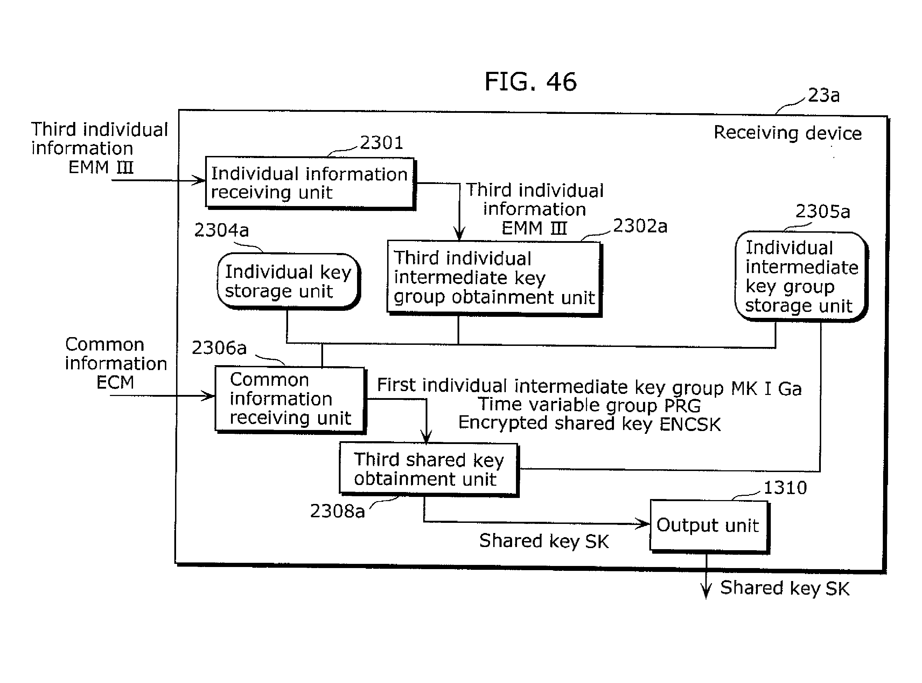

<Structure of Receiving Device 23a>
As shown in FIG. 46, the receiving device 23a includes: an individual information receiving unit 2301; a third individual intermediate key group obtainment unit 2302a; an individual key storage unit 2304a; an individual intermediate key storage unit 2305a; a common information receiving unit 2306a; a third shared key obtainment unit 2308a; and an output unit 1310. Here, the third individual intermediate key obtainment unit 2302a, the individual key storage unit 2304a, the individual intermediate key storage unit 2305a, the common information receiving unit 2306a and the third shared key obtainment unit 2308a are the components which are unique to the receiving device 23a, and the individual information receiving unit 2301, the output unit 1310 and the receiving devices 23a to 23n are the components common among the receiving devices 23a to 23n.

(1) Individual Information Receiving Unit 2301
In the case where the individual information receiving unit 2301 receives the third individual information group EMMIII from the server 22, it outputs the received third individual information EMMIII to the third individual intermediate key group obtainment unit 2302a.

(2) Third Individual Intermediate Key Group Obtainment Unit 2302a

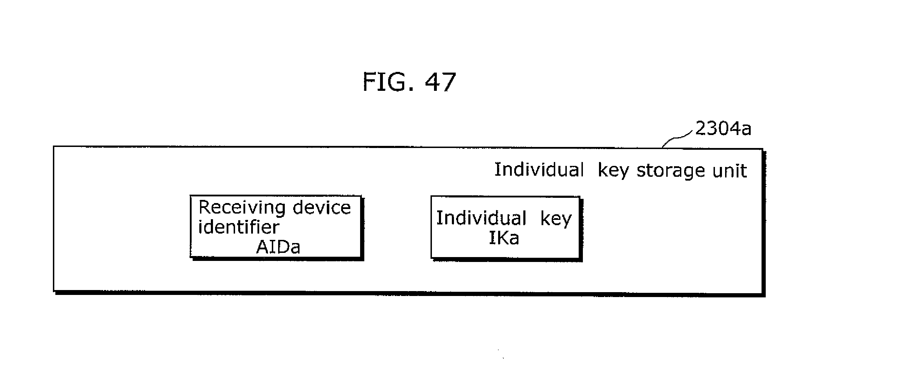

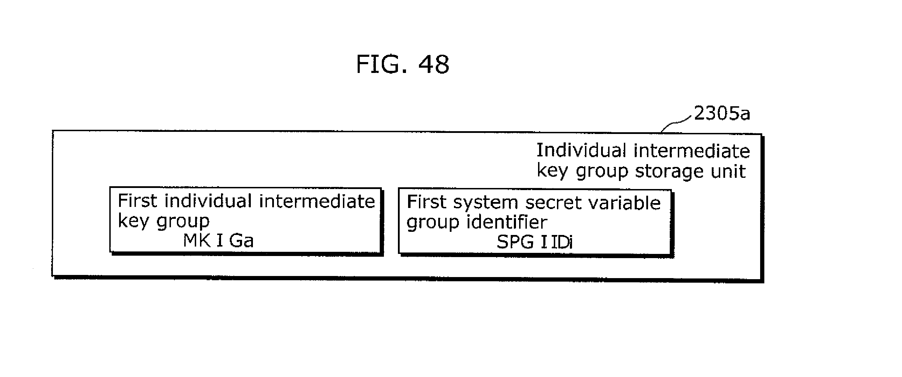

In the case where the third individual intermediate key group obtainment unit 2302a receives the third individual information EMMIII from the individual information receiving unit 2301, it obtains the receiving device identifier AIDa and the individual key IKa from the individual key storage unit 2304a as shown in FIG. 47. After that, it obtains, from the received third individual information EMMIII, the first encrypted intermediate key group ENCMKIGa corresponding to the receiving device identifier AIDa which has been stored in the individual key storage unit 2304a. After that, it decrypts the first encrypted intermediate key group ENCMKIGa based on the individual key IKa, and obtains the first intermediate key group MKIGa and the first system secret variable group identifier SPGIIDi. Lastly, it stores the first intermediate key group MKIGa and the first system secret variable group identifier SPGIIDi in the individual intermediate key storage unit 2305a as shown in FIG. 48.

(3) Individual Key Storage Unit 2304a

As shown in FIG. 47, the individual key storage unit 2304a is for holding the receiving device identifier AIDa and the individual key IKa.

(4) Individual Intermediate Key Storage Unit 2305a

As shown in FIG.48, the individual intermediate key storage unit 2305a is for holding the first individual intermediate key group MKIGa and the first system secret variable group identifier SPGIIDi.

(5) Common information Receiving Unit 2306a

In the case where the common information receiving unit 2306a receives the third common information ECMIII from the server 22, it accesses the individual intermediate key storage unit 2305a, and obtains the first individual intermediate key group MKIGa and the first system secret variable group identifier SPGIIDi. After that it extracts the time variable group PRGi and the encrypted shared key ENCSKi which match the first system secret variable group identifier SPGIIDi from among the third common information ECMIII. After that, it outputs the first individual intermediate key group MKIGa, the time variable group PRGi, and the encrypted shared key ENCSKi to the third shared key obtainment unit 2308a.

(6) Third Shared Key Obtainment Unit 2308a

In the case where the third shared key obtainment unit 2308a receives, from the common information receiving unit 2306a, the first individual intermediate key group MKIGa, the time variable group PRGi, and the encrypted shared key ENCSKi, it extracts the time variables r1, r2, r3 and r4 from the time variable group PRGi. After that, it extracts the first individual intermediate keys mkI1, mkI2, mkI3 and mkI4 from the first individual intermediate key group MKIGa. After that, it generates a shared intermediate key SMK based on the previously provided receiving device shared intermediate key generation equation "SMK=(r1+mkI1) *(r1+mkI2)+(r1*mkI3)*(r1+mkI4) mod N". After that, it decrypts the encrypted shared key ENCSKi based on the generated shared intermediate key SMK, and obtains the shared key SK. After that, it outputs the shared key SK to the output unit 1310.

<Operation of Receiving Device 23a>

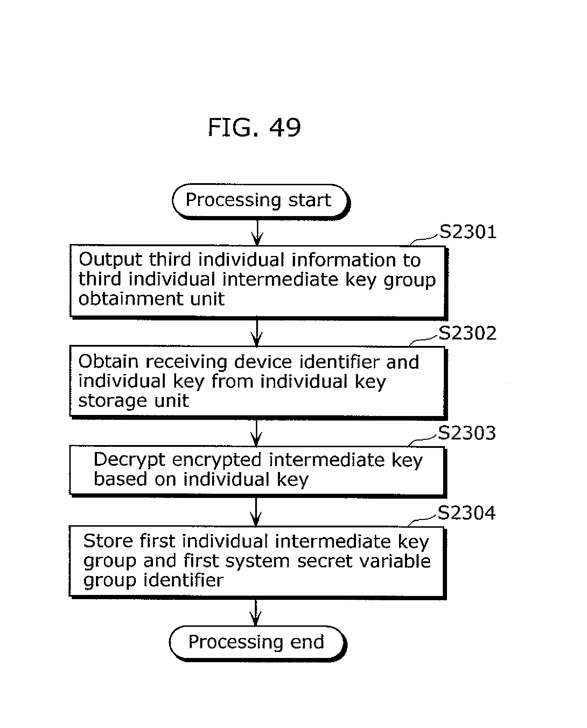

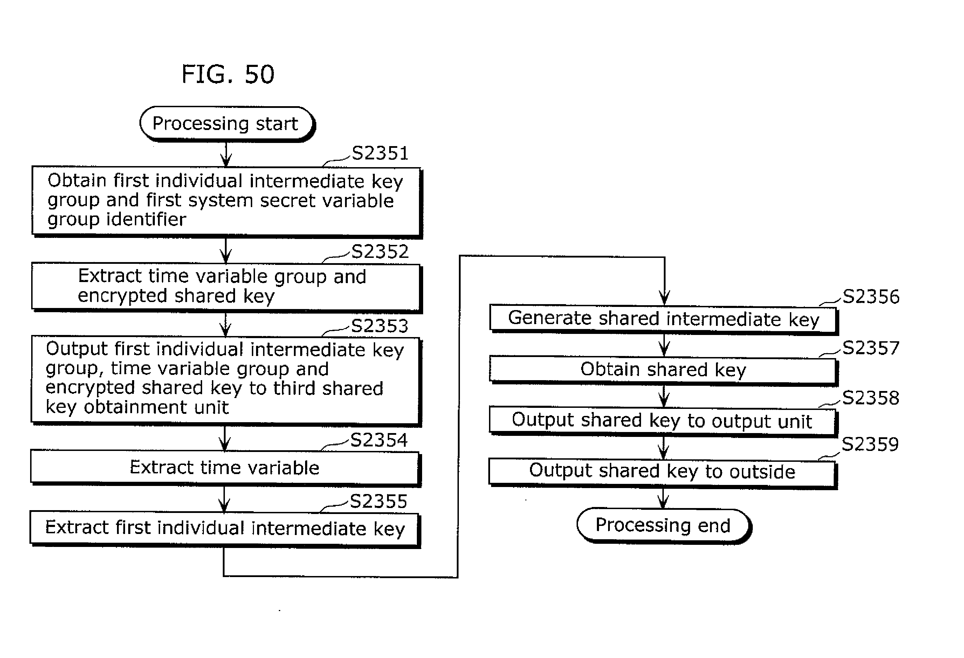

The structure of the receiving device 23a has been described up to this point, and here will be described the operation of the receiving device 23a. First, how the receiving device 23a operates in obtaining the first individual intermediate key group MKIGa when it has received the third individual information EMMIII will be described with reference to the flow chart shown in FIG. 49. Next, how the receiving device 23a operates in obtaining the shared key SK using the first individual intermediate key group MKIGa when it has received the third common information ECMIII will be described with reference to the flow chart shown in FIG. 50.

<<Operation of Receiving device 23a in Receiving Third Individual Information EMMIII from Key Distribution Center 21>>

The individual information receiving unit 2301 which has received the third individual information group EMMIII from the key distribution center 21 outputs the third individual information EMMIII to the third individual intermediate key group obtainment unit 2302a (S2301). The third individual intermediate key group obtainment unit 2302a which has received the third individual information EMMIII obtains the receiving device identifier AIDa and the individual key IKa from the individual key storage unit 2304a (S2302).

The third individual intermediate key group obtainment unit 2302a obtains the first encrypted intermediate key ENCMKIa and the first system secret variable group identifier SPGIIDa which correspond to the receiving device identifier AIDa which has been stored in the individual key storage unit 2304 (S2303).

The third individual intermediate key group obtainment unit 2302a decrypts the first encrypted intermediate key ENCMKIa based on the individual key IKa which has been stored in the individual key storage unit 2304, and obtains the first intermediate key MKIa (S2304).

The third individual intermediate key group obtainment unit 2302a stores the first individual intermediate key group MKIGa and the first system secret variable group identifier SPGIIDa in the individual intermediate key storage unit 2305a to complete it (S2304).

<<Operation of Receiving Device 23a in Receiving Third Common information ECMIII from Server 22>>

The common information receiving unit 2306a which has received the third common information ECMIII from the server 22 obtains the first individual intermediate key group MKIGa and the first system secret variable group identifier SPGIIDa from the individual intermediate key storage unit 2305a (S2351).

The common information receiving unit 2306a extracts, from among the third common information ECMIII, the time variable group PRGi and the encrypted shared key ENCSKi which match the first system secret variable group identifier SPGIIDa corresponding to the first system secret variable group identifier SPGIIDa (S2352).

The common information receiving unit 2306a outputs, to the third shared key obtainment unit 2308a, the first individual intermediate key group MKIGa, time variable group PRGi, and the encrypted shared key ENCSKi (S2353).

The third shared key obtainment unit 2308a extracts time variables r1, r2, r3 and r4 from the time variable group PRGi (S2354).

The third shared key obtainment unit 2308a extracts the first individual intermediate keys mkI1, mkI2, mkI3 and mkI4 from the first individual intermediate key group MKIGa (52355).

The third shared key obtainment unit 2308a generates the shared intermediate key SMK based on the previously provided receiving device shared intermediate key generation equation

$$\text{``SMK=(r1+mkI1)*(r1+mkI2)+(r1+mkI3)*(r1+mkI4)} \quad \text{mod} \quad \text{N''}$$
$$\text{(S2356).}$$

The third shared key obtainment unit 2308a decrypts the encrypted shared key ENCSKi based on the generated shared intermediate key SMK and obtains the shared key SK (S2357).

The third shared key obtainment unit 2308a outputs the shared key SK to the output unit 1310 (S2358).

The output unit 1310 outputs the received shared key SK to the outside when it has received the shared key SK (S2359).

The structure and the operation of the receiving device 23a which is a component of the key distribution system 2 have been described up to this point. Note that the difference between the receiving device 23a and the other receiving devices 23b to 23n is as follows.

( i ) The respective receiving devices 23a to 23n have a different receiving device identifier and a different individual key, which are obtained from the individual key storage unit 2304a in order that the third individual intermediate key group obtainment unit 2302a obtains the third individual intermediate key group.

( ii ) The respective receiving devices 23a to 23n have different receiving device identifiers (AIDa to AIDn) and individual keys (IKa to IKn) which are stored in the individual key storage unit 2304a.

(iii) The respective receiving devices 23a to 23n have different first individual intermediate key groups and different first system secret variable group identifiers which are stored in the individual intermediate key storage unit 2305a.

(iv) The respective receiving devices 23a to 23n have different first individual intermediate key groups and first system secret variable group identifiers which are obtained from the individual intermediate key storage unit 2305a in the common information receiving unit 2306a.

(v) The respective receiving devices 13a to 13n each has a different first individual intermediate key group which is used at the time of obtaining a shared key SK in the third shared key obtainment unit 2308a.

<Operational verification of second embodiment>

The first individual intermediate key groups MKIGa to MKIGn are respectively assigned to the receiving devices 23a to 23n. However, the shared keys SK with a same value can be derived in all of the respective receiving devices 23a to 23n in the second embodiment. The reason is the same as the reason in the case of the first embodiment.

<Effect of Second Embodiment>

In the second embodiment of the present invention, it is assumed that the shared keys SK with a same value which are owned by all the receiving devices are generated from the third individual intermediate keys which are unique to the respective receiving devices. In this way, it becomes possible to identify a receiving device which is a leakage source even in the case where the device is an unauthorized device in which a third individual intermediate key has been embedded.

<Variations>

The above-described embodiment is an example embodiment of the present invention. The present invention is not limited to this embodiment and can be executed in main embodiments without deviating from the scope. The following case is also included in the present invention.

(1) The communication channel 10 may be a broadcasting network such as ground waves and satellite waves.

(2) As shown in FIG.34, in the first embodiment, the key distribution center 11 may record the system secret variable group set SPGS in the portable medium 15 and distribute the portable medium 15 to the server 12, and the server 12 which has received the portable medium 15 may obtain the system secret variable group set SPGS by reading out the system secret variable group set SPGS which has been stored in the portable medium 15. Here, the portable medium 15 is a mobile recording medium such as a flexible disc, a CD-ROM and a DVD-RAM. In this way, it becomes unnecessary that the key distribution center 11 and the server 12 are connected through the communication channel. Note that this can likewise be realized in the second embodiment.

(3) The followings may be performed in the first embodiment. The key distribution center 11 also generates an extra first individual intermediate key group and distributes the first individual intermediate key in addition to the system secret variable group SPG to the server 12. The system secret variable group storage unit 122 of the server 12 further stores the first individual intermediate key group. As shown in FIG. 35, the time variable group PRG of the server 12 outputs the time variable group PRG to the shared intermediate key obtainment unit 1252 instead of random numbers z, w, m and n. The shared intermediate key obtainment unit 1252 of the server 12, in the case where it has received the time variable group PRG from the time variable group generation unit 1251, accesses the system secret variable group storage unit 122 first, obtains the first individual intermediate key, and obtains the first individual intermediate keys $mkI1$, $mkI2$, $mkI3$, and $mkI4$. Also, the shared intermediate key obtainment unit 1252 extracts the time variables $r1$, $r2$, $r3$ and $r4$ from among the received time variable group PRG, and then generates the shared intermediate key SMK based on the previously provided receiving device shared intermediate key generation equation "$SMK=(r1+mkI1)*(r1+mkI2) + (r1+mkI3)*(r1+mkI4) \bmod N$". In this way, even in the case where the first individual intermediate key group of the server 12 is leaked, it becomes possible to trace the server 12 which has leaked the key. Note that this can likewise be realized in the second embodiment.

(4) Equations are not limited to the followings which have been described in the first embodiment and in the second embodiment: system secret variable generation equations, individualized variable generation equations, first individual intermediate key generation equations, time variable generation equations, server shared intermediate key generation equations and receiving device shared intermediate key generation equations. Any equations may be available as long as (a) the equation which is obtainable when substituting an individualized variable generation equation, a first individual intermediate key generation equation, and a time variable generation equation into the receiving device shared intermediate key generation equation matches the first shared intermediate key, (b) also, the first individual intermediate key generation equation includes individualized variables x and y, and further (c) the time variable generation equation, the server shared intermediate key generation equation, and the receiving device shared intermediate key generation equation do not include the individualized variables x and y.

(5) The system secret variable group SPG has been generated using a system secret variable generation equation, but a system secret variable group SPG may be generated using two or more types of system secret variable generation equations, and also, a system secret variable group SPG may be generated without using a system secret variable generation equation. For example, such a system secret variable group may be random numbers.

(6) The individualized variables have been generated using an individualized variable generation equation, but individualized variables may be generated using two or more types of individualized variable generation equations, and also, individualized variables may be generated without using an individualized variable generation equation. For example, such individualized variables may be random numbers.

(7) Intermediate keys have been generated using four first individual intermediate key generation equations, but first individual intermediate keys may be generated using five or more types of first individual intermediate key generation equations, and also, first individual intermediate keys may be generated using three or less types of first individual intermediate key generation equations.

(8) Time variable group PRG have been generated using four time variable generation equations, but a time variable group PRG may be generated using five or more types of time variable generation equations, and further, a time variable group PRG may be generated without using any time variable generation equation. For example, such a time variable group PRG may be random numbers.

(9) A shared intermediate key SMK has been calculated using a server shared intermediate key generation equation, but a shared intermediate key SMK may be calculated using two or more types of server shared intermediate key generation equations.

(10) A shared intermediate key SMK has been calculated using a receiving device shared intermediate key generation equation, but a shared intermediate key SMK may be generated using two or more receiving device shared intermediate key generation equation.

(11) As to a receiving device shared intermediate key generation equation, a receiving device shared intermediate key generation equation does not need to be used in all of the receiving devices 13a to 13n or the receiving devices 23a to 23n.

(12) The respective first individual intermediate key groups MKIGa to MKIGn are composed of four first individual intermediate keys $mkI1$, $mkI2$, $mkI3$ and $mkI4$ in the first embodiment, but they may be composed of five or more first individual intermediate keys, and they may be composed of three or less first individual intermediate keys.

(13) A time variable group PRG has been composed of four time variables r1, r2, r3 and r4, but it may be composed of five or more time variables, and it may be composed of three or less time variables.

(14) The same individual key, first individual intermediate key group and first individual intermediate key group may be assigned to some receiving devices.

(15) The second system secret key generation unit 1141 has generated six second system secret keys k1, k2, k3, k4, k5 and k6 in the first embodiment, but it may generate seven or more second system secret keys, and also, it may generate five or less second system secret keys. For example, the second system secret key generation unit 1141 may generate ten second system secret keys k1, k2, k3, k4, k5, k6, k7, k8, k9 and k10. At this time, the number of second system secret keys which are included in the second system secret variable group SPGII vary. For example, in the case where the second system secret key generation unit 1141 generates ten second system secret keys k1, k2, k3, k4, k5, k6, k7, k8, k9 and k10, the second system secret variable group SPGII includes ten second system secret keys k1, k2, k3, k4, k5, k6, k7, k8, k9 and k10.

(16) The receiving devices have outputted the shared keys SK in the first embodiment and in the second embodiment. However, a server may input contents from outside, encrypt the contents based on the shared keys SK, and distribute the encrypted contents to the receiving devices, and the receiving devices may receive the encrypted contents, perform decryption based on the shared keys SK, obtain the contents, and output the contents to outside.

(17) The server 12 in the first embodiment has selected one of the first common information generation unit 125 and the second common information generation unit 126, and has generated one of the first common information ECMI and the second common information ECMII. However, the server 12 may generate the first common information ECMI in the first common information generation unit 125 each time, generate the second common information ECMII in the second common information generation unit 126, and after the generation, select one of the first common information ECMI and the second common information ECMII, and distribute the selected one to the receiving devices 13a to 13n.

(18) When the key distribution center 11 distributes an individual information group EMMG in the first embodiment, it may distribute it to the receiving devices 13a to 13n at the same time, and also, it may distribute it individually to the respective receiving devices 13a to 13n. Also, when the server 12 distributes the common information ECM, it should be noted that the server 12 may distribute it to the receiving devices 13a to 13n at the same time, and also, it may distribute it individually to the respective receiving devices 13a to 13n.

(19) The third system secret key group set SPGIIIS includes six first system secret key groups in the second embodiment. However, it may include seven or more first system secret key groups, and it may also include five or less first system secret key groups.

(20) When the key distribution center 21 distributes the third individual information group EMMIII in the second embodiment, it may distribute it to the receiving devices 23a to 23n at the same time, and it may also distribute individually to the respective receiving devices 23a to 23n. Also when the server 22 distributes the third common information ECMIII, it should be noted that the server 22 may distribute it to the receiving devices 23a to 23n at the same time, and also, it may distribute it individually to the respective receiving devices 23a to 23n.

(21) The server 12 has sent the common information ECM to the receiving devices 13a to 13n in the first embodiment. However, it is also possible that the server 12 and the receiving devices 13a to 13n previously hold plural sets of common information ECM and a common information identifier, the server 12 distributes the respective common information identifiers to the receiving devices 13a to 13n, and the receiving devices 13a to 13n obtain the corresponding common information ECM based on the received common information identifiers.

(22) In the first embodiment, the key distribution center 11 may hold (a) the receiving device identifier and (b) the information corresponding to the first individual intermediate key group and the second individual intermediate key group which have been assigned to the receiving devices corresponding to the receiving device identifier, and may become capable of identifying the receiving device to which the information has been assigned based on one of the first individual intermediate key group and the second individual intermediate key group. In this way, even in the case where an unauthorized receiving device is detected, the receiving device from which a leakage has occurred can be identified based on one of the first individual intermediate key group and the second individual intermediate key group which has been embedded in the unauthorized receiving device. Note that the corresponding information may be held by the key distribution center 11. Also, the corresponding information may include only a set of: (a) one of the first individual intermediate key group and the second individual intermediate key group; and (b) a receiving device identifier. The same can be realized as well by means that the key distribution center 21 or something other than the key distribution center 21 holds (a) the receiving device identifier and (b) the information corresponding to the first individual intermediate key group and the first system secret variable group identifier which have been assigned to the receiving device corresponding to the receiving device identifier. Further, the corresponding information may include only a set of: (a) one of the first individual intermediate key group and the second individual intermediate key group; and (b) a receiving device identifier.

(23) In the first embodiment, the key distribution center 11 includes a first individual information generation unit and a second individual information generation unit, but it may include a third individual information generation unit and a fourth individual information generation unit, and another individual information generation unit. The receiving devices 13a to 13n include a first individual intermediate key group obtainment unit and a second individual intermediate key group obtainment unit, but it may include a third individual intermediate key group obtainment unit and a fourth individual intermediate key group obtainment unit, and another individual intermediate key group obtainment unit. The requirements are that the key distribution center 11 and the receiving devices 13a to 13n include the same numbers of individual information generation units and individual intermediate key group obtainment units, and individual information identifiers of the same types.

(24) In the first embodiment, the server 12 includes the first common information generation unit and the second common information generation unit. However, the server 12 may include a third common information generation unit and a fourth common information generation unit and another common information generation unit. The receiving devices 13a to 13n include the first shared key obtainment unit and the second shared key obtainment unit. However, the respective receiving devices 13a to 13n may include a third shared key obtainment unit and a fourth shared key obtainment unit and another shared key obtainment unit. The requirements are that the server 12 and the receiving devices 13a to 13n include the same number of common information generation units and shared key obtainment units, and the individual information identifiers of the same types.

(25) In the first embodiment, term keys PK_1 to PK_k are shared keys in all of the receiving devices 13a to 13n, but the receiving devices each may have an individual key.

(26) The present invention may be the above-described method. Also, the present invention may be a computer program for realizing the method by a computer, and may be digital signals which are composed of the computer program. Also, the present invention may be the computer program or the digital signals recorded in a computer readable recording medium such as a removable disc, a hard disc, a CD, an MO, a DVD, an SD memory card, a semiconductor memory. Also, the present invention may be the computer program or the digital signals recorded in such a recording medium. Also, the present invention may be communicated as the computer program or the digital signals via an electric communication circuit, a wireless communication circuit, a wired communication circuit, a network represented by the Internet or the like. Also, it is possible that the present invention is a computer system including a micro processor and a memory, and the memory stores the above-described computer program, and the microprocessor operates according to the computer program. Also, the present invention may be executed by another stand-alone computer system by recording the program and the digital signals in the recording medium and transmitting the recording medium, or transmitting the program or the digital signals via the network or the like.

(27) These embodiments and the variations may be combined with each other.

**Industrial Applicability**

The key distribution system concerning the present invention provides an effect that makes it possible to trace a cloning source of an unauthorized receiving device even in the case where an attacker has received the individual key of a receiving device and generates the unauthorized receiving device using the individual key, and thus the key distribution system is useful in the case where contents are desired to be distributed safely via a communication channel such as the Internet, and a broadcasting network such as ground broadcasting and satellite broadcasting.

**Claims**

1.   A key distribution system for distributing shared keys, said key distribution system comprising:

      a server which generates common information based on each of the shared keys and distributes the common information; and
      receiving devices each of which obtains the shared key based on the common information and an individual intermediate key group set,
      wherein each of said receiving devices has been previously provided with at least one individual intermediate key group set which has been selected from among individual intermediate key group sets including at least two different types of individual intermediate key group sets, each of the individual intermediate key group sets including individual intermediate key groups, and each of the individual intermediate key groups being made up of one or more individual intermediate keys which have been generated based on one or more system secret variable groups,
      said server and said receiving devices can communicate via a communication channel,
      said server includes:

            a shared key storage unit operable to store the shared keys;

a system secret variable group storage unit operable to store the system secret variable group sets which are made up of the previously provided system secret variable groups;

each of common information generation units operable to generate the common information based on each shared key;

a common information generation unit selection unit operable to select one of said common information generation units; and

a common information distribution unit operable to distribute the common information to said receiving devices simultaneously or at different times,

each of said common information generation units is operable to generate key update data based on the system secret variable group set and the shared key and operable to generate, using a different common information generation method, common information including (a) a common information identifier and (b) the key update data, the common information identifier corresponding to the common information generation method,

each of said receiving devices includes:

a common information receiving unit operable to receive the common information;

an individual intermediate key group storage unit operable to store the individual intermediate key group sets each of which is made up of the individual intermediate key groups corresponding to each of the common information generation methods;

shared key obtainment units which respectively correspond to said common information generation units; and

a shared key obtainment unit selection unit operable to select one of said shared key obtainment units, said shared key obtainment unit selection unit is operable to select one of said shared key obtainment units based on the common information identifier included in the common information which has been received by said common information receiving unit, and

each of said shared key obtainment units is operable to obtain the shared key, using the common information, based on the shared key obtainment method corresponding to the common information identifier and the individual intermediate key group.

2. The key distribution system according to Claim 1,

wherein each common information generation method includes a first common information generation method,

each shared key obtainment method includes a first shared key obtainment method which is paired with the first common information generation method,

each of the system secret variable group sets includes first system secret variable groups each of which is made up of one or more first system secret variables,

each of the individual intermediate key group sets includes first individual intermediate key groups each of which is made up of one or more first individual intermediate keys, the first individual intermediate keys are respectively generated based on the first system secret variable groups and one or more first individual intermediate key generation equations,

said server has been previously provided with one or more time variable generation equations and one or more server shared intermediate key generation equations,

each of said receiving devices has been previously provided with one or more receiving device shared intermediate key generation equations,

the first common information generation method includes:

generating a random number group which is made up of one or more random numbers;

generating a time variable group which is made up of one or more time variables based on the random number group, the first system secret variable groups and the time variable generation equations;

generating shared intermediate keys based on the first system secret variable groups, the random number group and the server shared intermediate key generation equations; and

generating encrypted shared keys by encrypting the shared keys based on the shared intermediate keys,

wherein, in the first common information generation method, the key update data includes the time variable group and the encrypted shared keys, and

the first shared key obtainment method includes:

generating the shared intermediate keys based on the time variable group, the first individual intermediate key group and the receiving device shared intermediate key generation equations; and

obtaining the shared keys by decrypting the encrypted shared keys based on the shared intermediate keys.

**3.** The key distribution system according to Claim 1,
wherein said server has been previously provided with one of the individual intermediate key group sets,
said server includes an individual intermediate key group set storage unit operable to store the previously provided individual intermediate key group set,
each common information generation method includes a first common information generation method,
each shared key obtainment method includes a first shared key obtainment method which is paired with the first common information generation method,
each of the system secret variable group sets includes first system secret variable groups each of which is made up of one or more first system secret variables,
each of the individual intermediate key group sets includes first individual intermediate key groups each of which is made up of one or more first individual intermediate keys, the first individual intermediate keys are respectively generated based on the first system secret variable groups and one or more first individual intermediate key generation equations,
said server has been previously provided with one or more time variable generation equations and one or more receiving device shared intermediate key generation equations,
each of said receiving devices has been previously provided with the receiving device shared intermediate key generation equations,
the first common information generation method includes:

generating a random number group which is made up of one or more random numbers;
generating a time variable group which is made up of one or more time variables based on the random number group, the first system secret variable groups and the time variable generation equations;
generating shared intermediate keys based on the first individual intermediate key group, the time variable group and the receiving device shared intermediate key generation equations; and
generating encrypted shared keys by encrypting the shared keys based on the shared intermediate keys,
wherein, in the first common information generation method, the key update data includes the time variable group and the encrypted shared keys, and
the first shared key obtainment method includes:

generating the shared intermediate keys based on the time variable group, the first individual intermediate key groups and the receiving device shared intermediate key generation equations; and
obtaining the shared keys by decrypting the encrypted shared keys based on the shared intermediate keys.

**4.** The key distribution system according to Claim 1,
wherein each common information generation method includes a second common information generation method,
each shared key obtainment method includes a second shared key obtainment method which is paired with the second common information generation method,
each of the system secret variable group sets includes a second system secret key group which is made up of second system secret keys,
each of the individual intermediate key group sets includes second individual intermediate key groups each of which is made up of one or more of the second system secret keys,
the second common information generation method includes:

generating encrypted shared keys by encrypting the shared keys based on one or more of the second system secret keys which are included in the second system secret key groups; and
generating an encrypted shared key group which is made up of the encrypted shared keys combined with each other,
wherein, in the second common information generation method, the key update data includes the encrypted shared key group, and
the second shared key obtainment method includes:

selecting one of the encrypted shared keys which corresponds to any of the second system secret keys included in the second individual intermediate key group, from among the encrypted shared key group included in the key update data; and
obtaining the shared key by decrypting the selected encrypted shared key based on the second system secret key.

**5.** The key distribution system according to Claim 4,

wherein the individual intermediate key group set includes a second individual intermediate key group which is made up of one of the second system secret keys, and
the second common information generation method includes:

generating encrypted shared keys by encrypting the shared keys based on the second system secret keys which are included in the second system secret key group; and
generating an encrypted shared key group which is made up of encrypted shared keys combined with each other.

6. The key distribution system according to Claim 1, said system further comprising a key distribution center which is connected with said respective receiving devices via the communication channel and distributes an individual information group,
wherein said key distribution center includes:

an output device information storage unit operable to store one or more individual keys which have been previously provided to said receiving devices;
individual information generation units operable to generate the individual information; and
an individual information group distribution unit operable to distribute the individual information group including at least two types of sets of the individual information and an individual information identifier which corresponds to said individual information generation unit, to said receiving devices simultaneously or at different times,
each of said individual information generation units is operable to output the individual information identifier, the system secret variable group and the individual information based on the individual information generation method which is uniquely used by each of said individual information generation units,
each of said receiving devices includes:

an individual key storage unit operable to store the previously provided individual key;
an individual information group receiving unit operable to receive the individual information group; and
individual intermediate key group obtainment units which correspond to said individual information generation units,
said individual information group receiving units output the individual information corresponding to the individual information identifiers to said respective individual intermediate key obtainment units based on the individual information identifiers included in the received individual information group, and
each of said individual intermediate key obtainment units is operable to obtain the individual intermediate key group based on the individual information and the individual key using an individual intermediate key obtainment method corresponding to the individual information identifier.

7. The key distribution system according to Claim 6,
wherein each of said individual information generation units further generates the system secret variable group,
said key distribution center includes a system secret variable group set sending unit operable to distribute, to said server, the system secret variable group set including two types of sets of the system secret variable group and the individual information identifier which corresponds to said individual information generation unit, and
said server includes a system secret variable group set receiving unit operable to store the distributed system secret variable group sets into said system secret variable group storage unit.

8. The key distribution system according to Claim 6,
wherein said key distribution center is connected to said server via the communication channel,
said system secret variable group set sending unit is operable to distribute the system secret variable group set to said server via the communication channel, and
said system secret variable group set receiving unit is operable to receive the system secret variable group set from said key distribution center via the communication channel.

9. The key distribution system according to Claim 6,
wherein said system secret variable group set sending unit is operable to record the system secret variable group set on a portable medium, and
said system secret variable group set receiving unit is operable to read out the system secret variable group set recorded on the portable medium.

10. The key distribution system according to Claim 7,
wherein said key distribution center and said server are assumed to share a server key in advance,

said system secret variable group set sending unit is operable to generate encrypted data by encrypting the system secret variable group set based on the server key and distribute the server key to said server, and
said system secret variable group set receiving unit is operable to obtain the system secret variable group set by decrypting the distributed encrypted data based on the server key.

**11.** The key distribution system according to Claim 6,
wherein each individual information generation method includes a first individual information generation method,
each individual intermediate key obtainment method includes a first individual intermediate key obtainment method which is paired with the first individual information generation method,
said key distribution center includes a term information storage unit operable to store one or more types of sets of a previously provided term key, a first system secret variable group, and a term identifier, the first system secret variable group and the term identifier corresponding to the term key,
said individual key storage units of said receiving devices each is operable to store one or more types of sets of a first encrypted individual intermediate key group and a term identifier, the encrypted first individual intermediate key group being generated by encrypting the first individual intermediate key group based on the term key, and the term identifier corresponding to the term key,
the first individual information generation method includes:

selecting a set of a term key, a first system secret variable group and a term identifier which are included in said term information storage unit; and
generating encrypted term keys by encrypting the term keys based on each of the individual keys,
the individual information group includes first individual information which is composed of an encrypted term key group and the term identifier, the encrypted term key group being made up of the encrypted term keys combined with each other, and
the fist individual intermediate key group obtainment method includes:

obtaining the term key by decrypting one of the encrypted term keys which are included in the first individual information; and
selecting the first encrypted individual intermediate key group corresponding to the term identifier from among one or more of the first encrypted individual intermediate key groups included in said individual key storage unit; and obtaining the first individual intermediate key group by decrypting the encrypted first individual intermediate key group based on the term key.

**12.** The key distribution system according to Claim 6,
wherein each individual information generation method includes a second individual information generation method,
each individual intermediate key obtainment method includes a second individual intermediate key group obtainment method which is paired with the second individual information generation method,
the second individual information generation method includes:

selecting one of the second system secret keys for each of the individual keys; and
generating second encrypted system secret keys by encrypting the selected second system secret key based on each of the individual keys,
wherein, in the second individual information generation method, the individual information group includes second individual information including a second encrypted system secret key group which is made up of the second encrypted system secret keys combined with each other, and
the second individual intermediate key group obtainment method includes:

selecting one second encrypted system secret key corresponding to the individual key from among the second encrypted system secret keys included in the second individual information; and
obtaining the second system secret key by decrypting the selected second encrypted system secret key based on the individual key, the second system secret key being considered as the second individual intermediate key group.

**13.** The key distribution system according to Claim 2,
wherein the individual intermediate key generation equation includes at least addition operation and multiplication operation.

**14.** The key distribution system according to Claim 2,

wherein the time variable generation equation includes at least addition operation and multiplication operation.

**15.** The key distribution system according to Claim 2,
wherein the server shared intermediate key generation equation includes at least addition operation and multiplication operation.

**16.** The key distribution system according to Claim 2,
wherein said receiving device shared intermediate key generation equation includes at least addition operation and multiplication operation.

**17.** The key distribution system according to Claim 4,
wherein the second system secret key group is made up of ten second system secret keys.

**18.** A receiving device in a key distribution system comprising a server which distributes shared keys and receiving devices which receive the shared keys, said receiving device comprising:

a common information receiving unit operable to receive the common information from outside;
an individual intermediate key group storage unit operable to store individual intermediate key group sets each of which is made up of individual intermediate key groups corresponding to each of the common information generation methods;
shared key obtainment units which correspond to said common information generation methods; and
a shared key obtainment unit selection unit operable to select one of the shared key obtainment units,
wherein said shared key obtainment unit selection unit is operable to select the shared key obtainment unit based on the common information identifier included in the common information which has been received by said common information receiving unit, and
said shared key obtainment unit is operable to obtain the shared key, using the common information, based on the shared key obtainment method corresponding to the common information identifier and the individual intermediate key group.

**19.** The receiving device according to Claim 18,
wherein each shared key obtainment method includes a first shared key obtainment method,
the individual intermediate key group set includes an individual intermediate key group which is made up of one or more first individual intermediate keys,
each of the receiving devices has been provided with one or more receiving device shared intermediate key generation equations,
the common information includes first common information which is made up of a time variable group and an encrypted shared key, and
the first shared key obtainment method includes:

generating the shared intermediate keys based on the time variable group, the first individual intermediate key group and the receiving device shared intermediate key generation equations which are included in the first common information; and
obtaining the shared keys by decrypting the encrypted shared keys based on the shared intermediate keys.

**20.** The receiving device according to Claim 18,
wherein each shared key obtainment method includes a second shared key obtainment method,
the individual intermediate key group set includes a second individual intermediate key group which is made up of one or more of the second system secret keys,
the common information includes second common information which is made up of an encrypted shared key group including one or more encrypted shared keys, the encrypted shared keys being generated by encrypting the shared keys based on the one or more of the second system secret keys, and
the second shared key obtainment method includes:

selecting one of the encrypted shared keys which corresponds to any of the second system secret keys included in the second individual intermediate key group from among the encrypted shared key group included in the second common information; and
obtaining the shared key by decrypting the selected encrypted shared key based on the second system secret key.

21. The receiving device according to Claim 20,
wherein the individual intermediate key group set includes a second individual intermediate key group which is made up of one of the second system secret keys.

22. The receiving device according to Claim 18,
wherein the key distribution system further comprising a key distribution center which is connected with the receiving devices via the communication channel and distributes an individual information group,
each of said receiving devices includes:

an individual key storage unit operable to store the previously provided individual key;
an individual information group receiving unit operable to receive the individual information group from outside; and
individual intermediate key group obtainment units which correspond to the individual intermediate key obtainment methods,
said individual information group receiving units output the individual information corresponding to the individual information identifiers included in the individual information group to said respective individual intermediate key obtainment units based on the individual information identifiers included in the received individual information group, and
each of said individual intermediate key obtainment units is operable to obtain the individual intermediate key group based on the individual information and the individual key using an individual intermediate key obtainment method corresponding to the individual information identifier.

23. The receiving device according to Claim 19,
wherein each individual intermediate key obtainment method includes a first individual intermediate key group obtainment method,
each of said individual key storage units of the receiving devices is operable to store one or more types of sets of a first encrypted individual intermediate key group and a term identifier, the first encrypted individual intermediate key group being generated by encrypting the first individual intermediate key group based on a term key, and the term identifier corresponding to the term key,
the individual information group includes first individual information which is made up of an encrypted term key group and the term identifier, the encrypted term key group including encrypted term keys generated by encrypting the term keys based on the respective individual keys, and
the first individual intermediate key group obtainment method includes:

obtaining the term key by decrypting one of the encrypted term keys included in the first individual information;
selecting one of the first encrypted individual intermediate key groups which corresponds to the term identifier from among one or more of the first encrypted individual intermediate key groups included in said individual key storage unit; and
obtaining the first individual intermediate key group by decrypting the first encrypted individual intermediate key group based on the term key.

24. The receiving device according to Claim 20,
wherein each individual intermediate key obtainment method includes a second individual intermediate key group obtainment method,
the individual information group includes second individual information including a second encrypted system secret key group which is made up of second encrypted system secret keys generated by encrypting one of the second system secret keys based on the respective individual keys, and
the second individual intermediate key group obtainment method includes:

selecting one second encrypted system secret key corresponding to the individual key from among the second encrypted system secret keys included in the second individual information; and
obtaining the second system secret key by decrypting the selected second encrypted system secret key based on the individual key, the second system secret key being considered as the second individual intermediate key group.

25. The receiving device according to Claim 19,
wherein each of the receiving device shared intermediate key generation equations includes at least addition operation and multiplication operation.

**26.** A program which causes a computer to execute processing of receiving shared keys, the computer being connected with a server which distributes the shared keys via a communication channel, and the processing including:

a reception step of receiving the common information from outside;
a storage step of storing an individual intermediate key group set which is made up of individual intermediate key groups corresponding to the respective shared key obtainment methods;
an obtainment step of obtaining the shared keys corresponding to the shared key obtainment methods; and
a selection step of selecting one of the shared key obtainment units based on the common information identifiers included in the common information which has been received by the common information receiving unit,
wherein said obtainment step includes obtaining the shared keys, using the common information, based on the shared key obtainment method and the individual intermediate key group, the shared key obtainment method corresponding to the common information identifier.

**27.** The program according to Claim 26,
wherein each shared key obtainment method includes a first shared key obtainment method,
the individual intermediate key group set includes a first individual intermediate key group which is made up of one or more first individual intermediate keys,
each of the programs has been previously provided with one or more receiving device shared intermediate key generation equations,
the common information includes first common information which is made up of encrypted shared keys generated by encrypting the shared keys based on a time variable group and shared intermediate keys, and
the first shared key obtainment method includes:

generating the shared intermediate keys based on the time variable group, the first individual intermediate key group and the receiving device shared intermediate key generation equations, the time variable group being included in the first common information; and
obtaining the shared keys by decrypting the encrypted shared keys based on the shared intermediate keys.

**28.** The program according to Claim 26,
wherein each shared key obtainment method includes a second shared key obtainment method,
the individual intermediate key group set includes a second individual intermediate key group which is made up of one or more of the second system secret keys,
the common information includes second common information including an encrypted shared key group which is made up of encrypted shared keys, the encrypted shared keys being generated by encrypting the shared keys based on one or more of the second system secret keys, and
the second shared key obtainment method includes:

selecting one of the encrypted shared keys which corresponds to any of the second system secret keys included in the second individual intermediate key group from among the encrypted shared key group which is included in the second common information; and
obtaining the shared key by decrypting the selected encrypted shared key based on the second system secret key.

**29.** The program according to Claim 28,
wherein the individual intermediate key group includes one of second individual intermediate key groups each of which is made up of one of the second system secret keys.

**30.** The program according to Claim 27,
wherein each of the receiving device shared intermediate key generation equations includes at least addition operation and multiplication operation.

**31.** A medium on which the program according to Claim 26 is recorded.

**32.** A key distribution method comprising:

a key distribution step of generating common information based on each of the shared keys and distributing the common information; and
key reception steps of obtaining the shared keys based on the common information and an individual intermediate key group set,

wherein, in said key reception steps, at least one individual intermediate key group set has been previously provided, the individual intermediate key group set having been selected from among individual intermediate key group sets including at least two different types of individual intermediate key group sets, each of the individual intermediate key group sets including individual intermediate key groups, and each of the individual intermediate key groups being made up of one or more individual intermediate keys which have been generated based on one or more system secret variable groups,

said key distribution step includes:

a shared key storage step of storing the shared keys;

a storage step of storing the system secret variable group sets which are made up of the previously provided system secret variable groups;

generation steps of generating common information based on each shared key;

a selection step of selecting one of the common information generation steps; and

a distribution step of distributing the common information to the receiving devices simultaneously or at different times,

said common information generation steps include: generating, using different common information generation methods respectively, key update data based on the system secret variable group set and the shared key; and generating common information including (a) common information identifiers and (b) the key update data, the common information identifiers respectively corresponding to the common information generation methods,

said key reception steps include:

a reception step of receiving the common information;

a storage step of storing the individual intermediate key group sets each of which is made up of the individual intermediate key groups respectively corresponding to the common information generation methods;

obtainment steps of obtaining shared keys, the steps respectively corresponding to the generation units which generate common information; and

a selection step of selecting one of the shared key obtainment steps based on the common information identifiers included in the common information which has been received by the common information reception units, and

said obtainment steps include obtaining, the shared keys, using the common information based on (a) the shared key obtainment methods respectively corresponding to the common information identifiers and (b) the individual intermediate key group.

33. The key distribution method according to Claim 32,

wherein each common information generation method includes a first common information generation method,

each shared key obtainment method includes a first shared key obtainment method which is paired with the first common information generation method,

each of the system secret variable group sets includes first system secret variable groups each of which is made up of one or more first system secret variables,

each of the individual intermediate key group sets includes first individual intermediate key groups each of which is made up of one or more first individual intermediate keys, the first individual intermediate keys are respectively generated based on the first system secret variable groups and one or more first individual intermediate key generation equations,

in said key distribution step, one or more time variable generation equations and one or more server shared intermediate key generation equations have been previously provided,

in each of said reception steps, one or more receiving device shared intermediate key generation equations have been previously provided,

the first common information generation method includes:

generating a random number group which is made up of one or more random numbers;

generating a time variable group which is made up of one or more time variables based on the random number group, the first system secret variable groups and the time variable generation equations;

generating shared intermediate keys based on the first system secret variable groups, the random number group and the server shared intermediate key generation equations; and

generating encrypted shared keys by encrypting the shared keys based on the shared intermediate keys,

wherein, in the first common information generation method, the key update data includes the time variable group and the encrypted shared keys, and
the first shared key obtainment method includes:

generating the shared intermediate keys based on the time variable group, the first individual intermediate key groups and the receiving device shared intermediate key generation equations; and
obtaining the shared keys by decrypting the encrypted shared keys based on the shared intermediate keys.

**34.** The key distribution method according to Claim 33,
wherein, in said key distribution step, one of the individual intermediate key group sets has been previously,provided,
said key reception step includes storing the previously provided individual intermediate key group set,
each common information generation method includes a first common information generation method,
each shared key obtainment method includes a first shared key obtainment method which is paired with the first common information generation method,
each of the system secret variable group sets includes first system secret variable groups each of which is made up of one or more first system secret variables,
each of the individual intermediate key group sets includes first individual intermediate key groups each of which is made up of one or more first individual intermediate keys, the first individual intermediate keys are respectively generated based on the first system secret variable groups and one or more first individual intermediate key generation equations,
said server has been previously provided with one or more time variable generation equations and one or more shared intermediate key generation equations,
in each of said key reception steps, the one or more of the shared intermediate key generation equations have been previously provided,
the first common information generation method includes:

generating a random number group which is made up of one or more random numbers;
generating a time variable group which is made up of one or more time variables based on the random number group, the first system secret variable groups and the time variable generation equations;
generating shared intermediate keys based on the first individual intermediate key groups, the random number group and the server shared intermediate key generation equations; and
generating encrypted shared keys by encrypting the shared keys based on the shared intermediate keys,
wherein, in the first common information generation method, the key update data includes the time variable group and the encrypted shared keys, and
the first shared key obtainment method includes:

generating the shared intermediate keys based on the time variable group, the first individual intermediate key groups and the shared intermediate key generation equations; and
obtaining the shared keys by decrypting the encrypted shared keys based on the shared intermediate keys.

**35.** The key distribution method according to Claim 32,
wherein each common information generation method includes a second common information generation method,
each shared key obtainment method includes a second shared key obtainment method which is paired with the second common information generation method,
the system secret variable group set includes a second system secret key group which is made up of second system secret keys,
the individual intermediate key group set includes second individual intermediate key groups each of which is made up of one or more of the second system secret keys,
the second common information generation method includes:

generating encrypted shared keys by encrypting the shared keys based on each one or more of the second system secret keys which are included in the second system secret key groups; and
generating an encrypted shared key group which is made up of the encrypted shared keys combined with each other,
wherein, in the second common information generation method, the key update data includes the encrypted shared key group, and
the second shared key obtainment method includes:

selecting one of the encrypted shared keys which corresponds to any of the second system secret keys included in the second individual intermediate key group, from among the encrypted shared key group included in the key update data; and

obtaining the shared key by decrypting the selected encrypted shared key based on the second system secret key.

**36.** The key distribution method according to Claim 35,
wherein the individual intermediate key group set includes a second individual intermediate key group which is made up of one of the second system secret keys.

## FIG. 1

Key distribution system — 1

Key distribution center — 11

System secret variable group set SPGS

Individual information group EMMG

12 — Server

Communication channel 10

Common information ECM

Receiving device — 13a, 13b, 13n

Shared key SK

EP 1 713 196 A1

## FIG. 2

Key distribution center 11

First control unit 111

First individual information generation request REQEMM I

Second individual information generation request REQEMM II

First individual information generation unit 112

Receiving device information storage unit 113

Second individual information generation unit 114

Second system secret key group SPG II

Second individual information EMM II

First individual information EMM I

Individual information group distribution unit 116

Individual information group EMMG

First system secret variable group SPG I

System secret variable group set sending unit 115

System secret variable group set SPGS

# FIG. 3

Receiving device information storage unit `114`

First individual information generation unit `112`

First individual information generation request REQEMM I →

Term selection unit `1121`

Term information storage unit `1122`

Term key encryption unit `1123`

Term identifier PID_i
Term key PK_i

First individual information EMM I →

Second system secret variable group SPG I →

EP 1 713 196 A1

# FIG. 4

1122

**Term information storage unit**

| Unused flag FLAG_1 | Term identifier PID_1 | Term key PK_1 | First systemsecret variable group SPGI_1 |
| --- | --- | --- | --- |
| Unused flag FLAG_2 | Term identifier PID_2 | Term key PK_2 | First systemsecret variable group SPGI_2 |
| : | : | : | : |
| Unused flag FLAG_k | Term identifier PID_k | Term key PK_k | First systemsecret variable group SPGI_k |

EP 1 713 196 A1

# FIG. 5

First system secret variable group SPGI_1

First system secret variable s_1

First system secret variable t_1

First system secret variable u_1

First system secret variable v_1

First system secret variable c_1

EP 1 713 196 A1

FIG. 6

Example of first individual information EMM I

| Term identifier PID_i | Receiving device identifier AIDa | Encrypted term key ENCPKa |
| | Receiving device identifier AIDb | Encrypted term key ENCPKb |
| | . . | . . |
| | Receiving device identifier AIDn | Encrypted term key ENCPKn |

## FIG. 7

113

Receiving device information storage unit

| Receiving device identifier AIDa | Individual key IKa |
| Receiving device identifier AIDb | Individual key IKb |
| ⋮ | ⋮ |
| Receiving device identifier AIDn | Individual key IKn |

EP 1 713 196 A1

# FIG. 8

Receiving device information storage unit ⟋113

Second individual information generation unit ⟋114

Second individual information generation request REQEMM II

Second system secret key generation unit ⟋1141

Second system secret key group SPG II

Second individual intermediate key group encryption unit ⟋1142

Second individual information EMM II

Second system secret key group SPG II

## FIG. 9

Second system secret key group  SPG II

| | |
|---|---|
| Second system secret key k1 | Second system secret key k2 |
| Second system secret key k3 | Second system secret key k4 |
| Second system secret key k5 | Second system secret key k6 |

EP 1 713 196 A1

# FIG. 10

Example of second individual
intermediate key group MK II Ga

Second system secret key
k1

# FIG. 11

Second individual information EMM II

| Receiving device identifier AIDa | Encrypted second individual intermediate key group ENCMK IIGa |
|---|---|
| Receiving device identifier AIDb | Encrypted second individual intermediate key group ENCMK IIGb |
| . . | . . |
| Receiving device identifier AIDn | Encrypted second individual intermediate key group ENCMK IIGn |

EP 1 713 196 A1

# FIG. 12

System secret variable group set SPGS

| System secret variable group identifier SPGID I | First system secret variable group SPG I |
|---|---|
| System secret variable group identifier SPGID II | Second system secret variable group SPG II |

EP 1 713 196 A1

# FIG. 13

Individual information group EMMG

| Individual information identifier<br>EMMID I | First individual information<br>EMM I |
| --- | --- |

| Individual information identifier<br>EMMID II | Second individual information<br>EMM II |
| --- | --- |

## FIG. 14

```
                    ( Processing start )
                            │
                            ▼  ┌─S1101
        ┌─────────────────────────────────────┐
        │ Output first individual information  │
        │ generation request to first individual│
        │ information generation unit, and     │
        │ output second individual information │
        │ generation request to second        │
        │ individual information generation unit│
        └─────────────────────────────────────┘
                            │
                            ▼  ┌─S1102
        ┌─────────────────────────────────────┐
        │ Generate first system secret variable│
        │ group and first individual information,│
        │ output first system secret variable  │
        │ group to system secret variable group│
        │ set sending unit, and output first   │
        │ individual information to individual  │
        │ information group distribution unit   │
        └─────────────────────────────────────┘
```

```
                            ▼  ┌─S1103
        ┌─────────────────────────────────────┐
        │ Generate second system secret key group│
        │ and second individual information, output│
        │ second system secret key group to system│
        │ secret variable group set sending unit, and│
        │ output second individual information to │
        │ individual information group distribution unit│
        └─────────────────────────────────────┘
                            │
                            ▼  ┌─S1104
        ┌─────────────────────────────────────┐
        │ Generate system secret variable group set,│
        │ and send system secret variable group set│
        │ to server                            │
        └─────────────────────────────────────┘
                            │
                            ▼  ┌─S1105
        ┌─────────────────────────────────────┐
        │ Generate individual information group,│
        │ distribute individual information group│
        │ to receiving device                  │
        └─────────────────────────────────────┘
                            │
                            ▼
                    ( Processing end )
```

EP 1 713 196 A1

# FIG. 15

```
      ( Processing start )
              │
              ▼
┌──────────────────────────────────────┐
│ Obtain a set of term identifier, term key │  S11021
│ and first system secret variable group │
└──────────────────────────────────────┘
              │
              ▼
┌──────────────────────────────────────┐
│ Output first system secret variable group to │  S11022
│ system secret variable group set sending unit │
└──────────────────────────────────────┘
              │
              ▼
┌──────────────────────────────────────┐
│ Output term identifier and term key to │  S11023
│ term key encryption unit │
└──────────────────────────────────────┘
              │
              ▼
┌──────────────────────────────────────┐
│ Obtain all receiving device identifier and │  S11024
│ individual keys │
└──────────────────────────────────────┘
              │
              ▼
┌──────────────────────────────────────┐
│ Generate encrypted term key │  S11025
└──────────────────────────────────────┘
              │
              ▼
┌──────────────────────────────────────┐
│ Generate first individual information │  S11026
└──────────────────────────────────────┘
              │
              ▼
┌──────────────────────────────────────┐
│ Output first individual information to │  S11027
│ individual information group distribution unit │
└──────────────────────────────────────┘
              │
              ▼
      ( Processing end )
```

# FIG. 16

Processing start

S11031
Generate six second system secret keys

S11032
Generate second system secret key group

S11033
Output second system secret key group to system secret variable group set sending unit and second individual intermediate key encryption unit

S11034
Obtain all output device identifiers and individual keys

S11035
Select one second system secret key for each receiving device identifier

S11036
Encrypt each second individual intermediate key group based on each individual key and generate encrypted second individual intermediate key group set

S11037
Generate second individual information

S11038
Output second individual information to individual information group distribution unit

Processing end

EP 1 713 196 A1

## FIG. 17

System secret variable group set SPGS

Server ⟋12

System secret variable group set receiving unit ⟋121

System secret variable group storage unit 122

Shared key generation request REQSK

123

Shared key generation unit

Shared key SK

Common information generation unit selection unit ⟋124

Shared key SK

Shared key SK ⟋126

First common information generation unit ⟋125

Second common information generation unit

Common information ECM

Common information ECM

Common information distribution unit ⟋127

Common information ECM

EP 1 713 196 A1

## FIG. 18

EP 1 713 196 A1

122

System secret variable
storage unit

First system secret variable group
SPG I

Second system secret variable group
SPG II

# FIG. 19

System secret variable group storage unit `122`

First common information generation unit `125`

Shared key SK →

Time variable group generation unit `1251`

Random numbers z、 w、 m、 n →

Shared intermediate key obtainment unit `1252`

Common intermediate key SMK ↓

Shared key SK →

`1253` First shared key encryption unit

Encrypted shared key SMK ↓

Time variable group PRG →

`1254` Second control unit

→ First common information ECM I

FIG. 20

Time variable group PRG

Time variable
r1

Time variable
r2

Time variable
r3

Time variable
r4

EP 1 713 196 A1

## FIG. 21

First common information ECM I

| Common information identifier ECMID I | Time variable group PRG | Encrypted shared key ENCSK |

EP 1 713 196 A1

FIG. 22

EP 1 713 196 A1

## FIG. 23

Second encryption shared
key group ENCSKG

Second encrypted shared key
ENCSK1

Second encrypted shared key
ENCSK2

Second encrypted shared key
ENCSK3

Second encrypted shared key
ENCSK4

Second encrypted shared key
ENCSK5

Second encrypted shared key
ENCSK6

EP 1 713 196 A1

## FIG. 24

Second common information  ECM II

| Common information identifier ECMID II | Second encrypted shared key group ENCSKG |

# FIG. 25

Processing start

Extract first system secret variable group and second system secret key group based on system secret variable group set —S1201

Store first system secret variable group and second system secret key group into system secret variable group storage unit —S1202

Processing end

# FIG. 26

Processing start

Generate shared key — S1251

Select one common information generation unit — S1252

**Select second common information generation unit**

**Select first common information generation unit**

Generate time variable group — S1253

Output time variable group to second control unit — S1254

Output four random numbers to shared intermediate key obtainment unit — S1255

Obtain shared intermediate key — S1256

Output shared intermediate key to first shared key encryption unit — S1257

Output encrypted shared key to second control unit — S1258

Output first common information to common information distribution unit — S1259

Extract six second system secret keys from second secret key group — S1260

Generate encrypted shared key group — S1261

Output encrypted shared key group to third control unit — S1262

Output first common information to common information distribution unit — S1263

Distribute common information to receiving device — S1264

Processing end

# FIG. 27

Individual information group EMMG →

Common information ECM →

**Receiving device** ~13a

- Individual information group receiving unit — 1301
- First individual information EMM I
- Second individual information EMM II
- Individual key storage unit — 1304a
- First individual intermediate key group obtainment unit — 1302a
- Second individual intermediate key group obtainment unit — 1303a
- Individual intermediate key group storage unit — 1305a
- Common information receiving unit — 1306
- Common information ECM
- Shared key obtainment selection unit — 1307a

First individual intermediate key group MK I Ga
Time variable group PRG
Encrypted shared key ENCSK

Second individual intermediate key group MK II Ga
Encrypted shared key ENCSKG

- First shared key obtainment unit — 1308a
- Second shared key obtainment unit — 1309a
- Output unit — 1310

Shared key SK

↓ Shared key SK

EP 1 713 196 A1

FIG. 28

/ 1304a

Individual key storage unit

| Receiving device identifier AIDa | Individual key IKa | First encrypted individual intermediate key group set ENCMK I GSa |

EP 1 713 196 A1

## FIG. 29

First encrypted individual intermediate
key group set ENCMK IGSa

| Term identifier PID_1 | First encrypted individual intermediate key group ENCMK IGa_1 |
| Term identifier PID_2 | First encrypted individual intermediate key group ENCMK IGa_2 |
| . | . |
| Term identifier PID_k | First encrypted individual intermediate key group ENCMK IGa_k |

EP 1 713 196 A1

FIG. 30

First individual intermediate key group MK I Ga

First individual intermediate key
mK I 1

First individual intermediate key
mK I 2

First individual intermediate key
mK I 3

First individual intermediate key
mK I 4

EP 1 713 196 A1

FIG. 31

_1305a

Individual intermediate key group storage unit

First individual intermediate key group
MK I Ga

Second individual intermediate key group
MK II Ga

# FIG. 32

Processing start

↓ S1301

Extract first individual information
and second individual information
from individual information group

↓ S1302

Output first individual information to
first individual intermediate key group
obtainment unit, and output second
individual information to second
individual intermediate key group
obtainment unit

↓ S1303

Obtain receiving device identifier,
individual key and first encrypted
individual intermediate key group
set from individual key storage unit

↓ S1304

Obtain term identifier and encrypted term key

↓ S1305

Obtain term key

↓ S1306

Obtain first individual intermediate key group

↓ S1307

Store first individual intermediate key group
to individual intermediate key group storage unit

↓ S1308

Obtain receiving device identifier and
individual key from individual key storage unit

↓ S1309

Obtain second encrypted individual
intermediate key group

↓ S1310

Decrypt second encrypted individual
intermediate key group

↓ S1311

Store second individual intermediate key group
in individual intermediate key group storage unit

↓

Processing end

# FIG. 33

```
        ( Processing start )
                 │
                 ▼                        ┌S1351
┌─────────────────────────────────────────┐
│ Output common information to selection unit │
└─────────────────────────────────────────┘
                 │
                 ▼              ┌S1352
          ╱─────────────────╲         ECMID2
         ╱  Common information ╲─────────────────────┐
         ╲    identifier?      ╱                      │
          ╲─────────────────╱                         │
                 │ ECMID1                              │
                 ▼              ┌S1353                 │
┌─────────────────────────────────────┐               │
│ Calculate shared intermediate key    │               ▼              ┌S1356
│ based on first common information and │   ┌─────────────────────────┐
│ first individual intermediate key group│   │    Obtain shared key     │
└─────────────────────────────────────┘   └─────────────────────────┘
                 │                                     │              ┌S1357
                 ▼              ┌S1354                 ▼
┌─────────────────────────────┐           ┌─────────────────────────────┐
│       Obtain shared key       │           │ Output shared key to output unit │
└─────────────────────────────┘           └─────────────────────────────┘
                 │                                     │
                 ▼              ┌S1355                 │
┌─────────────────────────────────┐                   │
│ Output shared key to output unit  │                   │
└─────────────────────────────────┘                   │
                 │                                     ▼              ┌S1358
                 └────────────────────────▶┌─────────────────────────────┐
                                           │  Output shared key to outside  │
                                           └─────────────────────────────┘
                                                       │
                                                       ▼
                                              ( Processing end )
```

# FIG. 34

Key distribution system 2

Key distribution center 21

Third system secret variable group set SPG III S

Third individual information EMM III

Server 22

Communication channel 10

Third common information ECM3

Receiving device 23a, 23b, 23n

Shared key SK

# FIG. 35

**Key distribution center** — 21

- **211** First control unit
- Third individual information generation request REQEMM III
- **212** Third individual information generation unit
- **113** Receiving device information storage unit
- Third individual information EMM III
- **216** Third individual information distribution unit
- Third system secret variable group SPG III
- **215** Third system secret variable group set sending unit
- Third individual information EMM III
- Third system secret variable group set SPG III S

EP 1 713 196 A1

# FIG. 36

Receiving device information storage unit — 114

Third individual information generation unit — 212 Third individual information generation request REQEMM Ⅲ →

Third system secret variable group generation unit — 2121

Third system secret variable group set SPG Ⅲ S →

First intermediate key group generation unit — 2122

Third individual information EMM Ⅲ →

Third system secret variable group set SPG Ⅲ S →

EP 1 713 196 A1

# FIG. 37

**Third system secret key group set SPG Ⅲ S**

| | |
|---|---|
| First system secret variable group identifier SPG I ID 1 | First system secret variable group SPG I 1 |
| First system secret variable group identifier SPG I ID 2 | First system secret variable group SPG I 2 |
| First system secret variable group identifier SPG I ID 3 | First system secret variable group SPG I 3 |
| First system secret variable group identifier SPG I ID 4 | First system secret variable group SPG I 4 |
| First system secret variable group identifier SPG I ID 5 | First system secret variable group SPG I 5 |
| First system secret variable group identifier SPG I ID 6 | First system secret variable group SPG I 6 |

EP 1 713 196 A1

## FIG. 38

Third individual information EMM III

| Receiving device identifier AIDa | First encrypted intermediate key group ENCMK I a | First system secret variable group identifier SPG I IDa |
|---|---|---|
| Receiving device identifier AIDb | First encrypted intermediate key group ENCMK I b | First system secret variable group identifier SPG I IDb |
| ⋮ | ⋮ | ⋮ |
| Receiving device identifier AIDn | First encrypted intermediate key group ENCMK I n | First system secret variable group identifier SPG I IDn |

EP 1 713 196 A1

## FIG. 39

Processing start

_S2101

Output third individual information generation request to third individual information generation unit

_S2102

Generate third system secret variable group and third individual information, output third system secret variable group to system secret variable group set sending unit, and output third individual information to individual information group distribution unit

_S2103

Send third system secret variable group set to server

_S2104

Distribute third individual information to receiving device

Processing end

FIG. 40

```
        ( Processing start )
                │  ⌐S21021
                ▼
    ┌──────────────────────────────────┐
    │ Generate six first system secret keys │
    └──────────────────────────────────┘
                │  ⌐S21022
                ▼
    ┌──────────────────────────────────┐
    │ Generate third system secret key group, │
    │ and outputs third system secret key │
    │ group to third system secret variable │
    │ group set sending unit and first │
    │ intermediate key group generation unit │
    └──────────────────────────────────┘
                │  ⌐S21023
                ▼
    ┌──────────────────────────────────┐
    │ Obtain receiving device identifier │
    └──────────────────────────────────┘
                │     ⌐S21024
                ▼    ▼
    ┌──────────────────────────────────┐
    │ Select one first system secret key │
    └──────────────────────────────────┘
                │  ⌐S21025
                ▼
    ┌──────────────────────────────────┐
    │ Generate two individualized variables │
    └──────────────────────────────────┘
                │  ⌐S21026
                ▼
    ┌──────────────────────────────────┐
    │ Generate first individual intermediate key group │
    └──────────────────────────────────┘
                │  ⌐S21027
                ▼
    ┌──────────────────────────────────┐
    │ Generate first encrypted individual │
    │ intermediate key group │
    └──────────────────────────────────┘
```

```
                      ◇ All first
                        encrypted individual       NO
                        intermediate key groups ──────►
                        generated?
                            │ YES
                            ▼        ⌐S21028
        ┌──────────────────────────────────────┐
        │ Generate third individual information │
        │ and output third individual information │
        │ to individual information group │
        │ distribution unit │
        └──────────────────────────────────────┘
                            │
                            ▼
                    ( Processing end )
```

EP 1 713 196 A1

FIG. 41

## FIG. 42

222

System secret variable group storage unit

Third system secret variable group
SPG III

## FIG. 43

Third common information ECM III

| First system secret variable group identifier SPG I ID 1 | Time variable group PRG1 | Encrypted shared key ENCSK 1 |
|---|---|---|
| First system secret variable group identifier SPG I ID 2 | Time variable group PRG2 | Encrypted shared key ENCSK 2 |
| First system secret variable group identifier SPG I ID 3 | Time variable group PRG3 | Encrypted shared key ENCSK 3 |
| First system secret variable group identifier SPG I ID 4 | Time variable group PRG4 | Encrypted shared key ENCSK 4 |
| First system secret variable group identifier SPG I ID 5 | Time variable group PRG5 | Encrypted shared key ENCSK 5 |
| First system secret variable group identifier SPG I ID 6 | Time variable group PRG6 | Encrypted shared key ENCSK 6 |

# FIG. 44

Processing start

S2201

Store third system variable group and third system secret key group in system secret variable group storage unit

Processing end

## FIG. 45

Processing start

S2251 — Generate shared key

S2252 — Obtain third system secret variable group

S2253 — Generate four random numbers

S2254 — Generate four time variables

S2255 — Generate time variable group

S2256 — Generate shared intermediate key

S2257 — Generate encrypted shared key

All encrypted shared keys and time variable group generated? — NO

YES

S2258 — Generate third common information and output common information distribution unit

S2259 — Output third common information to receiving device

Processing end

EP 1 713 196 A1

# FIG. 46

Receiving device 23a

Third individual information EMM III → Individual information receiving unit 2301

Third individual information EMM III

2304a Individual key storage unit

2302a Third individual intermediate key group obtainment unit

2305a Individual intermediate key group storage unit

Common information ECM → Common information receiving unit 2306a

First individual intermediate key group MK I Ga
Time variable group PRG
Encrypted shared key ENCSK

Third shared key obtainment unit 2308a

1310 Output unit

Shared key SK → Shared key SK

EP 1 713 196 A1

## FIG. 47

2304a

Individual key storage unit

| Receiving device identifier AIDa | Individual key IKa |
|---|---|

## FIG. 48

2305a

Individual intermediate
key group storage unit

| First individual intermediate key group MK I Ga | First system secret variable group identifier SPG I IDi |

# FIG. 49

```
        ┌─────────────────────┐
        │  Processing start   │
        └─────────────────────┘
                   │
                   ▼                          ╱─S2301
┌──────────────────────────────────────────┐
│ Output third individual information to     │
│ third individual intermediate key group    │
│ obtainment unit                            │
└──────────────────────────────────────────┘
                   │
                   ▼                          ╱─S2302
┌──────────────────────────────────────────┐
│ Obtain receiving device identifier and      │
│ individual key from individual key          │
│ storage unit                                │
└──────────────────────────────────────────┘
                   │
                   ▼                          ╱─S2303
┌──────────────────────────────────────────┐
│ Decrypt encrypted intermediate key          │
│ based on individual key                     │
└──────────────────────────────────────────┘
                   │
                   ▼                          ╱─S2304
┌──────────────────────────────────────────┐
│ Store first individual intermediate key     │
│ group and first system secret variable      │
│ group identifier                            │
└──────────────────────────────────────────┘
                   │
                   ▼
        ┌─────────────────────┐
        │   Processing end    │
        └─────────────────────┘
```

## FIG. 50

```
        ( Processing start )
                 │
                 ▼           S2351
┌─────────────────────────────────┐
│ Obtain first individual intermediate key │
│ group and first system secret variable │
│ group identifier                │
└─────────────────────────────────┘
                 │
                 ▼           S2352
┌─────────────────────────────────┐
│ Extract time variable group and  │
│ encrypted shared key             │
└─────────────────────────────────┘
                 │
                 ▼           S2353
┌─────────────────────────────────┐
│ Output first individual intermediate key │
│ group, time variable group and   │
│ encrypted shared key to third shared │
│ key obtainment unit              │
└─────────────────────────────────┘
                 │
                 ▼           S2354
┌─────────────────────────────────┐
│ Extract time variable            │
└─────────────────────────────────┘
                 │
                 ▼           S2355
┌─────────────────────────────────┐
│ Extract first individual intermediate key │
└─────────────────────────────────┘


                          S2356
┌─────────────────────────────────┐
│ Generate shared intermediate key │
└─────────────────────────────────┘
                 │
                 ▼           S2357
┌─────────────────────────────────┐
│ Obtain shared key                │
└─────────────────────────────────┘
                 │
                 ▼           S2358
┌─────────────────────────────────┐
│ Output shared key to output unit │
└─────────────────────────────────┘
                 │
                 ▼           S2359
┌─────────────────────────────────┐
│ Output shared key to outside     │
└─────────────────────────────────┘
                 │
                 ▼
        ( Processing end )
```

## FIG. 51

# FIG. 52

System secret variable group storage unit — 122

First common information generation unit — 125

Shared key SK

1251
Time variable group generation unit

Time variable PRG →

1252
Shared intermediate key obtainment unit

Shared intermediate key SMK

Shared key SK →

1253
First shared key encryption unit

Encrypted shared key ENCSK

1254
Time variable group PRG →

Second control unit

First common information ECM I →

EP 1 713 196 A1

## FIG. 53

Conventional key distribution system

Key distribution center — 91

Shared intermediate key SMK

Encrypted shared intermediate key group ENCSMKG

92 — Server

Communication channel 90

Encrypted shared key ENCSK

Receiving device

93n
93b
93a

Shared key SK

EP 1 713 196 A1

**INTERNATIONAL SEARCH REPORT**

| International application No. |
|---|
| PCT/JP2005/001359 |

A. CLASSIFICATION OF SUBJECT MATTER
Int.Cl⁷ H04L9/08

According to International Patent Classification (IPC) or to both national classification and IPC

B. FIELDS SEARCHED

Minimum documentation searched (classification system followed by classification symbols)
Int.Cl⁷ H04L9/08

Documentation searched other than minimum documentation to the extent that such documents are included in the fields searched
Jitsuyo Shinan Koho          1922-1996    Toroku Jitsuyo Shinan Koho    1994-2005
Kokai Jitsuyo Shinan Koho    1971-2005    Jitsuyo Shinan Toroku Koho    1996-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-313055 A  (Hitachi, Ltd.), 09 November, 1999 (09.11.99), Full text; Fig. 6 (Family: none) | 1-36 |
| Y | JP 3-239033 A  (Sony Corp.), 24 October, 1991 (24.10.91), Page 5, lower left column, lines 7 to 15; Fig. 1 (Family: none) | 1-36 |
| Y | JP 2-291740 A  (Fujitsu Ltd.), 03 December, 1990 (03.12.90), Page 3, upper right column, line 6 to page 4, upper right column, line 20; Fig. 1 (Family: none) | 6-12,22 |

☐ Further documents are listed in the continuation of Box C.       ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 March, 2005 (11.03.05) | 29 March, 2005 (29.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- The Mechanism of Digital Broadcasting System. Ohmsha-Press
- **SHINICHI IKENO ; KENJI KOYAMA.** Gendai angouriron
- THE ART OF COMPUTER PROGRAMMING. SEMINUMERICAL ALGORITHMS. vol. 2